# EUROPEAN PATENT APPLICATION

(11) **EP 4 668 968 A1**
(43) Date of publication of application: **24.12.2025**
(21) Application number: 24756292.9
(22) Date of filing: 08.02.2024
(51) Int. Cl.: H04W 72/21

(54) **UPLINK TRANSMISSION INDICATION METHOD, DEVICE AND APPARATUS, AND STORAGE MEDIUM**

(30) Priority: 17.02.2023 CN 202310146786
(71) Applicant: Datang Mobile Communications Equipment Co., Ltd., Beijing 100085 (CN)
(72) Inventor: LUO, Chen, Beijing 100085 (CN); WANG, Jiaqing, Beijing 100085 (CN); LI, Yaomin, Beijing 100085 (CN)
(74) Representative: Studio Torta S.p.A.
(86) International application number: PCT/CN2024/076913
(87) International publication number: WO 2024/169920

(57) **Abstract**

Embodiments of the present disclosure provide an uplink transmission indication method, device and apparatus, and a storage medium. The method comprises: a terminal sends first information to a network device, the first information being used for indicating the occupation condition and/or the non-occupation condition of at least one transmission occasion (TO) unit.

## Description

### CROSS-REFERENCES TO RELATED APPLICATIONS

The present application claims priority to Chinese patent application No. 202310146786.7 filed on February 17, 2023, entitled "Uplink Transmission Indication Method, Device and Apparatus, and Storage Medium", which is hereby incorporated by reference in its entirety.

### FIELD

The present application relates to the field of radio communication, and in particular, to methods and apparatuses for uplink transmission indication, devices, and a storage medium.

### BACKGROUND

An uplink configuration grant (CG) transmission may save a sending delay of uplink scheduling request and buffer status report (BSR), and is suitable for a periodic uplink extended reality (XR) service transmission.

In the related art, a CG transmission is configured, in each period, with a fixed transmission occasion and a fixed transmission resource for physical uplink shared channel (PUSCH) transmission, which may cause a problem of insufficient transmission resources or waste of transmission resources for an XR service with variable data packet sizes.

### BRIEF SUMMARY

In response to the problems in the related art, embodiments of the present application provide methods and apparatuses for uplink transmission indication, devices, and a storage medium.

An embodiment of the present application provides a method for uplink transmission indication, performed by a terminal, including:
sending first information to a network device, where the first information is used to indicate that at least one transmission occasion (TO) unit is used and/or not used.

In some embodiments, the first information includes one or more of:
first indication information, where the first indication information is used to indicate that each TO unit in at least one configured grant (CG) period is used and/or not used;
second indication information, where the second indication information is used to indicate that each TO unit from a first time to an end of a first configured grant (CG) period is used and/or not used;
third indication information, where the third indication information is used to indicate that a first number of TO units after a first time are used and/or not used;
fourth indication information, where the fourth indication information is used to indicate that a time unit in at least one TO unit is used and/or not used;
fifth indication information, where the fifth indication information is used to indicate whether all TO units in a specified duration after a first time are not occupied;
sixth indication information, where the sixth indication information is used to indicate whether all TO units in a specified duration after a first time are occupied;
seventh indication information, where the seventh indication information is used to indicate that a first number of TO units after a first time are not occupied;
eighth indication information, where the eighth indication information is used to indicate that a first number of TO units after a first time are occupied;
ninth indication information, where the ninth indication information is used to indicate at least one TO unit for data reception of the network device;
an index value, offset value or identifier code of a starting TO unit in at least one TO unit, and/or an index value, offset value or identifier code of an ending TO unit in at least one TO unit; or
a number of TO units.

In some embodiments, the TO unit includes at least one type of:
a TO group or a TO or a symbol set in a TO;
a TO group and a part or all of TOs included in the TO group;
a TO group and a symbol set in at least one TO in the TO group;
a TO group, a part or all of TOs included in the TO group, and a symbol set in at least one TO in the part or all of the TOs; or
a TO and a symbol set in the TO.

In some embodiments, sending the first information to the network device includes:
sending the first information to the network device at one or more of following time domain positions:
a starting uplink time unit position of a configured grant (CG) period;
an ending uplink time unit position of a configured grant (CG) period;
a first uplink time unit position of a configured grant (CG) period, where the first uplink time unit position is an uplink time unit position within the CG period predefined by a protocol or indicated through the network device, and the uplink time unit position is an uplink slot position or an uplink symbol position;
a starting uplink time unit position of a first duration;
an ending uplink time unit position of a first duration;
a second uplink time unit position of a first duration, where the second uplink time unit position is an uplink time unit position within the first duration predefined by a protocol or indicated through the network device; or
a time unit position of all or a part of resources configured for a second signaling, where the second signaling carries the first information.

In some embodiments, the specified duration includes one or more types of:
M times or 1/M of a CG period, where M is an integer greater than or equal to 1;
K times or 1/K of a first period, where the first period is a period of an uplink control signaling where the first information is located, where K is an integer greater than or equal to 1;
L times or 1/L of an interval between TO groups, where L is an integer greater than or equal to 1;
a length of an interval configured through the network device;
a first number of TOs; or
a duration from a first time to an end of a first CG period.

In some embodiments, the first time includes at least one of:
a transmission time of the first information;
an valid time of the first information; or
a time when the terminal receives hybrid automatic repeat request acknowledgement (HARQ-ACK) information corresponding to the first information fed back from the network device.

In some embodiments, sending the first information to the network device includes:
sending the first information, carried by a second signaling, to the network device, where the second signaling includes an uplink control signaling and/or a medium access control (MAC) signaling.

In some embodiments, the uplink control signaling includes one or more of:
an uplink control signaling carried on a configured grant (CG) enhancement dedicated physical uplink control channel (PUCCH); or
an uplink control signaling carried on a configured grant (CG) physical uplink shared channel (PUSCH).

In some embodiments, the method further includes:
receiving first resource information sent from the network device; and
determining, based on the first resource information, at least one of a time domain resource, a frequency domain resource, or a spatial domain resource of a first signaling,
where the first signaling includes at least one of the uplink control signaling, the MAC signaling, or hybrid automatic repeat request acknowledgement (HARQ-ACK) information corresponding to the first information.

In some embodiments, the first resource information includes one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

In some embodiments, the resource information of the PUCCH where the first information is located includes one of more of:
a PUCCH resource set identifier or a PUCCH resource list index;
a starting resource block (RB) of a frequency domain resource of the PUCCH;
at least one of a number of resource blocks (RBs), an RB set, or an RB set index included in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

In some embodiments, the information of the resource where the first information is located includes one or more of:
a starting resource block (RB) of a frequency domain resource where the first information is located;
at least one of a number of resource blocks (RBs), an RB set, or an RB set index included in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

In some embodiments, the resource information of the MAC signaling where the first information is located includes one or more of:
a size of an information field for the first information in the MAC signaling; or
a TO unit corresponding to each bit or each byte in an information field for the first information in the MAC signaling.

In some embodiments, the resource information of the HARQ-ACK information corresponding to the first information includes one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

In some embodiments, after sending the first information to the network device, the method further includes:
after a second time, not transmitting data on an unoccupied TO unit indicated by the first information; and/or
before a second time, sending second information to the network device, where the second information is used to indicate that at least one TO unit is used and/or not used;
where the second time includes at least one of:
   a transmission time of the first information;
   an valid time of the first information;
   a time when the terminal receives hybrid automatic repeat request acknowledgement (HARQ-ACK) information corresponding to the first information fed back from the network device; or
   a time when a timer used for indicating an valid time of the first information expires.

In some embodiments, the valid time of the first information is associated with a capability of the terminal.

In some embodiments, the timer used for indicating the valid time of the first information is configured by a higher layer signaling or predefined by a protocol.

In some embodiments, any CG period includes N TOs, and the N TOs are used to send at least one transport block (TB), where N is an integer greater than or equal to 1.

In some embodiments, the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

In some embodiments, after sending the first information to the network device, the method further includes:
receiving hybrid automatic repeat request acknowledgement (HARQ-ACK) information, sent from the network device, corresponding to the first information.

In some embodiments, receiving the HARQ-ACK information, sent from the network device, corresponding to the first information, includes:
before a timer associated with the HARQ-ACK information corresponding to the first information expires, receiving the HARQ-ACK information, sent from the network device, corresponding to the first information.

An embodiment of the present application further provides a method for uplink transmission indication, performed by a network device, including:
receiving first information sent from a terminal; and
determining, based on the first information, that at least one transmission occasion (TO) unit is used and/or not used.

In some embodiments, the first information includes one or more of:
first indication information, where the first indication information is used to indicate that each TO unit in at least one configured grant (CG) period is used and/or not used;
second indication information, where the second indication information is used to indicate that each TO unit from a first time to an end of a first configured grant (CG) period is used and/or not used;
third indication information, where the third indication information is used to indicate that a first number of TO units after a first time are used and/or not used;
fourth indication information, where the fourth indication information is used to indicate that a time unit in at least one TO unit is used and/or not used;
fifth indication information, where the fifth indication information is used to indicate whether all TO units in a specified duration after a first time are not occupied;
sixth indication information, where the sixth indication information is used to indicate whether all TO units in a specified duration after a first time are occupied;
seventh indication information, where the seventh indication information is used to indicate that a first number of TO units after a first time are not occupied;
eighth indication information, where the eighth indication information is used to indicate that a first number of TO units after a first time are occupied;
ninth indication information, where the ninth indication information is used to indicate at least one TO unit for data reception of the network device;
an index value, offset value or identifier code of a starting TO unit in at least one TO unit, and/or an index value, offset value or identifier code of an ending TO unit in at least one TO unit; or
a number of TO units.

In some embodiments, the TO unit includes at least one type of:
a TO group or a TO or a symbol set in a TO;
a TO group and a part or all of TOs included in the TO group;
a TO group and a symbol set in at least one TO in the TO group;
a TO group, a part or all of TOs included in the TO group, and a symbol set in at least one TO in the part or all of the TOs; or
a TO and a symbol set in the TO.

In some embodiments, receiving the first information sent from the terminal includes:
receiving the first information at one or more of following time domain positions:
a starting uplink time unit position of a configured grant (CG) period;
an ending uplink time unit position of a configured grant (CG) period;
a first uplink time unit position of a configured grant (CG) period, where the first uplink time unit position is an uplink time unit position within the CG period predefined by a protocol or indicated through the network device, and the uplink time unit position is an uplink slot position or an uplink symbol position;
a starting uplink time unit position of a first duration;
an ending uplink time unit position of a first duration;
a second uplink time unit position of a first duration, where the second uplink time unit position is an uplink time unit position within the first duration predefined by a protocol or indicated through the network device; or
a time unit position of all or a part of resources configured for a second signaling, where the second signaling carries the first information.

In some embodiments, the specified duration includes one or more types of:
M times or 1/M of a CG period, where M is an integer greater than or equal to 1;
K times or 1/K of a first period, where the first period is a period of an uplink control signaling where the first information is located, where K is an integer greater than or equal to 1;
L times or 1/L of an interval between TO groups, where L is an integer greater than or equal to 1;
a length of an interval configured through the network device;
a first number of TOs; or
a duration from a first time to an end of a first CG period.

In some embodiments, the first time includes at least one of:
a transmission time of the first information;
an valid time of the first information; or
a time when the terminal receives hybrid automatic repeat request acknowledgement (HARQ-ACK) information corresponding to the first information fed back from the network device.

In some embodiments, receiving the first information sent from the terminal includes:
receiving, through a second signaling, the first information sent from the terminal, where the second signaling includes an uplink control signaling and/or a medium access control (MAC) signaling.

In some embodiments, the uplink control signaling includes one or more of:
an uplink control signaling carried on a configured grant (CG) enhancement dedicated physical uplink control channel (PUCCH); or
an uplink control signaling carried on a configured grant (CG) physical uplink shared channel (PUSCH).

In some embodiments, the method further includes:
sending first resource information to the terminal, where the first resource information is used to configure at least one of a time domain resource, a frequency domain resource, or a spatial domain resource of a first signaling,
where the first signaling includes at least one of the uplink control signaling, the MAC signaling, or hybrid automatic repeat request acknowledgement (HARQ-ACK) information corresponding to the first information.

In some embodiments, the first resource information includes one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

In some embodiments, the resource information of the PUCCH where the first information is located includes one of more of:
a PUCCH resource set identifier or a PUCCH resource list index;
a starting resource block (RB) of a frequency domain resource of the PUCCH;
at least one of a number of resource blocks (RBs), an RB set, or an RB set index included in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

In some embodiments, the information of the resource where the first information is located includes one or more of:
a starting resource block (RB) of a frequency domain resource where the first information is located;
at least one of a number of resource blocks (RBs), an RB set, or an RB set index included in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

In some embodiments, the resource information of the MAC signaling where the first information is located includes one or more of:
a size of an information field for the first information in the MAC signaling; or
a TO unit corresponding to each bit or each byte in an information field for the first information in the MAC signaling.

In some embodiments, the resource information of the HARQ-ACK information corresponding to the first information includes one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

In some embodiments, the method further includes:
after a second time, receiving or scheduling, on an unoccupied TO unit indicated by the first information, uplink services of other terminals except the terminal; and/or
before a second time, receiving or scheduling, not on an unoccupied TO unit indicated by the first information, uplink services of other terminals except the terminal;
where the second time includes at least one of:
   a transmission time of the first information;
   an valid time of the first information;
   a time when the terminal receives hybrid automatic repeat request acknowledgement (HARQ-ACK) information corresponding to the first information fed back from the network device; or
   a time when a timer used for indicating an valid time of the first information expires.

In some embodiments, the method further includes:
determining the valid time of the first information based on a capability of the terminal.

In some embodiments, the timer used for indicating the valid time of the first information is configured by a higher layer signaling or predefined by a protocol.

In some embodiments, any CG period includes N TOs, and the N TOs are used to send at least one transport block (TB), where N is an integer greater than or equal to 1.

In some embodiments, the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

In some embodiments, after receiving the first information sent from the terminal, the method further includes:
sending hybrid automatic repeat request acknowledgement (HARQ-ACK) information corresponding to the first information to the terminal.

In some embodiments, sending the HARQ-ACK information corresponding to the first information to the terminal includes:
before a timer associated with the HARQ-ACK information corresponding to the first information expires, sending the HARQ-ACK information corresponding to the first information to the terminal.

An embodiment of the present application further provides a terminal, including a memory, a transceiver and a processor,
where the memory is used for storing a computer program, the transceiver is used for receiving and sending data under control of the processor, and the processor is used for reading the computer program in the memory and performing following operations:
sending first information to a network device, where the first information is used to indicate that at least one transmission occasion (TO) unit is used and/or not used.

In some embodiments, the first information includes one or more of:
first indication information, where the first indication information is used to indicate that each TO unit in at least one configured grant (CG) period is used and/or not used;
second indication information, where the second indication information is used to indicate that each TO unit from a first time to an end of a first configured grant (CG) period is used and/or not used;
third indication information, where the third indication information is used to indicate that a first number of TO units after a first time are used and/or not used;
fourth indication information, where the fourth indication information is used to indicate that a time unit in at least one TO unit is used and/or not used;
fifth indication information, where the fifth indication information is used to indicate whether all TO units in a specified duration after a first time are not occupied;
sixth indication information, where the sixth indication information is used to indicate whether all TO units in a specified duration after a first time are occupied;
seventh indication information, where the seventh indication information is used to indicate that a first number of TO units after a first time are not occupied;
eighth indication information, where the eighth indication information is used to indicate that a first number of TO units after a first time are occupied;
ninth indication information, where the ninth indication information is used to indicate at least one TO unit for data reception of the network device;
an index value, offset value or identifier code of a starting TO unit in at least one TO unit, and/or an index value, offset value or identifier code of an ending TO unit in at least one TO unit; or
a number of TO units.

In some embodiments, the TO unit includes at least one type of:
a TO group or a TO or a symbol set in a TO;
a TO group and a part or all of TOs included in the TO group;
a TO group and a symbol set in at least one TO in the TO group;
a TO group, a part or all of TOs included in the TO group, and a symbol set in at least one TO in the part or all of the TOs; or
a TO and a symbol set in the TO.

In some embodiments, sending the first information to the network device includes:
sending the first information to the network device at one or more of following time domain positions:
a starting uplink time unit position of a configured grant (CG) period;
an ending uplink time unit position of a configured grant (CG) period;
a first uplink time unit position of a configured grant (CG) period, where the first uplink time unit position is an uplink time unit position within the CG period predefined by a protocol or indicated through the network device, and the uplink time unit position is an uplink slot position or an uplink symbol position;
a starting uplink time unit position of a first duration;
an ending uplink time unit position of a first duration;
a second uplink time unit position of a first duration, where the second uplink time unit position is an uplink time unit position within the first duration predefined by a protocol or indicated through the network device; or
a time unit position of all or a part of resources configured for a second signaling, where the second signaling carries the first information.

In some embodiments, the specified duration includes one or more types of:
M times or 1/M of a CG period, where M is an integer greater than or equal to 1;
K times or 1/K of a first period, where the first period is a period of an uplink control signaling where the first information is located, where K is an integer greater than or equal to 1;
L times or 1/L of an interval between TO groups, where L is an integer greater than or equal to 1;
a length of an interval configured through the network device;
a first number of TOs; or
a duration from a first time to an end of a first CG period.

In some embodiments, the first time includes at least one of:
a transmission time of the first information;
an valid time of the first information; or
a time when the terminal receives hybrid automatic repeat request acknowledgement (HARQ-ACK) information corresponding to the first information fed back from the network device.

In some embodiments, sending the first information to the network device includes:
sending the first information, carried by a second signaling, to the network device, where the second signaling includes an uplink control signaling and/or a medium access control (MAC) signaling.

In some embodiments, the uplink control signaling includes one or more of:
an uplink control signaling carried on a configured grant (CG) enhancement dedicated physical uplink control channel (PUCCH); or
an uplink control signaling carried on a configured grant (CG) physical uplink shared channel (PUSCH).

In some embodiments, the operations further include:
receiving first resource information sent from the network device; and
determining, based on the first resource information, at least one of a time domain resource, a frequency domain resource, or a spatial domain resource of a first signaling,
where the first signaling includes at least one of the uplink control signaling, the MAC signaling, or hybrid automatic repeat request acknowledgement (HARQ-ACK) information corresponding to the first information.

In some embodiments, the first resource information includes one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

In some embodiments, the resource information of the PUCCH where the first information is located includes one of more of:
a PUCCH resource set identifier or a PUCCH resource list index;
a starting resource block (RB) of a frequency domain resource of the PUCCH;
at least one of a number of resource blocks (RBs), an RB set, or an RB set index included in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

In some embodiments, the information of the resource where the first information is located includes one or more of:
a starting resource block (RB) of a frequency domain resource where the first information is located;
at least one of a number of resource blocks (RBs), an RB set, or an RB set index included in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

In some embodiments, the resource information of the MAC signaling where the first information is located includes one or more of:
a size of an information field for the first information in the MAC signaling; or
a TO unit corresponding to each bit or each byte in an information field for the first information in the MAC signaling.

In some embodiments, the resource information of the HARQ-ACK information corresponding to the first information includes one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

In some embodiments, after sending the first information to the network device, the operations further include:
after a second time, not transmitting data on an unoccupied TO unit indicated by the first information; and/or
before a second time, sending second information to the network device, where the second information is used to indicate that at least one TO unit is used and/or not used;
where the second time includes at least one of:
   a transmission time of the first information;
   an valid time of the first information;
   a time when the terminal receives hybrid automatic repeat request acknowledgement (HARQ-ACK) information corresponding to the first information fed back from the network device; or
   a time when a timer used for indicating an valid time of the first information expires.

In some embodiments, the valid time of the first information is associated with a capability of the terminal.

In some embodiments, the timer used for indicating the valid time of the first information is configured by a higher layer signaling or predefined by a protocol.

In some embodiments, any CG period includes N TOs, and the N TOs are used to send at least one transport block (TB), where N is an integer greater than or equal to 1.

In some embodiments, the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

In some embodiments, after sending the first information to the network device, the operations further include:
receiving hybrid automatic repeat request acknowledgement (HARQ-ACK) information, sent from the network device, corresponding to the first information.

In some embodiments, receiving the HARQ-ACK information, sent from the network device, corresponding to the first information, includes:
before a timer associated with the HARQ-ACK information corresponding to the first information expires, receiving the HARQ-ACK information, sent from the network device, corresponding to the first information.

An embodiment of the present application further provides a network device, including a memory, a transceiver and a processor,
where the memory is used for storing a computer program, the transceiver is used for receiving and sending data under control of the processor, and the processor is used for reading the computer program in the memory and performing following operations:
receiving first information sent from a terminal; and
determining, based on the first information, that at least one transmission occasion (TO) unit is used and/or not used.

In some embodiments, the first information includes one or more of:
first indication information, where the first indication information is used to indicate that each TO unit in at least one configured grant (CG) period is used and/or not used;
second indication information, where the second indication information is used to indicate that each TO unit from a first time to an end of a first configured grant (CG) period is used and/or not used;
third indication information, where the third indication information is used to indicate that a first number of TO units after a first time are used and/or not used;
fourth indication information, where the fourth indication information is used to indicate that a time unit in at least one TO unit is used and/or not used;
fifth indication information, where the fifth indication information is used to indicate whether all TO units in a specified duration after a first time are not occupied;
sixth indication information, where the sixth indication information is used to indicate whether all TO units in a specified duration after a first time are occupied;
seventh indication information, where the seventh indication information is used to indicate that a first number of TO units after a first time are not occupied;
eighth indication information, where the eighth indication information is used to indicate that a first number of TO units after a first time are occupied;
ninth indication information, where the ninth indication information is used to indicate at least one TO unit for data reception of the network device;
an index value, offset value or identifier code of a starting TO unit in at least one TO unit, and/or an index value, offset value or identifier code of an ending TO unit in at least one TO unit; or
a number of TO units.

In some embodiments, the TO unit includes at least one type of:
a TO group or a TO or a symbol set in a TO;
a TO group and a part or all of TOs included in the TO group;
a TO group and a symbol set in at least one TO in the TO group;
a TO group, a part or all of TOs included in the TO group, and a symbol set in at least one TO in the part or all of the TOs; or
a TO and a symbol set in the TO.

In some embodiments, receiving the first information sent from the terminal includes:
receiving the first information at one or more of following time domain positions:
a starting uplink time unit position of a configured grant (CG) period;
an ending uplink time unit position of a configured grant (CG) period;
a first uplink time unit position of a configured grant (CG) period, where the first uplink time unit position is an uplink time unit position within the CG period predefined by a protocol or indicated through the network device, and the uplink time unit position is an uplink slot position or an uplink symbol position;
a starting uplink time unit position of a first duration;
an ending uplink time unit position of a first duration;
a second uplink time unit position of a first duration, where the second uplink time unit position is an uplink time unit position within the first duration predefined by a protocol or indicated through the network device; or
a time unit position of all or a part of resources configured for a second signaling, where the second signaling carries the first information.

In some embodiments, the specified duration includes one or more types of:
M times or 1/M of a CG period, where M is an integer greater than or equal to 1;
K times or 1/K of a first period, where the first period is a period of an uplink control signaling where the first information is located, where K is an integer greater than or equal to 1;
L times or 1/L of an interval between TO groups, where L is an integer greater than or equal to 1;
a length of an interval configured through the network device;
a first number of TOs; or
a duration from a first time to an end of a first CG period.

In some embodiments, the first time includes at least one of:
a transmission time of the first information;
an valid time of the first information; or
a time when the terminal receives hybrid automatic repeat request acknowledgement (HARQ-ACK) information corresponding to the first information fed back from the network device.

In some embodiments, receiving the first information sent from the terminal includes:
receiving, through a second signaling, the first information sent from the terminal, where the second signaling includes an uplink control signaling and/or a medium access control (MAC) signaling.

In some embodiments, the uplink control signaling includes one or more of:
an uplink control signaling carried on a configured grant (CG) enhancement dedicated physical uplink control channel (PUCCH); or
an uplink control signaling carried on a configured grant (CG) physical uplink shared channel (PUSCH).

In some embodiments, the operations further include:
sending first resource information to the terminal, where the first resource information is used to configure at least one of a time domain resource, a frequency domain resource, or a spatial domain resource of a first signaling,
where the first signaling includes at least one of the uplink control signaling, the MAC signaling, or hybrid automatic repeat request acknowledgement (HARQ-ACK) information corresponding to the first information.

In some embodiments, the first resource information includes one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

In some embodiments, the resource information of the PUCCH where the first information is located includes one of more of:
a PUCCH resource set identifier or a PUCCH resource list index;
a starting resource block (RB) of a frequency domain resource of the PUCCH;
at least one of a number of resource blocks (RBs), an RB set, or an RB set index included in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

In some embodiments, the information of the resource where the first information is located includes one or more of:
a starting resource block (RB) of a frequency domain resource where the first information is located;
at least one of a number of resource blocks (RBs), an RB set, or an RB set index included in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

In some embodiments, the resource information of the MAC signaling where the first information is located includes one or more of:
a size of an information field for the first information in the MAC signaling; or
a TO unit corresponding to each bit or each byte in an information field for the first information in the MAC signaling.

In some embodiments, the resource information of the HARQ-ACK information corresponding to the first information includes one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

In some embodiments, the operations further include:
after a second time, receiving or scheduling, on an unoccupied TO unit indicated by the first information, uplink services of other terminals except the terminal; and/or
before a second time, receiving or scheduling, not on an unoccupied TO unit indicated by the first information, uplink services of other terminals except the terminal;
where the second time includes at least one of:
   a transmission time of the first information;
   an valid time of the first information;
   a time when the terminal receives hybrid automatic repeat request acknowledgement (HARQ-ACK) information corresponding to the first information fed back from the network device; or
   a time when a timer used for indicating an valid time of the first information expires.

In some embodiments, the operations further include:
determining the valid time of the first information based on a capability of the terminal.

In some embodiments, the timer used for indicating the valid time of the first information is configured by a higher layer signaling or predefined by a protocol.

In some embodiments, any CG period includes N TOs, and the N TOs are used to send at least one transport block (TB), where N is an integer greater than or equal to 1.

In some embodiments, the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

In some embodiments, after receiving the first information sent from the terminal, the operations further include:
sending hybrid automatic repeat request acknowledgement (HARQ-ACK) information corresponding to the first information to the terminal.

In some embodiments, sending the HARQ-ACK information corresponding to the first information to the terminal includes:
before a timer associated with the HARQ-ACK information corresponding to the first information expires, sending the HARQ-ACK information corresponding to the first information to the terminal.

An embodiment of the present application further provides an apparatus for uplink transmission indication, including:
a first sending unit, used for sending first information to a network device, where the first information is used to indicate that at least one transmission occasion (TO) unit is used and/or not used.

An embodiment of the present application further provides an apparatus for uplink transmission indication, including:
a second receiving unit, used for receiving first information sent from a terminal; and
a second determining unit, used for determining, based on the first information, that at least one transmission occasion (TO) unit is used and/or not used.

An embodiment of the present application further provides a computer readable storage medium storing a computer program, where the computer program is used for causing a computer to perform any of the methods described above.

An embodiment of the present application further provides a communication device storing a computer program, where the computer program is used for causing the communication device to perform any of the methods described above.

An embodiment of the present application further provides a processor readable storage medium storing a computer program, where the computer program is used for causing a processor to perform any of the methods described above.

An embodiment of the present application further provides a chip product storing a computer program, where the computer program is used for causing the chip product to perform any of the methods described above.

In the methods and apparatuses for uplink transmission indication, devices, and a storage medium, the terminal sends the first information to the network device, indicating that at least one transmission occasion (TO) unit is used or not used to the network device, and the network device may allocate the unoccupied TO units more reasonably, which improves utilization of CG transmission resources and avoids resource waste.

### BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.
FIG. 1 is a first schematic flowchart of a method for uplink transmission indication according to an embodiment of the present application;
FIG. 2 is a second schematic flowchart of a method for uplink transmission indication according to an embodiment of the present application;
FIG. 3 is a schematic diagram of configuring multiple transmission occasions (TOs) within a configured grant (CG) period according to an embodiment of the present application;
FIG. 4 is a first schematic diagram of indication information indicating an occupancy situation of a TO according to an embodiment of the present application;
FIG. 5 is a second schematic diagram of indication information indicating an occupancy situation of a TO according to an embodiment of the present application;
FIG. 6 is a third schematic diagram of indication information indicating an occupancy situation of a TO according to an embodiment of the present application;
FIG. 7 is a fourth schematic diagram of indication information indicating an occupancy situation of a TO according to an embodiment of the present application;
FIG. 8 is a fifth schematic diagram of indication information indicating an occupancy situation of a TO according to an embodiment of the present application;
FIG. 9 is a schematic structural diagram of a terminal according to an embodiment of the present application;
FIG. 10 is a schematic structural diagram of a network device according to an embodiment of the present application;
FIG. 11 is a first schematic structural diagram of an apparatus for uplink transmission indication according to an embodiment of the present application; and
FIG. 12 is a second schematic structural diagram of an apparatus for uplink transmission indication according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In order to facilitate a clearer understanding for the embodiments of the present application, some contents related to the embodiments of the present application are first introduced.

There are two types of uplink (configured grant) CG transmission:
a. Type 1 CG: transmission information related to CG is configured through a radio resource control (RRC) signaling; and
b. Type 2 CG: transmission information related to CG is indicated through a physical downlink control channel (PDCCH), including CG activation and deactivation, which are both indicated based on L1 signaling.

Type 1 CG and Type 2 CG are configured per bandwidth part (BWP). Multiple CG configurations on a same BWP may be activated simultaneously. An activation procedure and a deactivation procedure of Type 2 CG are independent of each other. For a same BWP, a medium access control (MAC) layer may configure Type 1 CG and Type 2 CG simultaneously.

Since an uplink CG transmission may save a sending delay of uplink scheduling request and buffer status report (BSR), the uplink CG transmission is suitable for periodic uplink (UL) extended reality (XR) service transmission. However, in each period of CG transmission, only a fixed transmission occasion and a fixed transmission resource are configured for physical uplink shared channel (PUSCH) transmission. For XR services with variable data packet sizes, a transmission cannot be completed within one transmission period, resulting in an additional delay. Therefore, in a study item (SI) stage discussion, it is recommended to increase transmission occasions within one CG period to improve system capability of an XR service.

In case that multiple transmission occasions are configured in one CG period to cope with a situation of variable uplink data packet sizes, generally, in order not to affect a transmission delay of an UL data packet, a larger number of CG transmission occasions may be configured. However, if the data packet is small, occupancy of all of the multiple transmission occasions may lead to resource waste and system uplink congestion.

One CG period includes one transmission occasion. One transmission occasion (TO) corresponds to one transport block (TB).

In case that CG supports repeated transmission, and each CG period includes N CG PUSCH TOs/nominal TOs, each transmission occasion transmits a same TB, where N is configured by radio resource control (RRC).

In case that a terminal determines to transmit a data packet in a CG transmission occasion, only one data transport block is transmitted on a single transmission occasion (transmission occasion group) within one period configured by a base station, and a transmitted data packet occupies all configured resources within one CG period.

In case that one CG period supports multiple transmission occasions, since a size of a uplink data packet for an XR video stream is variable, a terminal may determine a number of transmission occasions to be used based on a size of a data packet to be transmitted and feed back to a base station. Only using part of transmission occasions within a CG period is not further specified in an existing protocol.

To solve this problem, an embodiment of the present application provides a method for uplink transmission indication, which feeds back an occupancy situation of multiple transmission occasions within one CG period in case that a terminal only occupied a part of transmission occasions.

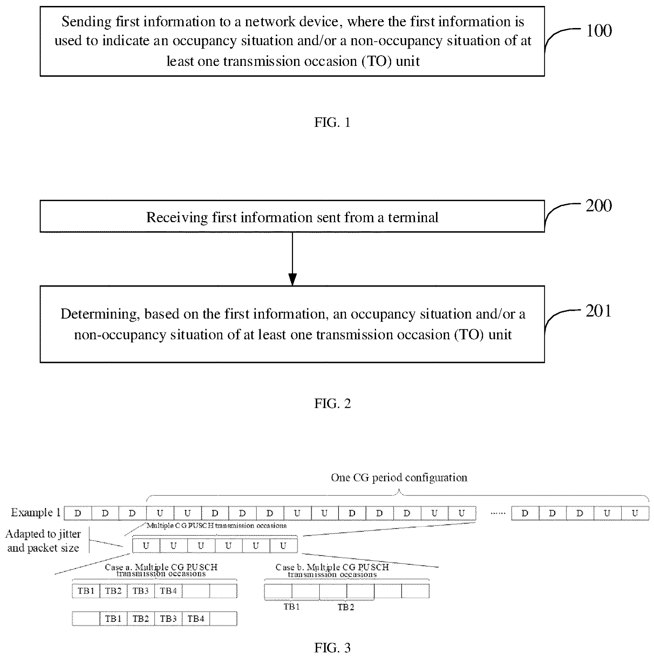

FIG. 1 is a first schematic flowchart of a method for uplink transmission indication according to an embodiment of the present application. The method is performed by a terminal. As shown in FIG. 1, the method includes following step:
step 100: sending first information to a network device, where the first information is used to indicate that at least one transmission occasion (TO) unit is used and/or not used.

In an embodiment, in case that the terminal transmits a data packet on a CG transmission occasion, the terminal may send the first information to the network device (e.g., a base station), where the first information may be used to indicate the occupancy situation and/or the non-occupancy situation of at least one TO unit.

The network device may configure at least one TO for the terminal, which is used for the terminal to transmit uplink data.

The occupancy or non-occupancy situation of one TO unit may also be understood as the TO unit being used or not used.

In some implementations, one TO unit being occupied may refer to that there is data transmission on the TO unit and/or the network device cannot occupy the TO unit.

In some implementations, one TO unit not being occupied may refer to that there is no data transmission on the TO unit and/or the network device may occupy the TO unit.

In some embodiments, the TO unit includes at least one of following types.

### (1) A TO group or a TO or a symbol set in a TO

A TO group may include multiple TOs, and a TO may include multiple symbols (e.g., orthogonal frequency division multiplexing (OFDM) symbols). A symbol set in a TO may include all symbols in a TO, or may include a part of symbols in a TO, or may be a symbol set that divides a TO based on a fixed number of symbols. Each symbol set includes at least one symbol, which is not limited in the present application.

In some implementations, a TO group may be used as a TO unit; or, a TO may be used as a TO unit; or, a symbol set may be used as a TO unit.

### (2) A TO group and a part or all of TOs included in the TO group

For example, a TO group and at least one TO included in the TO group may be considered as a TO unit.

### (3) A TO group and a symbol set in at least one TO in the TO group

For example, a TO group and all symbol sets included in one or more TOs in the TO group may be considered as a TO unit.

### (4) A TO group, a part or all of TOs included in the TO group, and a symbol set in at least one TO in the part or all of the TO

For example, a TO group, at least one TO in the TO group, and all symbol sets included in the at least one TO in the TO group may be considered as a TO unit.

### (5) A TO and a symbol set in the TO

For example, a TO and all symbol sets in the TO may be considered as a TO unit.

The first information indicates the occupancy situation and/or the non-occupancy situation of at least one TO unit, where the at least one TO unit may be a same type of TO unit, for example, all refer to a TO group (i.e., an indicated granularity is a TO group); or all refer to a TO (i.e., an indicated granularity is a TO); or all refer to a symbol set in a TO (i.e., an indicated granularity is a symbol set in a TO).

The at least one TO unit may not all be a same type of TO unit, for example, some TO units may refer to a TO (i.e., an indicated granularity is a TO), and some TO units may refer to a symbol set in a TO (i.e., an indicated granularity includes a symbol set in a TO). For example, it is assumed that the first information adopts a two-level indication way, indicating the occupancy situation and/or the non-occupancy situation of multiple TOs within one CG period, and indicating the occupancy situation and/or the non-occupancy situation of a symbol set in a last occupied TO among the multiple TOs, then it may be considered that: a part of the first information indicates the occupancy situation and/or the non-occupancy situation of multiple TOs within one CG period, and the other part indicates the occupancy situation and/or the non-occupancy situation of the symbol set in the last occupied TO among the multiple TOs. The TO unit corresponding to the last occupied TO among the multiple TOs is of one type (the symbol set in the TO is regarded as a TO unit), and the TO units corresponding to the other TOs are of another type (one TO is one TO unit).

For a way of using two or more levels for indication, it is similar to the above situation. For example, the first information may indicate the occupancy situation and/or the non-occupancy situation of multiple TO groups within one CG period, and indicate the occupancy situation and/or the non-occupancy situation of a part of TOs in the multiple TO groups, and also indicate the occupancy situation and/or the non-occupancy situation of symbol sets in some TOs. There are multiple different types of TO units included, for example: one TO group is one TO unit (TOs, symbol sets, etc. in the TO group are not indicated); a part of TOs included in a specific TO group are one TO unit (symbol sets, etc. in the TO are not indicated); a symbol set in at least one TO in a specific TO is used as a TO unit. For example: the first information includes three parts, which are used to indicate the occupancy situation of N1 TO groups, N2 TOs and N3 symbol sets respectively. The N2 TOs are a subset or a full set of TO sets included in a certain TO group among the N1 TO groups, the N3 symbol sets are a subset or a full set of symbol sets included in a certain TO among the N2 TOs, and the N1 TO groups are a subset or a full set of TO groups included in a CG period.

In some embodiments, the first information includes one or more of following.

### (1) First indication information, where the first indication information is used to indicate that each TO unit in at least one configured grant (CG) period is used and/or not used

In some implementations, the first information sent from the terminal to the network device may include the first indication information, and the first indication information may be used to indicate whether each TO unit in one or more CG periods is occupied.

For example, the first indication information may be used to indicate whether each TO unit in a single CG period is occupied, or the first indication information may also be used to indicate whether each TO unit in multiple CG periods is occupied. The first indication information may indicate whether each TO unit is occupied in a form of a bit mapping, where "1" indicates occupied, and "0" indicates unoccupied.

As described above, each TO unit indicated by the first indication information may be a same type of TO unit, or may not be a same type of TO unit (it is a combination of multiple types of TO unit). For example, in a case of multi-level indication, the first indication information may indicate the occupancy situation and/or the non-occupancy situation of each TO in at least one CG period, and also include the occupancy situation and/or the non-occupancy situation of a symbol set in a last TO in the at least one CG period. This content remains consistent throughout the text and is not repeated in the following.

### (2) Second indication information, where the second indication information is used to indicate that each TO unit from a first time to an end of a first configured grant (CG) period is used and/or not used

In some implementations, the first information sent from the terminal to the network device may include the second indication information, and the second indication information may be used to indicate whether each TO unit is occupied from the first time to the end of the first configured grant (CG) period.

In some embodiments, the first time may include at least one of following:
a transmission time of the first information;
an effective moment of the first information; or
a time when the terminal receives hybrid automatic repeat request acknowledgement (HARQ-ACK) information corresponding to the first information fed back from the network device.

In some embodiments, the second indication information may be used to indicate whether each TO unit is occupied from a time having a certain time offset from the above-mentioned first time to the end of the first CG period.

The first CG period may be any CG period whose end time is after the first time.

For example, the first CG period may be a CG period in which the terminal sends the first information. The second indication information may be used to indicate the occupancy or non-occupancy situation of each TO unit from the transmission time of the first information (or a time having a certain time offset from the transmission time of the first information) to the end of the CG period; or, the second indication information may be used to indicate the occupancy or non-occupancy situation of each TO unit from the valid time of the first information (or a time having a certain time offset from the valid time of the first information) to the end of the CG period; or, the second indication information may also be used to indicate the occupancy or non-occupancy situation of each TO unit from the time when the terminal receives the HARQ-ACK information corresponding to the indication information fed back from the network device (or a time having a certain time offset from the time when the terminal receives the HARQ-ACK information corresponding to the indication information fed back from the network device) to the end of the CG period. The second indication information may indicate whether each TO unit is occupied in the form of the bit mapping, where "1" indicates occupied, and "0" indicates unoccupied.

### (3) Third indication information, where the third indication information is used to indicate that a first number of TO units after a first time are used and/or not used

In some implementations, the first information sent from the terminal to the network device may include the third indication information, and the third indication information may be used to indicate whether a first number of TO units are occupied after the first time. The first number may be a number configured by a higher layer signaling, or a number determined by other ways, which is not limited here.

For example, the third indication information may be used to indicate the occupancy or non-occupancy situation of a first TO unit after the first time, or the third indication information may also be used to indicate the occupancy or non-occupancy situation of multiple TO units after the first time. The third indication information may indicate whether each TO unit is occupied in the form of the bit mapping, where "1" indicates occupied, and "0" indicates unoccupied.

### (4) Fourth indication information, where the fourth indication information is used to indicate that a time unit in at least one TO unit is used and/or not used.

In some implementations, the first information sent from the terminal to the network device may include the fourth indication information, and the fourth indication information may be used to indicate the occupancy and/or non-occupancy of a time unit in one or more TO units. The time unit in the TO unit may be one or more of a symbol, a slot, a subframe, a TO group, a TO, a symbol set, etc. in the TO unit, which is not limited here.

For example, the fourth indication information may be used to indicate the occupancy situation and/or the non-occupancy situation of a symbol in a last TO in a TO group. The fourth indication information may indicate the occupancy situation of the time unit in each TO unit in the form of the bit mapping, where "1" indicates occupied, and "0" indicates unoccupied.

### (5) Fifth indication information, where the fifth indication information is used to indicate whether all TO units in a specified duration after a first time are not occupied

In some implementations, the first information sent from the terminal to the network device may include the fifth indication information, and the fifth indication information may be used to indicate whether all TO units in the specified duration after the first time are not occupied. The specified duration may be a duration configured by a high layer signaling, or a duration determined by other ways, which is not limited here.

For example, the fifth indication information may indicate whether all TO units in the specified duration after the first time are not occupied in the form of the bit mapping. Each bit corresponds to a TO unit or a time unit in a TO unit, "1" indicates that none of TO units or time units in TO units in the specified duration after the first time is occupied, and "0" indicates that at least one of TO units or time units in TO units in the specified duration after the first time is occupied.

For example, the fifth indication information may be 1 bit to indicate whether all the TO units in the specified duration after the first time are not occupied. "1" indicates that all the TO units in the specified duration after the first time are not occupied, and "0" indicates that at least one of the TO units in the specified duration after the first time is occupied.

In some implementations, the first information sent from the terminal to the network device may include the fifth indication information, and the fifth indication information may be information related to a specific duration, where the information related to the specific duration may be a specific time, or an index value corresponding to a specific time. Whether the fifth indication information indicates occupancy or non-occupancy of the TO unit in the specified duration after the first time may be defined by a protocol.

### (6) Sixth indication information, where the sixth indication information is used to indicate whether all TO units in a specified duration after a first time are occupied

In some implementations, the first information sent from the terminal to the network device may include the sixth indication information, and the sixth indication information may be used to indicate whether all TO units in a specified duration after the first time are occupied. The specified duration may be a duration configured by a higher layer signaling, or a duration determined by other ways, which is not limited here.

For example, the sixth indication information may indicate whether all TO units in a specified duration after the first time are occupied in the form of the bit mapping. "1" indicates that all TO units in a specified duration after the first time are occupied, and "0" indicates that at least one TO unit in a specified duration after the first time is not occupied.

In some implementations, the first information sent from the terminal to the network device may include the sixth indication information, and the sixth indication information may be information related to a specific duration, where the information related to a specific duration may be a specific time, or an index value corresponding to a specific time. Whether the sixth indication information indicates occupancy or non-occupancy of the TO unit in the specified duration after the first time may be defined by a protocol.

### (7) Seventh indication information, where the seventh indication information is used to indicate that a first number of TO units after a first time are not occupied

In some implementations, the first information sent from the terminal to the network device may include the seventh indication information, and the seventh indication information may be used to indicate that the first number of TO units after the first time are not occupied. The first number may be a number configured by a higher layer signaling, or a number determined by other ways, which is not limited here.

In some implementations, in case that the first number of TO units after the first time are not occupied, the first information may include the seventh indication information.

In some implementations, the seventh indication information may indicate that the first number of TO units after the first time are not occupied in the form of the bit mapping. "1" indicates that the first number of TO units after the first time are not occupied, and "0" indicates that at least one of the first number of TO units after the first time is occupied.

In some implementations, the seventh indication information indicates a first number value or an index value corresponding to a first number value, and indicates that the first number of TO units after the first time are not occupied. The seventh indication information may be used to indicate that the first number of TO units after the first time are not occupied, which is defined by a protocol.

### (8) Eighth indication information, where the eighth indication information is used to indicate that a first number of TO units after a first time are occupied

In some implementations, the first information sent from the terminal to the network device may include the eighth indication information, and the eighth indication information may be used to indicate that the first number of TO units after the first time are occupied. The first number may be a number configured by a higher layer signaling, or a number determined by other ways, which is not limited here.

In some implementations, in case that the first number of TO units after the first time are occupied, the first information may include the eighth indication information.

In some implementations, the eighth indication information may indicate that the first number of TO units after the first time are occupied in the form of the bit mapping. "1" indicates that the first number of TO units after the first time are occupied, and "0" indicates that at least one of the first number of TO units after the first time is not occupied.

In some implementations, the eighth indication information indicates a first number value or an index value corresponding to a first number value, and indicates that the first number of TO units after the first time are occupied. The eighth indication information may be used to indicate that the first number of TO units after the first time are occupied, which is defined by a protocol.

### (9) Ninth indication information, where the ninth indication information is used to indicate at least one TO unit for data reception of the network device

In some implementations, the first information sent from the terminal to the network device may include the ninth indication information, and the ninth indication information may be used to indicate the network device to receive data in a specific TO unit.

For example, the ninth indication information may indicate the network device to receive data in a specific TO unit in the form of the bit mapping. "1" indicates that the network device receives data in the TO unit, and "0" indicates that the network device does not receive data in the TO unit.

For example, the ninth indication information may use 1 bit to indicate the network device to receive data in a specific TO unit, such as in a current TO unit or one or more subsequent TO units. "1" indicates that the network device receives data in the specific TO unit, and "0" indicates that the network device does not receive data in the specific TO unit.

### (10) An index value, offset value or identifier code of a starting TO unit in at least one TO unit, and/or an index value, offset value or identifier code of an ending TO unit in at least one TO unit

In some implementations, the first information sent from the terminal to the network device may include an index value, an offset value, or an identifier code of an occupied starting TO unit within one or more CG periods, and/or an index value, an offset value, or an identifier code of an occupied ending TO unit within one or more CG periods. The index value, the offset value, or the identifier code of the TO unit may be used to determine the TO unit or a time domain position of the TO unit.

For example, in case that the first information includes an index value, an offset value, or an identifier code of an occupied starting TO unit within one CG period, the first information may indicate that all TO units within a scaling duration after a time domain position of the starting TO unit are occupied.

For example, in case that the first information includes an index value, an offset value, or an identifier code of an occupied ending TO unit within one CG period, the first information may indicate that all TO units within a scaling duration before a time domain position of the ending TO unit are occupied.

For example, in case that the first information includes an index value, an offset value, or an identifier code of an occupied starting TO unit within one CG period and an index value, an offset value or an identifier code of an occupied ending TO unit, the first information may indicate that all TO units from the starting TO unit to the ending TO unit in the CG period are occupied.

The above-mentioned scaling duration may be a duration agreed by a protocol, configured by a higher layer signaling, or determined by other way, which is not limited here.

### (11) A number of TO units

In some implementations, the first information sent from the terminal to the network device may include the number of occupied TO units in one or more CG periods.

For example, the first information includes that a number of occupied TOs within one CG period is 3, and the first information may indicate that the 3 TOs at specific positions (such as 3 TOs starting from a starting position of the CG period, or last 3 TOs of the CG period) in the CG period are all occupied.

The above-mentioned specific position may be agreed by a protocol, or configured by a higher layer signaling, or determined by other ways, which is not limited here.

The above-mentioned first information may be located within the indicated CG period, or may be located outside the indicated CG period, which is not limited here.

In the methods for uplink transmission indication, the terminal sends the first information to the network device, indicating that at least one transmission occasion (TO) unit is used or not used to the network device, and the network device may allocate the unoccupied TO units more reasonably, which improves utilization of CG transmission resources and avoids resource waste.

In some embodiments, sending the first information to the network device includes:
sending the first information to the network device at one or more of following time domain positions.

In an embodiment, in case that the terminal sends the first information to the network device, the first information may be sent to the network device at one or more of following time domain positions.

### (1) A starting uplink time unit position of a CG period

In some implementations, the starting uplink time unit position of the CG period may be a starting uplink slot of the CG period, or may be a starting uplink symbol of the CG period.

For example, the terminal may send the first information to the network device at a starting uplink slot of one CG period, or the terminal may send the first information to the network device at a starting uplink symbol of one CG period.

### (2) An ending uplink time unit position of a CG period

In some implementations, the ending uplink time unit position of the CG period may be an ending uplink slot of the CG period, or may be an ending uplink symbol of the CG period.

For example, the terminal may send the first information to the network device at an ending uplink slot of one CG period, or the terminal may send the first information to the network device at an ending uplink symbol of one CG period.

### (3) A first uplink time unit position of a CG period, where the first uplink time unit position is an uplink time unit position within the CG period predefined by a protocol or indicated through the network device, and the uplink time unit position is an uplink slot position or an uplink symbol position

In some implementations, the first uplink time unit position of the CG period may be a slot position within the CG period defined by a higher layer signaling and/or configured by a protocol, or may be a symbol position within the CG period defined by a higher layer signaling and/or configured by a protocol.

For example, the terminal may send the first information to the network device at a slot position within the CG period defined by a higher layer signaling and/or configured by a protocol, or the terminal may send the first information to the network device at a symbol position within the CG period defined by a higher layer signaling and/or configured by a protocol.

### (4) A starting uplink time unit position of a first duration

In some implementations, the first duration may be a period in slot format, or a time domain length occupied by a TO unit. The starting uplink time unit position of the first duration may also be expressed as a starting uplink slot of a period in slot format or a time domain length occupied by a TO unit, or a starting uplink symbol of a period in slot format or a time domain length occupied by a TO unit.

For example, the terminal may send the first information to the network device at a starting uplink slot of a period in slot format or a time domain length occupied by a TO unit, or the terminal may send the first information to the network device at a starting uplink symbol of a period in slot format or a time domain length occupied by a TO unit.

### (5) An ending uplink time unit position of a first duration

In some implementations, the first duration may be a period in slot format, or a time domain length occupied by a TO unit. The ending uplink time unit position of the first duration may also be expressed as an ending uplink slot of a period in slot format or a time domain length occupied by a TO unit, or an ending uplink symbol of a period in slot format or a time domain length occupied by a TO unit.

For example, the terminal may send the first information to the network device at an ending uplink slot of a period in slot format or a time domain length occupied by a TO unit, or the terminal may send the first information to the network device at an ending uplink symbol of a period in slot format or a time domain length occupied by a TO unit.

### (6) A second uplink time unit position of a first duration, where the second uplink time unit position is an uplink time unit position within the first duration predefined by a protocol or indicated through the network device

In some implementations, the first duration may be a period in slot format, or a time domain length occupied by a TO unit. The second uplink time unit position of the first duration may be a slot position within the first duration defined by a higher layer signaling and/or configured by a protocol, or may also be a symbol position within the first duration defined by a higher layer signaling and/or configured by a protocol.

For example, the terminal may send the first information to the network device at a slot position within the first duration defined by a higher layer signaling and/or configured by a protocol, or the terminal may send the first information to the network device at a symbol position within the first duration defined by a higher layer signaling and/or configured by a protocol.

### (7) A time unit position of all or a part of resources configured for a second signaling, where the second signaling carries the first information

In some implementations, the time unit of the resource configured for the first information may be a symbol, a slot, a subframe, a TO group, a TO, a symbol set, etc. The terminal may send the first information to the network device on all resources configured for the first information; or the terminal may send the first information to the network device on part of the resources configured for the first information, for example, sending the first information on demand.

In some embodiments, in case that the terminal sends the first information to the network device, the first information may indicate an occupancy or non-occupancy situation of the TO unit within a specified duration after the first time.

The specified duration may include one or more of following types.

### (1) M times or 1/M of a CG period, where M is an integer greater than or equal to 1

For example, a time length of a CG period is X ms, a value of M is 2, and a time length indicated by the first information may be 2X ms or X/2 ms, that is, the first information may indicate the occupancy or non-occupancy situation of a TO unit within a time length of 2X ms or X/2 ms after a first time.

### (2) K times or 1/K of a first period, where the first period is a period of an uplink control signaling where the first information is located, where K is an integer greater than or equal to 1

For example, a time length of a first period is Y ms, a value of K is 2, and a time length indicated by the first information may be 2Y ms or Y/2 ms, that is, the first information may indicate the occupancy or non-occupancy situation of a TO unit within a time length of 2Y ms or Y/2 ms after a first time.

### (3) L times or 1/L of an interval between TO groups, where L is an integer greater than or equal to 1

For example, an interval between TO groups is Z ms, a value of L is 2, and a time length indicated by the first information may be 2Z ms or Z/2 ms, that is, the first information may indicate the occupancy or non-occupancy situation of a TO unit within a time length of 2Z ms or Z/2 ms after a first time. The interval between TO groups may be agreed by a protocol or configured by a higher layer signaling, which is not limited here.

### (4) A length of an interval configured through the network device

In some implementations, the network device may also configure the length of the interval of the first information for the terminal, and the terminal may determine the time length of the first information based on the length of the interval of the first information configured through the network device, indicating the occupancy or non-occupancy situation of the TO unit within the time length after the first time.

### (5) A first number of TOs

In some implementations, a first number of TOs may be configured by a higher layer signaling and/or defined by a protocol.

For example, a time length indicated by the first information is 3 TOs, indicating that the first information may indicate the occupancy or non-occupancy situation of the TO unit within the time length of 3 TOs after the first time.

### (6) A duration from a first time to an end of a first CG period

The first information may be used to indicate the occupancy or non-occupancy situation of each TO unit from a transmission time of the first information to an end of the CG period; or, the first information may be used to indicate the occupancy or non-occupancy situation of each TO unit from an valid time of the first information to an end of the CG period; or, the first information may also be used to indicate the occupancy or non-occupancy situation of each TO unit from a time when the terminal receives HARQ-ACK information corresponding to the first information fed back from the network device to an end of the CG period.

In some embodiments, sending the first information to the network device includes:
sending the first information, carried by a second signaling, to the network device, where the second signaling includes an uplink control signaling and/or a medium access control (MAC) signaling.

In an embodiment, in case that the terminal sends the first information to the network device, the first information may be carried in an uplink control signaling (e.g., uplink control information (UCI)) and sent to the network device, and/or the first information may be carried in a medium access control (MAC) signaling and sent to the network device.

In some implementations, in case that the terminal sends the first information to the network device, the entire first information may be carried in an uplink control signaling and sent to the network device.

In some implementations, in case that the terminal sends the first information to the network device, the entire first information may be carried in an MAC signaling and sent to the network device.

In some implementations, in case that the terminal sends the first information to the network device, a part of the first information may be carried in an uplink control signaling and sent to the network device, and another part of the first information may be carried in an MAC signaling and sent to the network device.

In some embodiments, the uplink control signaling includes one or more of:
an uplink control signaling carried on a configured grant (CG) enhancement dedicated physical uplink control channel (PUCCH); or
an uplink control signaling carried on a configured grant (CG) physical uplink shared channel (PUSCH).

In an embodiment, in case that the terminal carries the first information on UCI and sends it to the network device, the UCI may be one or more of UCI carried on a CG enhancement dedicated PUCCH, or UCI carried on a CG PUSCH.

In some implementations, in case that the terminal carries the first information on UCI and sends it to the network device, the first information may be carried only on UCI carried on a CG enhancement dedicated PUCCH and sent to the network device.

In some implementations, in case that the terminal carries the first information on UCI and sends it to the network device, the first information may be carried only on UCI carried on a CG PUSCH and sent to the network device.

In some implementations, in case that the terminal carries the first information on UCI and sends it to the network device, a part of the first information may be carried on UCI carried on a CG PUSCH, and another part of the first information may be carried on UCI carried on a CG enhancement dedicated PUCCH and sent to the network device.

In some embodiments, the method further includes:
receiving first resource information sent from the network device; and
determining, based on the first resource information, at least one of a time domain resource, a frequency domain resource, or a spatial domain resource of a first signaling,
where the first signaling includes at least one of the uplink control signaling, the MAC signaling, or hybrid automatic repeat request acknowledgement (HARQ-ACK) information corresponding to the first information.

In an embodiment, in case that the terminal carries the indication information on an uplink control signaling and/or an MAC signaling and sends it to the network device, the terminal may also receive the first resource information sent from the network device. The terminal may determine at least one of the time domain resource, the frequency domain resource, and the spatial domain resource of the first signaling based on the first resource information. The first signaling includes at least one of the uplink control signaling, the MAC signaling, and the HARQ-ACK information corresponding to the first information.

In some embodiments, the first resource information includes one or more of following.

### (1) An identifier for indicating that the first information is transmitted through at least one of a physical uplink control channel (PUCCH), a physical uplink shared channel (PUSCH), or an MAC signaling

In some implementations, the signaling resource information may include an identifier for indicating transmission of the first information, and the terminal may determine, based on the identifier, that the first information being transmitted on at least one of a CG enhancement dedicated PUCCH, a CG PUSCH, or an MAC signaling.

For example, the terminal may determine, based on the identifier, that the first information being transmitted on the CG enhancement dedicated PUCCH; or
the terminal may determine, based on the identifier, that the first information being transmitted on the CG PUSCH;
the terminal may determine, based on the identifier, that the first information being transmitted on the MAC signaling;
the terminal may determine, based on the identifier, that the first information being transmitted on the CG enhancement dedicated PUCCH and the CG PUSCH;
the terminal may determine, based on the identifier, that the first information being transmitted on the CG enhancement dedicated PUCCH and the MAC signaling;
the terminal may determine, based on the identifier, that the first information being transmitted on the CG PUSCH and the MAC signaling;
the terminal may determine, based on the identifier, that the first information being transmitted on the CG enhancement dedicated PUCCH, the CG PUSCH, and the MAC signaling.

### (2) Resource information of a physical uplink control channel (PUCCH) where the first information is located

In some embodiments, the signaling resource information may include the resource information of the PUCCH where the first information is located. In case that the terminal includes the first information in the UCI carried on the CG enhancement dedicated PUCCH and sends it to the network device, at least one of the time domain resource, the frequency domain resource, or the spatial domain resources of the UCI may be determined based on the resource information of the PUCCH where the first information is located.

### (3) Information of a resource where the first information is located

In some embodiments, the signaling resource information may include the information of the resource where the first information is located on the PUSCH. In case that the terminal includes the first information in the UCI carried on the CG PUSCH and sends it to the network device, at least one of the time domain resource, the frequency domain resource, or the spatial domain resource of the UCI may be determined based on the information of the resource where the first information is located.

### (4) Resource information of an MAC signaling where the first information is located

In some embodiments, the signaling resource information may include resource information of the MAC signaling where the first information is located. In case that the terminal includes the first information in the MAC signaling and sends it to the network device, at least one of the time domain resource, the frequency domain resource, or the spatial domain resource of the MAC signaling may be determined based on the resource information of the MAC signaling where the first information is located.

### (5) Resource information of the HARQ-ACK information corresponding to the first information

In some implementations, after receiving the first information sent from the terminal, the network device may send the HARQ-ACK information corresponding to the first information to the terminal, and the signaling resource information may also include the resource information of the HARQ-ACK information corresponding to the first information. The terminal may determine at least one of the time domain resource, the frequency domain resource, or the spatial domain resource of the HARQ-ACK information corresponding to the first information based on the resource information of the HARQ-ACK information corresponding to the first information.

In some embodiments, the resource information of the PUCCH where the first information is located includes one of more of following.

### (1) A PUCCH resource set identifier or a PUCCH resource list index

In some implementations, the terminal may determine the resource information of the PUCCH where the first information is located based on the PUCCH resource set identifier or the PUCCH resource list index.

### (2) A starting resource block (RB) of a frequency domain resource of the PUCCH

In some implementations, the terminal may determine the resource information of the PUCCH where the first information is located based on the starting RB of the frequency domain resources of the PUCCH.

### (3) At least one of a number of resource blocks (RBs), an RB set, or an RB set index included in a frequency domain resource of the PUCCH

In some implementations, the terminal may determine the resource information of the PUCCH where the first information is located based on at least one of the number of RBs, the RB set, or the RB set index included in the frequency domain resources of the PUCCH.

### (4) A format of the uplink control signaling

In some implementations, the terminal may determine the resource information of the PUCCH where the first information is located based on the format of the uplink control signaling.

### (5) Resource information of a demodulation reference signal (DMRS) associated with the PUCCH

In some implementations, the terminal may determine the resource information of the PUCCH where the first information is located based on the resource information of the DMRS associated with the PUCCH.

### (6) Frequency hopping information of the PUCCH

In some implementations, the terminal may determine the resource information of the PUCCH where the first information is located based on the frequency hopping information of the PUCCH.

### (7) A period and/or an offset of the PUCCH

In some implementations, the terminal may determine the resource information of the PUCCH where the first information is located based on the period and/or the offset of the PUCCH.

### (8) A slot or a TO where the PUCCH is located

In some implementations, the terminal may determine the resource information of the PUCCH where the first information is located based on the slot or the TO where the PUCCH is located.

### (9) At least one of a symbol position where the PUCCH is located, a number of symbols occupied by the PUCCH, a starting symbol where the PUCCH is located, or an ending symbol where the PUCCH is located

In some implementations, the terminal may determine the resource information of the PUCCH where the first information is located based on at least one of the symbol position where the PUCCH is located, the number of symbols occupied by the PUCCH, the starting symbol where the PUCCH is located, or the ending symbol where the PUCCH is located.

### (10) Power control information of the PUCCH

In some implementations, the terminal may determine the resource information of the PUCCH where the first information is located based on the power control information of the PUCCH.

### (11) Multiplexed first information of the PUCCH and at least one of a hybrid automatic repeat request (HARQ), channel state information (CSI), or a scheduling request (SR)

In some implementations, the terminal may determine the resource information of the PUCCH where the first information is located based on the multiplexed first information of the PUCCH and at least one of the HARQ (the HARQ here is an HARQ for downlink transmission), the CSI, or the SR.

### (12) A payload size of the uplink control signaling, or a size of an information field for the first information in the uplink control signaling

In some implementations, the terminal may determine the resource information of the PUCCH where the first information is located based on the payload size of the uplink control signaling, or the size of the information field for the first information in the uplink control signaling.

### (13) Spatial related information of the PUCCH

In some implementations, the terminal may determine the resource information of the PUCCH where the first information is located based on the spatial related information of the PUCCH.

### (14) A coding or modulation scheme of the uplink control signaling

In some implementations, the terminal may determine the resource information of the PUCCH where the first information is located based on the coding or modulation scheme of the uplink control signaling.

### (15) An offset of at least one of a slot, a TO unit, or a symbol associated with the uplink control signaling

In some implementations, the terminal may determine the resource information of the PUCCH where the first information is located based on the offset of at least one of the slot, the TO unit, or the symbol associated with the uplink control signaling.

In some embodiments, the information of the resource where the first information is located includes one or more of following.

In an embodiment, the information of the resource where the first information is located may be, in case that the terminal includes the first information in the UCI carried on the CG PUSCH and sends it to the network device, information of the resource where the first information is located on the CG PUSCH. The information of the resource where the first information is located may include one or more of following.

### (1) A starting resource block (RB) of a frequency domain resource where the first information is located

In some implementations, the terminal may determine the information of the resource where the first information is located based on the starting RB of the frequency domain resource where the first information is located.

### (2) At least one of a number of resource blocks (RBs), an RB set, or an RB set index included in a frequency domain resource where the first information is located

In some implementations, the terminal may determine the information of the resource where the first information is located based on at least one of the number of RBs, the RB set, or the RB set index included in the frequency domain resource where the first information is located.

### (3) Resource information of a demodulation reference signal (DMRS) associated with a resource where the first information is located

In some implementations, the terminal may determine the information of the resource where the first information is located based on the resource information of the DMRS associated with the resource where the first information is located.

### (4) Frequency hopping information of a resource where the first information is located

In some implementations, the terminal may determine the information of the resource where the first information is located based on the frequency hopping information of the resource where the first information is located.

### (5) A period and/or an offset of a resource where the first information is located

In some implementations, the terminal may determine the information of the resource where the first information is located based on the period and/or the offset of the resource where the first information is located.

### (6) A slot or a TO where the first information is located

In some implementations, the terminal may determine the information of the resource where the first information is located based on the slot or the TO where the first information is located.

### (7) At least one of a symbol position where the first information is located, a number of symbols occupied by the first information, a starting symbol where the first information is located, or an ending symbol where the first information is located

In some implementations, the terminal may determine the information of the resource where the first information is located based on at least one of the symbol position where the first information is located, the number of symbols occupied by the first information, the starting symbol where the first information is located, or the ending symbol where the first information is located.

### (8) Power control information of a resource where the first information is located

In some implementations, the terminal may determine the information of the resource where the first information is located based on the power control information of the resource where the first information is located.

### (9) Multiplexed first information of a resource where the first information is located and at least one of a hybrid automatic repeat request (HARQ), channel state information (CSI), or a scheduling request (SR)

In some implementations, the terminal may determine the information of the resource where the first information is located based on the multiplexed first information of the resource where the first information is located and at least one of the HARQ (the HARQ here is an HARQ for downlink transmission), the CSI, or the SR.

### (10) A payload size of a resource where the first information is located, or a size of an information field for the first information

In some implementations, the terminal may determine the information of the resource where the first information is located based on the payload size of the resource where the first information is located, or the size of the information field for the first information.

### (11) Spatial related information of a resource where the first information is located

In some implementations, the terminal may determine the information of the resource where the first information is located based on the spatial related information of the resource where the first information is located.

### (12) A coding or modulation scheme of a resource where the first information is located

In some implementations, the terminal may determine the information of the resource where the first information is located based on the coding or modulation scheme of the resource where the first information is located.

### (13) An offset of at least one of a slot, a TO unit, or a symbol associated with a resource where the first information is located

In some implementations, the terminal may determine the information of the resource where the first information is located based on the offset of at least one of the slot, the TO unit, or the symbol associated with the resource where the first information is located.

In some embodiments, the resource information of the MAC signaling where the first information is located includes one or more of following.

### (1) A size of an information field for the first information in the MAC signaling

In some implementations, the terminal may determine the resource information of the MAC signaling where the first information is located based on the size of the information field for the first information in the MAC signaling.

### (2) A TO unit corresponding to each bit or each byte in an information field for the first information in the MAC signaling

In some implementations, the terminal may determine the resource information of the MAC signaling where the first information is located based on the TO unit corresponding to each bit or each byte in the information field for the first information in the MAC signaling.

In some embodiments, the resource information of the HARQ-ACK information corresponding to the first information includes one or more of following.

### (1) A time domain position for sending the HARQ-ACK information corresponding to the first information

In some implementations, the terminal may determine the resource information of the HARQ-ACK information corresponding to the first information based on the time domain position for sending the HARQ-ACK information corresponding to the first information.

### (2) A frequency domain position for sending the HARQ-ACK information corresponding to the first information

In some implementations, the terminal may determine the resource information of the HARQ-ACK information corresponding to the first information based on the frequency domain position for sending the HARQ-ACK information corresponding to the first information.

### (3) Spatial related information of the HARQ-ACK information corresponding to the first information

In some implementations, the terminal may determine the resource information of the HARQ-ACK information corresponding to the first information based on the spatial related information of the HARQ-ACK information corresponding to the first information.

### (4) A size of an information field for the HARQ-ACK information corresponding to the first information

In some implementations, the terminal may determine the resource information of the HARQ-ACK information corresponding to the first information based on the size of the information field for the HARQ-ACK information corresponding to the first information.

### (5) A TO unit associated with the HARQ-ACK information corresponding to the first information

In some implementations, the terminal may determine the resource information of the HARQ-ACK information corresponding to the first information based on the TO unit associated with the HARQ-ACK information corresponding to the first information.

### (6) A format of downlink control information (DCI) where the HARQ-ACK information corresponding to the first information is located

In some implementations, the terminal may determine the resource information of the HARQ-ACK information corresponding to the first information based on the format of the DCI where the HARQ-ACK information corresponding to the first information is located.

### (7) Search space set information associated with downlink control information (DCI) where the HARQ-ACK information corresponding to the first information is located

In some implementations, the terminal may determine the resource information of the HARQ-ACK information corresponding to the first information based on the search space set information associated with the DCI where the HARQ-ACK information corresponding to the first information is located.

### (8) A timer associated with the HARQ-ACK information corresponding to the first information

In some implementations, the terminal may determine the resource information of the HARQ-ACK information corresponding to the first information based on the timer associated with the HARQ-ACK information corresponding to the first information.

In some embodiments, after sending the first information to the network device, the method further includes:
after a second time, not transmitting data on an unoccupied TO unit indicated by the first information; and/or
before a second time, sending second information to the network device, where the second information is used to indicate that at least one TO unit is used and/or not used;
where the second time includes at least one of:
   a transmission time of the first information;
   an valid time of the first information;
   a time when the terminal receives hybrid automatic repeat request acknowledgement (HARQ-ACK) information corresponding to the first information fed back from the network device; or
   a time when a timer used for indicating an valid time of the first information expires.

In an embodiment, after sending the first information to the network device, after the second time, the terminal may not transmit data on the unoccupied TO unit indicated by the first information, and/or, before the second time, the terminal may send the second information to the network device, where the second information is used to indicate a new occupancy and/or non-occupancy situation of at least one TO unit.

In some implementations, in case that the first information indicates that a TO unit is unoccupied, the terminal may not transmit data on the TO unit after the second time.

In some implementations, in case that burst data arrives on the uplink, before the second time, the terminal may send the second information to the network device, where the second information is used to indicate the new occupancy and/or non-occupancy situation of at least one TO unit within at least one CG period.

The second time includes at least one of:
the transmission time of the first information;
the valid time of the first information;
the time when the terminal receives the HARQ-ACK information corresponding to the first information fed back from the network device; or
the time when the timer used for indicating the valid time of the first information expires.

In some implementations, the network device may configure the valid time of the first information for the terminal, or a protocol may agree on the valid time of the first information, or the terminal may report the valid time of the first information to the network device.

In some embodiments, the valid time of the first information is associated with a capability of the terminal.

In some implementations, the terminal may report the capability of the terminal to the network device, and the network device may configure the valid time of the first information based on a received capability of the terminal.

In some embodiments, the timer used for indicating the valid time of the first information is configured by a higher layer signaling or predefined by a protocol.

In some implementations, the timer used for indicating the valid time of the first information may be configured by the higher layer signaling or predefined by the protocol.

In some embodiments, any CG period includes N TOs, and the N TOs are used to send at least one transport block (TB), where N is an integer greater than or equal to 1.

In an embodiment, all the above-mentioned CG periods in the present application include N TOs.

Any CG period may include N TOs, where N is an integer greater than or equal to 1. The number of TOs included in the CG period may be configured through the network device. The N TOs may be used to send at least one TB.

For example, one CG period includes 6 TOs, and it may be that each TO may send a TB, or a first TO and a second TO send a TB, and a third TO and a fourth TO send a TB.

In some embodiments, the N TOs have one or more of following features.

In an embodiment, in case that the network device configures N TOs for the CG period, the N TOs may satisfy one or more of following.

### (1) The N TOs are N adjacent uplink time unit sets.

In some implementations, the N TOs may be N adjacent uplink time unit sets, and the time unit set may be a slot set or a symbol set. The adjacent may refer to two uplink time unit sets being adjacent in the time domain, or may refer to no data transmission is performed in an uplink time unit set between the two uplink time unit sets.

### (2) The N TOs are N uplink time unit sets with a first interval.

In some implementations, the N TOs may be N uplink time unit sets with the first interval, and the time unit set may be a slot set or a symbol set. The first interval may be an interval configured by a higher layer signaling or defined by a protocol.

### (3) The N TOs are N uplink time unit sets at a first time domain position.

In some implementations, the N TOs may be N uplink time unit sets at the first time domain position, and the time unit set may be a slot set or a symbol set. The first time domain position may be a time domain position uniformly distributed within one CG period, or may be a time domain position closest to a starting position of one CG period, or may be a time domain position closest to an ending position of one CG period.

### (4) Symbol positions occupied by the N TOs in different slots are same.

In some embodiments, the symbol positions occupied by the N TOs in different slots may be the same.

For example, each TO occupies first 3 symbols in its slot.

### (5) A number of symbols occupied by the N TOs is same.

In some embodiments, the number of symbols occupied by the N TOs in different slots may be the same.

For example, a part of TOs occupies first 3 symbols in its slot, and another part of the TOs occupies last 3 symbols in its slot.

### (6) Symbol positions occupied by the N TOs are independent of each other, and each of the N TOs is prohibited from crossing a slot.

In some embodiments, the symbol positions occupied by the N TOs may be independent of each other (i.e., there is no correlation between the symbol positions occupied by each TO), and each TO is prohibited from crossing a slot.

### (7) Symbol positions occupied by the N TOs are independent of each other, each of the N TOs is allowed to cross a slot, and a second interval exists between different TOs in a same slot.

In some embodiments, the symbol positions occupied by the N TOs may be independent of each other (i.e., there is no correlation between the symbol positions occupied by each TO), each TO is allowed to cross a slot, different TOs in the same slot have a second interval, and the second interval is greater than 0.

In some embodiments, after sending the first information to the network device, the method further includes:
receiving hybrid automatic repeat request acknowledgement (HARQ-ACK) information, sent from the network device, corresponding to the first information.

In an embodiment, after the terminal sends the first information to the network device, the terminal may also receive the HARQ-ACK information corresponding to the first information. The HARQ-ACK information corresponding to the first information is sent from the network device to the terminal after receiving the first information sent from the terminal.

In some embodiments, receiving the HARQ-ACK information, sent from the network device, corresponding to the first information, includes:
before a timer associated with the HARQ-ACK information corresponding to the first information expires, receiving the HARQ-ACK information, sent from the network device, corresponding to the first information.

In an embodiment, the timer associated with the HARQ-ACK information corresponding to the first information may be configured by a higher layer signaling and/or predefined by a protocol. Before the timer associated with the HARQ-ACK information corresponding to the first information expires, the terminal may receive the HARQ-ACK information corresponding to the first information sent from the network device. After the timer associated with the HARQ-ACK information corresponding to the first information expires, the terminal no longer receives the HARQ-ACK information corresponding to the first information sent from the network device.

FIG. 2 is a second schematic flowchart of a method for uplink transmission indication according to an embodiment of the present application. The method is performed by a network device (such as a base station). As shown in FIG. 2, the method includes following steps:
step 200: receiving first information sent from a terminal; and
step 201: determining, based on the first information, that at least one transmission occasion (TO) unit is used and/or not used.

In an embodiment, the network device may receive the first information sent from the terminal when the terminal transmits a data packet on a CG TO. The network device may determine, based on the first information, the occupancy or non-occupancy situation of at least one TO unit.

The network device may configure at least one TO for the terminal, which is used for the terminal to transmit uplink data.

The occupancy or non-occupancy situation of one TO unit may also be understood as the TO unit being used or not used.

In some implementations, one TO unit being occupied may refer to that there is data transmission on the TO unit and/or the network device cannot occupy the TO unit.

In some implementations, one TO unit not being occupied may refer to that there is no data transmission on the TO unit and/or the network device may occupy the TO unit.

In some embodiments, the TO unit includes at least one of following types.

### (1) A TO group or a TO or a symbol set in a TO

A TO group may include multiple TOs, and a TO may include multiple symbols (e.g., orthogonal frequency division multiplexing (OFDM) symbols). A symbol set in a TO may include all symbols in a TO, or may include a part of symbols in a TO, or may be a symbol set that divides a TO based on a fixed number of symbols. Each symbol set includes at least one symbol, which is not limited in the present application.

In some implementations, a TO group may be used as a TO unit; or, a TO may be used as a TO unit; or, a symbol set may be used as a TO unit.

### (2) A TO group and a part or all of TOs included in the TO group

For example, a TO group and at least one TO included in the TO group may be considered as a TO unit.

### (3) A TO group and a symbol set in at least one TO in the TO group

For example, a TO group and all symbol sets included in one or more TOs in the TO group may be considered as a TO unit.

### (4) A TO group, a part or all of TOs included in the TO group, and a symbol set in at least one TO in the part or all of the TO

For example, a TO group, at least one TO in the TO group, and all symbol sets included in the at least one TO in the TO group may be considered as a TO unit.

### (5) A TO and a symbol set in the TO

For example, a TO and all symbol sets in the TO may be considered as a TO unit.

The first information indicates the occupancy situation and/or the non-occupancy situation of at least one TO unit, where the at least one TO unit may be a same type of TO unit, for example, all refer to a TO group (i.e., an indicated granularity is a TO group); or all refer to a TO (i.e., an indicated granularity is a TO); or all refer to a symbol set in a TO (i.e., an indicated granularity is a symbol set in a TO).

The at least one TO unit may not all be a same type of TO unit, for example, some TO units may refer to a TO (i.e., an indicated granularity is a TO), and some TO units may refer to a symbol set in a TO (i.e., an indicated granularity includes a symbol set in a TO). For example, it is assumed that the first information adopts a two-level indication way, indicating the occupancy situation and/or the non-occupancy situation of multiple TOs within one CG period, and indicating the occupancy situation and/or the non-occupancy situation of a symbol set in a last occupied TO among the multiple TOs, then it may be considered that: a part of the first information indicates the occupancy situation and/or the non-occupancy situation of multiple TOs within one CG period, and the other part indicates the occupancy situation and/or the non-occupancy situation of the symbol set in the last occupied TO among the multiple TOs. The TO unit corresponding to the last occupied TO among the multiple TOs is of one type (the symbol set in the TO is regarded as a TO unit), and the TO units corresponding to the other TOs are of another type (one TO is one TO unit).

For a way of using two or more levels for indication, it is similar to the above situation. For example, the first information may indicate the occupancy situation and/or the non-occupancy situation of multiple TO groups within one CG period, and indicate the occupancy situation and/or the non-occupancy situation of a part of TOs in the multiple TO groups, and also indicate the occupancy situation and/or the non-occupancy situation of symbol sets in some TOs. There are multiple different types of TO units included, for example: one TO group is one TO unit (TOs, symbol sets, etc. in the TO group are not indicated); a part of TOs included in a specific TO group are one TO unit (symbol sets, etc. in the TO are not indicated); a symbol set in at least one TO in a specific TO is used as a TO unit. For example: the first information includes three parts, which are used to indicate the occupancy situation of N1 TO groups, N2 TOs and N3 symbol sets respectively. The N2 TOs are a subset or a full set of TO sets included in a certain TO group among the N1 TO groups, the N3 symbol sets are a subset or a full set of symbol sets included in a certain TO among the N2 TOs, and the N1 TO groups are a subset or a full set of TO groups included in a CG period.

In some embodiments, the first information includes one or more of following types.

### (1) First indication information, where the first indication information is used to indicate that each TO unit in at least one configured grant (CG) period is used and/or not used

In some implementations, the first information received by the network device may include the first indication information, and the first indication information may be used to indicate whether each TO unit in one or more CG periods is occupied.

For example, the first indication information may be used to indicate whether each TO unit in a single CG period is occupied, or the first indication information may also be used to indicate whether each TO unit in multiple CG periods is occupied. The first indication information may indicate whether each TO unit is occupied in a form of a bit mapping, where "1" indicates occupied, and "0" indicates unoccupied.

### (2) Second indication information, where the second indication information is used to indicate that each TO unit from a first time to an end of a first configured grant (CG) period is used and/or not used

In some implementations, the first information received by the network device may include the second indication information, and the second indication information may be used to indicate whether each TO unit is occupied from the first time to the end of the first configured grant (CG) period.

In some embodiments, the first time may include at least one of following:
a transmission time of the first information;
an effective moment of the first information; or
a time when the terminal receives HARQ-ACK information corresponding to the first information fed back from the network device.

In some embodiments, the second indication information may be used to indicate whether each TO unit is occupied from a time having a certain time offset from the above-mentioned first time to the end of the first CG period.

The first CG period may be any CG period whose end time is after the first time.

For example, the first CG period may be a CG period in which the terminal sends the first information. Accordingly, the network device may determine the CG period. The second indication information may be used to indicate the occupancy or non-occupancy situation of each TO unit from the transmission time of the first information (or a time having a certain time offset from the transmission time of the first information) to the end of the CG period; or, the second indication information may be used to indicate the occupancy or non-occupancy situation of each TO unit from the valid time of the first information (or a time having a certain time offset from the valid time of the first information) to the end of the CG period; or, the second indication information may also be used to indicate the occupancy or non-occupancy situation of each TO unit from the time when the terminal receives the HARQ-ACK information corresponding to the indication information fed back from the network device (or a time having a certain time offset from the time when the terminal receives the HARQ-ACK information corresponding to the indication information fed back from the network device) to the end of the CG period. The second indication information may indicate whether each TO unit is occupied in the form of the bit mapping, where "1" indicates occupied, and "0" indicates unoccupied.

### (3) Third indication information, where the third indication information is used to indicate that a first number of TO units after a first time are used and/or not used

In some implementations, the first information received by the network device may include the third indication information, and the third indication information may be used to indicate whether a first number of TO units are occupied after the first time. The first number may be a number configured by a higher layer signaling, or a number determined by other ways, which is not limited here.

For example, the third indication information may be used to indicate the occupancy or non-occupancy situation of a first TO unit after the first time, or the third indication information may also be used to indicate the occupancy or non-occupancy situation of multiple TO units after the first time. The third indication information may indicate whether each TO unit is occupied in the form of the bit mapping, where "1" indicates occupied, and "0" indicates unoccupied.

### (4) Fourth indication information, where the fourth indication information is used to indicate that a time unit in at least one TO unit is used and/or not used

In some implementations, the first information received by the network device may include the fourth indication information, and the fourth indication information may be used to indicate the occupancy and/or non-occupancy of a time unit in one or more TO units. The time unit in the TO unit may be one or more of a symbol, a slot, a subframe, a TO group, a TO, a symbol set, etc. in the TO unit, which is not limited here.

For example, the fourth indication information may be used to indicate the occupancy situation and/or the non-occupancy situation of a symbol in a last TO in a TO group. The fourth indication information may indicate the occupancy situation of the time unit in each TO unit in the form of the bit mapping, where "1" indicates occupied, and "0" indicates unoccupied.

### (5) Fifth indication information, where the fifth indication information is used to indicate whether all TO units in a specified duration after a first time are not occupied

In some implementations, the first information received by the network device may include the fifth indication information, and the fifth indication information may be used to indicate whether all TO units in the specified duration after the first time are not occupied. The specified duration may be a duration configured by a high layer signaling, or a duration determined by other ways, which is not limited here.

For example, the fifth indication information may indicate whether all TO units in the specified duration after the first time are not occupied in the form of the bit mapping. Each bit corresponds to a TO unit or a time unit in a TO unit, "1" indicates that none of TO units or time units in TO units in the specified duration after the first time is occupied, and "0" indicates that at least one of TO units or time units in TO units in the specified duration after the first time is occupied.

For example, the fifth indication information may be 1 bit to indicate whether all the TO units in the specified duration after the first time are not occupied. "1" indicates that all the TO units in the specified duration after the first time are not occupied, and "0" indicates that at least one of the TO units in the specified duration after the first time is occupied.

In some implementations, the first information received by the network device may include the fifth indication information, and the fifth indication information may be information related to a specific duration, where the information related to the specific duration may be a specific time, or an index value corresponding to a specific time. The fifth indication information indicates whether all the TO units in the specified duration after the first time are not occupied, which may be defined by a protocol.

### (6) Sixth indication information, where the sixth indication information is used to indicate whether all TO units in a specified duration after a first time are occupied

In some implementations, the first information received by the network device may include the sixth indication information, and the sixth indication information may be used to indicate whether all TO units in a specified duration after the first time are occupied. The specified duration may be a duration configured by a higher layer signaling, or a duration determined by other ways, which is not limited here.

For example, the sixth indication information may indicate whether all TO units in a specified duration after the first time are occupied in the form of the bit mapping. "1" indicates that all TO units in a specified duration after the first time are occupied, and "0" indicates that at least one TO unit in a specified duration after the first time is not occupied.

In some implementations, the first information received by the network device may include the sixth indication information, and the sixth indication information may be information related to a specific duration, where the information related to a specific duration may be a specific time, or an index value corresponding to a specific time. The sixth indication information indicates whether all the TO units in the specified duration after the first time are occupied, which may be defined by a protocol.

### (7) Seventh indication information, where the seventh indication information is used to indicate that a first number of TO units after a first time are not occupied

In some implementations, the first information received by the network device may include the seventh indication information, and the seventh indication information may be used to indicate that the first number of TO units after the first time are not occupied. The first number may be a number configured by a higher layer signaling, or a number determined by other ways, which is not limited here.

In some implementations, in case that the first number of TO units after the first time are not occupied, the first information may include the seventh indication information.

In some implementations, the seventh indication information may indicate that the first number of TO units after the first time are not occupied in the form of the bit mapping. "1" indicates that the first number of TO units after the first time are not occupied, and "0" indicates that at least one of the first number of TO units after the first time is occupied.

In some implementations, the seventh indication information indicates a first number value or an index value corresponding to a first number value, and indicates that the first number of TO units after the first time are not occupied. The seventh indication information may be used to indicate that the first number of TO units after the first time are not occupied, which is defined by a protocol.

### (8) Eighth indication information, where the eighth indication information is used to indicate that a first number of TO units after a first time are occupied

In some implementations, the first information received by the network device may include the eighth indication information, and the eighth indication information may be used to indicate that the first number of TO units after the first time are occupied. The first number may be a number configured by a higher layer signaling, or a number determined by other ways, which is not limited here.

In some implementations, in case that the first number of TO units after the first time are occupied, the first information may include the eighth indication information.

In some implementations, the eighth indication information may indicate that the first number of TO units after the first time are occupied in the form of the bit mapping. "1" indicates that the first number of TO units after the first time are occupied, and "0" indicates that at least one of the first number of TO units after the first time is not occupied.

In some implementations, the eighth indication information indicates a first number value or an index value corresponding to a first number value, and indicates that the first number of TO units after the first time are occupied. The eighth indication information may be used to indicate that the first number of TO units after the first time are occupied, which is defined by a protocol.

### (9) Ninth indication information, where the ninth indication information is used to indicate at least one TO unit for data reception of the network device

In some implementations, the first information received by the network device may include the ninth indication information, and the ninth indication information may be used to indicate the network device to receive data in a specific TO unit.

For example, the ninth indication information may indicate the network device to receive data in a specific TO unit in the form of the bit mapping. "1" indicates that the network device receives data in the TO unit, and "0" indicates that the network device does not receive data in the TO unit.

For example, the ninth indication information may use 1 bit to indicate the network device to receive data in a specific TO unit, such as in a current TO unit or one or more subsequent TO units. "1" indicates that the network device receives data in the specific TO unit, and "0" indicates that the network device does not receive data in the specific TO unit.

### (10) An index value, offset value or identifier code of a starting TO unit in at least one TO unit, and/or an index value, offset value or identifier code of an ending TO unit in at least one TO unit

In some implementations, the first information received by the network device may include an index value, an offset value, or an identifier code of an occupied starting TO unit within one or more CG periods, and/or an index value, an offset value, or an identifier code of an occupied ending TO unit within one or more CG periods. The index value, the offset value, or the identifier code of the TO unit may be used to determine the TO unit or a time domain position of the TO unit.

For example, in case that the first information includes an index value, an offset value, or an identifier code of an occupied starting TO unit within one CG period, the first information may indicate that all TO units within a scaling duration after a time domain position of the starting TO unit are occupied.

For example, in case that the first information includes an index value, an offset value, or an identifier code of an occupied ending TO unit within one CG period, the first information may indicate that all TO units within a scaling duration before a time domain position of the ending TO unit are occupied.

For example, in case that the first information includes an index value, an offset value, or an identifier code of an occupied starting TO unit within one CG period and an index value, an offset value or an identifier code of an occupied ending TO unit, the first information may indicate that all TO units from the starting TO unit to the ending TO unit in the CG period are occupied.

The above-mentioned scaling duration may be a duration agreed by a protocol, configured by a higher layer signaling, or determined by other way, which is not limited here.

### (11) A number of TO units

In some implementations, the first information received by the network device may include the number of occupied TO units in one or more CG periods.

For example, the first information includes that a number of occupied TOs within one CG period is 3, and the first information may indicate that the 3 TOs at specific positions (such as 3 TOs starting from a starting position of the CG period, or last 3 TOs of the CG period) in the CG period are all occupied.

The above-mentioned specific position may be agreed by a protocol, or configured by a higher layer signaling, or determined by other ways, which is not limited here.

The above-mentioned first information may be located within the indicated CG period, or may be located outside the indicated CG period, which is not limited here.

In the methods for uplink transmission indication, the network device receives the first information sent from the terminal, and determines the occupancy situation and/or the non-occupancy situation of at least one TO unit. As such, the unoccupied TO may be allocated more reasonably, which improves utilization of CG transmission resources and avoids resource waste.

In some embodiments, receiving the first information sent from the terminal includes:
receiving the first information sent from the terminal at one or more of following time domain positions.

In an embodiment, in case that the network device receives the first information, the first information may be received at one or more of following time domain positions.

### (1) A starting uplink time unit position of a CG period

In some implementations, the starting uplink time unit position of the CG period may be a starting uplink slot of the CG period, or may be a starting uplink symbol of the CG period.

For example, the network device may receive the first information at a starting uplink slot of one CG period, or the network device may receive the first information at a starting uplink symbol of one CG period.

### (2) An ending uplink time unit position of a CG period

In some implementations, the ending uplink time unit position of the CG period may be an ending uplink slot of the CG period, or may be an ending uplink symbol of the CG period.

For example, the network device may receive the first information at an ending uplink slot of one CG period, or the network device may receive the first information at an ending uplink symbol of one CG period.

### (3) A first uplink time unit position of a CG period, where the first uplink time unit position is an uplink time unit position within the CG period predefined by a protocol or indicated through the network device, and the uplink time unit position is an uplink slot position or an uplink symbol position

In some implementations, the first uplink time unit position of the CG period may be a slot position within the CG period defined by a higher layer signaling and/or configured by a protocol, or may be a symbol position within the CG period defined by a higher layer signaling and/or configured by a protocol.

For example, the network device may receive the first information at a slot position within the CG period defined by a higher layer signaling and/or configured by a protocol, or the network device may receive the first information at a symbol position within the CG period defined by a higher layer signaling and/or configured by a protocol.

### (4) A starting uplink time unit position of a first duration

In some implementations, the first duration may be a period in slot format, or a time domain length occupied by a TO unit. The starting uplink time unit position of the first duration may also be expressed as a starting uplink slot of a period in slot format or a time domain length occupied by a TO unit, or a starting uplink symbol of a period in slot format or a time domain length occupied by a TO unit.

For example, the network device may receive the first information at a starting uplink slot of a period in slot format or a time domain length occupied by a TO unit, or the network device may receive the first information at a starting uplink symbol of a period in slot format or a time domain length occupied by a TO unit.

### (5) An ending uplink time unit position of a first duration

In some implementations, the first duration may be a period in slot format, or a time domain length occupied by a TO unit. The ending uplink time unit position of the first duration may also be expressed as an ending uplink slot of a period in slot format or a time domain length occupied by a TO unit, or an ending uplink symbol of a period in slot format or a time domain length occupied by a TO unit.

For example, the network device may receive the first information at an ending uplink slot of a period in slot format or a time domain length occupied by a TO unit, or the network device may receive the first information at an ending uplink symbol of a period in slot format or a time domain length occupied by a TO unit.

### (6) A second uplink time unit position of a first duration, where the second uplink time unit position is an uplink time unit position within the first duration predefined by a protocol or indicated through the network device

In some implementations, the first duration may be a period in slot format, or a time domain length occupied by a TO unit. The second uplink time unit position of the first duration may be a slot position within the first duration defined by a higher layer signaling and/or configured by a protocol, or may also be a symbol position within the first duration defined by a higher layer signaling and/or configured by a protocol.

For example, the network device may receive the first information at a slot position within the first duration defined by a higher layer signaling and/or configured by a protocol, or the network device may receive the first information at a symbol position within the first duration defined by a higher layer signaling and/or configured by a protocol.

### (7) A time unit position of all or a part of resources configured for a second signaling, where the second signaling carries the first information

In some implementations, the time unit of the resource configured for the first information may be a symbol, a slot, a subframe, a TO group, a TO, a symbol set, etc. The network device may receive the first information on all resources configured for the first information; or the network device may receive the first information on part of the resources configured for the first information, for example, in a case that the terminal sends the first information on demand.

In some embodiments, in case that the network device receives the first information, the first information may indicate an occupancy or non-occupancy situation of the TO unit within a specified duration after the first time.

The specified duration may include one or more of following types.

### (1) M times or 1/M of a CG period, where M is an integer greater than or equal to 1

For example, a time length of a CG period is X ms, a value of M is 2, and a time length indicated by the first information may be 2X ms or X/2 ms, that is, the first information may indicate the occupancy or non-occupancy situation of a TO unit within a time length of 2X ms or X/2 ms after a first time.

### (2) K times or 1/K of a first period, where the first period is a period of an uplink control signaling where the first information is located, where K is an integer greater than or equal to 1

For example, a time length of a first period is Y ms, a value of K is 2, and a time length indicated by the first information may be 2Y ms or Y/2 ms, that is, the first information may indicate the occupancy or non-occupancy situation of a TO unit within a time length of 2Y ms or Y/2 ms after a first time.

### (3) L times or 1/L of an interval between TO groups, where L is an integer greater than or equal to 1

For example, an interval between TO groups is Z ms, a value of L is 2, and a time length indicated by the first information may be 2Z ms or Z/2 ms, that is, the first information may indicate the occupancy or non-occupancy situation of a TO unit within a time length of 2Z ms or Z/2 ms after a first time. The interval between TO groups may be agreed by a protocol or configured by a higher layer signaling, which is not limited here.

### (4) A length of an interval configured through the network device

In some implementations, the network device may also configure the length of the interval of the first information for the terminal, and the terminal may determine the time length of the first information based on the length of the interval of the first information configured through the network device, indicating the occupancy or non-occupancy situation of the TO unit within the time length after the first time.

### (5) A first number of TOs

In some implementations, a first number of TOs may be configured by a higher layer signaling and/or defined by a protocol.

For example, a time length indicated by the first information is 3 TOs, indicating that the first information may indicate the occupancy or non-occupancy situation of the TO unit within the time length of 3 TOs after the first time.

### (6) A duration from a first time to an end of a first CG period

The first information may be used to indicate the occupancy or non-occupancy situation of each TO unit from a transmission time of the first information to an end of the CG period; or, the first information may be used to indicate the occupancy or non-occupancy situation of each TO unit from an valid time of the first information to an end of the CG period; or, the first information may also be used to indicate the occupancy or non-occupancy situation of each TO unit from a time when the terminal receives HARQ-ACK information corresponding to the first information fed back from the network device to an end of the CG period.

In some embodiments, receiving the first information sent from the terminal includes:
receiving, through a second signaling, the first information sent from the terminal, where the second signaling includes an uplink control signaling and/or a medium access control (MAC) signaling.

In an embodiment, in case of receiving the first information, the network device may receive the first information through the uplink control signaling (e.g., UCI) and/or the MAC signaling.

In some implementations, in case of receiving the first information, the network device may receive the first information only through the uplink control signaling.

In some implementations, in case of receiving the first information, the network device may receive the first information only through the MAC signaling.

In some implementations, in case of receiving the first information, the network device may also receive a part of the first information through the uplink control signaling and receive another part of the first information through the MAC signaling.

In some embodiments, the uplink control signaling includes one or more of:
an uplink control signaling carried on a configured grant (CG) enhancement dedicated physical uplink control channel (PUCCH); or
an uplink control signaling carried on a configured grant (CG) physical uplink shared channel (PUSCH).

In an embodiment, in case that the network device receives the first information through the UCI, the UCI may be one or more of UCI carried on a CG enhancement dedicated PUCCH, or UCI carried on a CG PUSCH.

In some implementations, in case that the network device receives the first information through the UCI, the first information may be received only through the UCI carried on the CG enhancement dedicated PUCCH.

In some implementations, in case that the network device receives the first information through the UCI, the first information may be received only through the UCI carried on the CG PUSCH.

In some implementations, in case that the network device receives the first information through UCI, a part of the first information may be received through the UCI carried on the CG PUSCH, and another part of the first information may be received through the UCI carried on the CG enhancement dedicated PUCCH.

In some embodiments, the method further includes:
sending first resource information to the terminal, where the first resource information is used to configure at least one of a time domain resource, a frequency domain resource, or a spatial domain resource of a first signaling,
where the first signaling includes at least one of the uplink control signaling, the MAC signaling, or hybrid automatic repeat request acknowledgement (HARQ-ACK) information corresponding to the first information.

In an embodiment, the network device may send the first resource information to the terminal, and the first resource information may be used to configure at least one of the time domain resource, the frequency domain resource, or the spatial domain resource of the first signaling. The first signaling includes at least one of the uplink control signaling, the MAC signaling, or the HARQ-ACK information corresponding to the first information.

In some embodiments, the first resource information includes one or more of following.

### (1) An identifier for indicating that the first information is transmitted through at least one of a physical uplink control channel (PUCCH), a physical uplink shared channel (PUSCH), or an MAC signaling

In some implementations, the signaling resource information may include an identifier for indicating transmission of the first information, and the network device may configure, through the identifier, that the first information being transmitted on at least one of a CG enhancement dedicated PUCCH, a CG PUSCH, or an MAC signaling.

For example, the network device may configure, through the identifier, that the first information being transmitted on the CG enhancement dedicated PUCCH; or
the network device may configure, through the identifier, that the first information being transmitted on the CG PUSCH;
the network device may configure, through the identifier, that the first information being transmitted on the MAC signaling;
the network device may configure, through the identifier, that the first information being transmitted on the CG enhancement dedicated PUCCH and the CG PUSCH;
the network device may configure, through the identifier, that the first information being transmitted on the CG enhancement dedicated PUCCH and the MAC signaling;
the network device may configure, through the identifier, that the first information being transmitted on the CG PUSCH and the MAC signaling;
the network device may configure, through the identifier, that the first information being transmitted on the CG enhancement dedicated PUCCH, the CG PUSCH, and the MAC signaling.

### (2) Resource information of a physical uplink control channel (PUCCH) where the first information is located

In some embodiments, the signaling resource information may include the resource information of the PUCCH where the first information is located. The network device may configure at least one of the time domain resource, the frequency domain resource, or the spatial domain resource of the UCI through the resource information of the PUCCH where the first information is located.

### (3) Information of a resource where the first information is located

In some embodiments, the signaling resource information may include the information of the resource where the first information is located on the PUSCH. The network device may configure at least one of the time domain resource, the frequency domain resource, or the spatial domain resource of the UCI through the information of the resource where the first information is located.

### (4) Resource information of an MAC signaling where the first information is located

In some embodiments, the signaling resource information may include resource information of the MAC signaling where the first information is located. In case that the terminal includes the first information in the MAC signaling and sends it to the network device, at least one of the time domain resource, the frequency domain resource, or the spatial domain resource of the MAC signaling may be determined based on the resource information of the MAC signaling where the first information is located.

### (5) Resource information of the HARQ-ACK information corresponding to the first information

In some implementations, after receiving the first information sent from the terminal, the network device may send the HARQ-ACK information corresponding to the first information to the terminal, and the signaling resource information may also include the resource information of the HARQ-ACK information corresponding to the first information. The network device may configure at least one of the time domain resource, the frequency domain resource, or the spatial domain resource of the HARQ-ACK information corresponding to the first information through the resource information of the HARQ-ACK information corresponding to the first information.

In some embodiments, the resource information of the PUCCH where the first information is located includes one of more of following.

### (1) A PUCCH resource set identifier or a PUCCH resource list index

In some implementations, the network device may configure the resource information of the PUCCH where the first information is located through the PUCCH resource set identifier or the PUCCH resource list index.

### (2) A starting resource block (RB) of a frequency domain resource of the PUCCH

In some implementations, the network device may configure the resource information of the PUCCH where the first information is located through the starting RB of the frequency domain resources of the PUCCH.

### (3) At least one of a number of resource blocks (RBs), an RB set, or an RB set index included in a frequency domain resource of the PUCCH

In some implementations, the network device may configure the resource information of the PUCCH where the first information is located through at least one of the number of RBs, the RB set, or the RB set index included in the frequency domain resources of the PUCCH.

### (4) A format of the uplink control signaling

In some implementations, the network device may configure the resource information of the PUCCH where the first information is located through the format of the uplink control signaling.

### (5) Resource information of a demodulation reference signal (DMRS) associated with the PUCCH

In some implementations, the network device may configure the resource information of the PUCCH where the first information is located through the resource information of the DMRS associated with the PUCCH.

### (6) Frequency hopping information of the PUCCH

In some implementations, the network device may configure the resource information of the PUCCH where the first information is located through the frequency hopping information of the PUCCH.

### (7) A period and/or an offset of the PUCCH

In some implementations, the network device may configure the resource information of the PUCCH where the first information is located through the period and/or the offset of the PUCCH.

### (8) A slot or a TO where the PUCCH is located

In some implementations, the network device may configure the resource information of the PUCCH where the first information is located through the slot or the TO where the PUCCH is located.

### (9) At least one of a symbol position where the PUCCH is located, a number of symbols occupied by the PUCCH, a starting symbol where the PUCCH is located, or an ending symbol where the PUCCH is located

In some implementations, the network device may configure the resource information of the PUCCH where the first information is located through at least one of the symbol position where the PUCCH is located, the number of symbols occupied by the PUCCH, the starting symbol where the PUCCH is located, or the ending symbol where the PUCCH is located.

### (10) Power control information of the PUCCH

In some implementations, the network device may configure the resource information of the PUCCH where the first information is located through the power control information of the PUCCH.

### (11) Multiplexed first information of the PUCCH and at least one of a hybrid automatic repeat request (HARQ), channel state information (CSI), or a scheduling request (SR)

In some implementations, the network device may configure the resource information of the PUCCH where the first information is located through the multiplexed first information of the PUCCH and at least one of the HARQ, the CSI, or the SR.

### (12) A payload size of the uplink control signaling, or a size of an information field for the first information in the uplink control signaling

In some implementations, the network device may configure the resource information of the PUCCH where the first information is located through the payload size of the uplink control signaling, or the size of the information field for the first information in the uplink control signaling.

### (13) Spatial related information of the PUCCH

In some implementations, the network device may configure the resource information of the PUCCH where the first information is located through the spatial related information of the PUCCH.

### (14) A coding or modulation scheme of the uplink control signaling

In some implementations, the network device may configure the resource information of the PUCCH where the first information is located through the coding or modulation scheme of the uplink control signaling.

### (15) An offset of at least one of a slot, a TO unit, or a symbol associated with the uplink control signaling

In some implementations, the network device may configure the resource information of the PUCCH where the first information is located through the offset of at least one of the slot, the TO unit, or the symbol associated with the uplink control signaling.

In some embodiments, the information of the resource where the first information is located includes one or more of following.

In an embodiment, the information of the resource where the first information is located may be information of the resource where the first information is located on the CG PUSCH. The information of the resource where the first information is located may include one or more of the following.

### (1) A starting resource block (RB) of a frequency domain resource where the first information is located

In some implementations, the network device may configure the information of the resource where the first information is located through the RB of the frequency domain resource where the first information is located.

### (2) At least one of a number of resource blocks (RBs), an RB set, or an RB set index included in a frequency domain resource where the first information is located

In some implementations, the network device may configure the information of the resource where the first information is located through at least one of the number of RBs, the RB set, or the RB set index included in the frequency domain resource where the first information is located.

### (3) Resource information of a demodulation reference signal (DMRS) associated with a resource where the first information is located

In some implementations, the network device may configure the information of the resource where the first information is located through the resource information of the DMRS associated with the resource where the first information is located.

### (4) Frequency hopping information of a resource where the first information is located

In some implementations, the network device may configure the information of the resource where the first information is located through the frequency hopping information of the resource where the first information is located.

### (5) A period and/or an offset of a resource where the first information is located

In some implementations, the network device may configure the information of the resource where the first information is located through the period and/or the offset of the resource where the first information is located.

### (6) A slot or a TO where the first information is located

In some implementations, the network device may configure the information of the resource where the first information is located through the slot or the TO where the first information is located.

### (7) At least one of a symbol position where the first information is located, a number of symbols occupied by the first information, a starting symbol where the first information is located, or an ending symbol where the first information is located

In some implementations, the network device may configure the information of the resource where the first information is located through at least one of the symbol position where the first information is located, the number of symbols occupied by the first information, the starting symbol where the first information is located, or the ending symbol where the first information is located.

### (8) Power control information of a resource where the first information is located

In some implementations, the network device may configure the information of the resource where the first information is located through the power control information of the resource where the first information is located.

### (9) Multiplexed first information of a resource where the first information is located and at least one of a hybrid automatic repeat request (HARQ), channel state information (CSI), or a scheduling request (SR)

In some implementations, the network device may configure the information of the resource where the first information is located through the multiplexed first information of the resource where the first information is located and at least one of the HARQ (the HARQ here is an HARQ for downlink transmission), the CSI, or the SR.

### (10) A payload size of a resource where the first information is located, or a size of an information field for the first information

In some implementations, the network device may configure the information of the resource where the first information is located through the payload size of the resource where the first information is located, or the size of the information field for the first information.

### (11) Spatial related information of a resource where the first information is located

In some implementations, the network device may configure the information of the resource where the first information is located through the spatial related information of the resource where the first information is located.

### (12) A coding or modulation scheme of a resource where the first information is located

In some implementations, the network device may configure the information of the resource where the first information is located through the coding or modulation scheme of the resource where the first information is located.

### (13) An offset of at least one of a slot, a TO unit, or a symbol associated with a resource where the first information is located

In some implementations, the network device may configure the information of the resource where the first information is located through the offset of at least one of the slot, the TO unit, or the symbol associated with the resource where the first information is located.

In some embodiments, the resource information of the MAC signaling where the first information is located includes one or more of following.

### (1) A size of an information field for the first information in the MAC signaling

In some implementations, the network device may configure the resource information of the MAC signaling where the first information is located through the size of the information field for the first information in the MAC signaling.

### (2) A TO unit corresponding to each bit or each byte in an information field for the first information in the MAC signaling

In some implementations, the network device may configure the resource information of the MAC signaling where the first information is located through the TO unit corresponding to each bit or each byte in the information field for the first information in the MAC signaling.

In some embodiments, the resource information of the HARQ-ACK information corresponding to the first information includes one or more of following.

### (1) A time domain position for sending the HARQ-ACK information corresponding to the first information

In some implementations, the network device may configure the resource information of the HARQ-ACK information corresponding to the first information through the time domain position for sending the HARQ-ACK information corresponding to the first information.

### (2) A frequency domain position for sending the HARQ-ACK information corresponding to the first information

In some implementations, the network device may configure the resource information of the HARQ-ACK information corresponding to the first information through the frequency domain position for sending the HARQ-ACK information corresponding to the first information.

### (3) Spatial related information of the HARQ-ACK information corresponding to the first information

In some implementations, the network device may configure the resource information of the HARQ-ACK information corresponding to the first information through the spatial related information of the HARQ-ACK information corresponding to the first information.

### (4) A size of an information field for the HARQ-ACK information corresponding to the first information

In some implementations, the network device may configure the resource information of the HARQ-ACK information corresponding to the first information through the size of the information field for the HARQ-ACK information corresponding to the first information.

### (5) A TO unit associated with the HARQ-ACK information corresponding to the first information

In some implementations, the network device may configure the resource information of the HARQ-ACK information corresponding to the first information through the TO unit associated with the HARQ-ACK information corresponding to the first information.

### (6) A format of downlink control information (DCI) where the HARQ-ACK information corresponding to the first information is located

In some implementations, the network device may configure the resource information of the HARQ-ACK information corresponding to the first information through the format of the DCI where the HARQ-ACK information corresponding to the first information is located.

### (7) Search space set information associated with downlink control information (DCI) where the HARQ-ACK information corresponding to the first information is located

In some implementations, the network device may configure the resource information of the HARQ-ACK information corresponding to the first information through the search space set information associated with the DCI where the HARQ-ACK information corresponding to the first information is located.

### (8) A timer associated with the HARQ-ACK information corresponding to the first information

In some implementations, the network device may configure the resource information of the HARQ-ACK information corresponding to the first information through the timer associated with the HARQ-ACK information corresponding to the first information.

In some embodiments, the method further includes one or more of:
after a second time, receiving or scheduling, on an unoccupied TO unit indicated by the first information, uplink services of other terminals except the terminal; and/or
before a second time, receiving or scheduling, not on an unoccupied TO unit indicated by the first information, uplink services of other terminals except the terminal;
where the second time includes at least one of:
   a transmission time of the first information;
   an valid time of the first information;
   a time when the terminal receives hybrid automatic repeat request acknowledgement (HARQ-ACK) information corresponding to the first information fed back from the network device; or
   a time when a timer used for indicating an valid time of the first information expires.

In an embodiment, after receiving the first information, after the second time, the network device may receive or schedule, on the unoccupied TO unit indicated by the first information, uplink services of other terminals except the terminal, and/or may receive or schedule, not on the unoccupied TO unit indicated by the first information, uplink services of other terminals except the terminal.

The second time includes at least one of:
the transmission time of the first information;
the valid time of the first information;
the time when the terminal receives the HARQ-ACK information corresponding to the first information fed back from the network device; or
the time when the timer used for indicating the valid time of the first information expires.

In some implementations, the network device may configure the valid time of the first information for the terminal, or a protocol may agree on the valid time of the first information, or the terminal may report the valid time of the first information to the network device.

In some embodiments, the network device may determine the valid time of the first information based on a capability of the terminal.

In some implementations, the terminal may report the capability of the terminal to the network device, and the network device may configure the valid time of the first information based on a received capability of the terminal.

In some embodiments, the timer used for indicating the valid time of the first information is configured by a higher layer signaling or predefined by a protocol.

In some implementations, the timer used for indicating the valid time of the first information may be configured by the higher layer signaling or predefined by the protocol.

In some embodiments, any CG period includes N TOs, and the N TOs are used to send at least one transport block (TB), where N is an integer greater than or equal to 1.

In an embodiment, any CG period may include N TOs, where N is an integer greater than or equal to 1. The number of TOs included in the CG period may be configured through the network device. The N TOs may be used to send at least one TB.

For example, one CG period includes 6 TOs, and it may be that each TO may send a TB, or a first TO and a second TO send a TB, and a third TO and a fourth TO send a TB.

In some embodiments, the N TOs satisfy one or more of the following.

In an embodiment, in case that the network device configures N TOs for the CG period, the N TOs may satisfy one or more of following.

### (1) The N TOs are N adjacent uplink time unit sets.

In some implementations, the N TOs may be N adjacent uplink time unit sets, and the time unit set may be a slot set or a symbol set. The adjacent may refer to two uplink time unit sets being adjacent in the time domain, or may refer to no data transmission is performed in an uplink time unit set between the two uplink time unit sets.

### (2) The N TOs are N uplink time unit sets with a first interval.

In some implementations, the N TOs may be N uplink time unit sets with the first interval, and the time unit set may be a slot set or a symbol set. The first interval may be an interval configured by a higher layer signaling or defined by a protocol.

### (3) The N TOs are N uplink time unit sets at a first time domain position.

In some implementations, the N TOs may be N uplink time unit sets at the first time domain position, and the time unit set may be a slot set or a symbol set. The first time domain position may be a time domain position uniformly distributed within one CG period, or may be a time domain position closest to a starting position of one CG period, or may be a time domain position closest to an ending position of one CG period.

### (4) Symbol positions occupied by the N TOs in different slots are same.

In some embodiments, the symbol positions occupied by the N TOs in different slots may be the same.

For example, each TO occupies first 3 symbols in its slot.

### (5) A number of symbols occupied by the N TOs is same.

In some embodiments, the number of symbols occupied by the N TOs in different slots may be the same.

For example, a part of TOs occupies first 3 symbols in its slot, and another part of the TOs occupies last 3 symbols in its slot.

### (6) Symbol positions occupied by the N TOs are independent of each other, and each of the N TOs is prohibited from crossing a slot.

In some embodiments, the symbol positions occupied by the N TOs may be independent of each other (i.e., there is no correlation between the symbol positions occupied by each TO), and each TO is prohibited from crossing a slot.

### (7) Symbol positions occupied by the N TOs are independent of each other, each of the N TOs is allowed to cross a slot, and a second interval exists between different TOs in a same slot.

In some embodiments, the symbol positions occupied by the N TOs may be independent of each other (i.e., there is no correlation between the symbol positions occupied by each TO), each TO is allowed to cross a slot, different TOs in the same slot have a second interval, and the second interval is greater than 0.

In some embodiments, after receiving the first information sent from the terminal, the method further includes:
sending hybrid automatic repeat request acknowledgement (HARQ-ACK) information corresponding to the first information to the terminal.

In an embodiment, after receiving the first information, the network device may send the HARQ-ACK information corresponding to the first information to the terminal.

In some embodiments, sending the HARQ-ACK information corresponding to the first information to the terminal includes:
before a timer associated with the HARQ-ACK information corresponding to the first information expires, sending the HARQ-ACK information corresponding to the first information to the terminal.

In an embodiment, the timer associated with the HARQ-ACK information corresponding to the first information may be configured by a higher layer signaling and/or predefined by a protocol. Before the timer associated with the HARQ-ACK information corresponding to the first information expires, the network device may send the HARQ-ACK information corresponding to the first information to the terminal. After the timer associated with the HARQ-ACK information corresponding to the first information expires, the network device no longer sends the HARQ-ACK information corresponding to the first information to the network device.

The methods provided by the embodiments of the present application are based on the same conception, the implementations of the methods may be referred to each other, and the same part is not repeated.

The following are examples of embodiments of specific application scenarios to illustrate the methods provided by the above embodiments of the present application.

Embodiment 1: multiple transmission occasions within one CG period may be used for uplink data transmission.

FIG. 3 is a schematic diagram of configuring multiple transmission occasions (TOs) within one configured grant (CG) period according to an embodiment of the present application. As shown in FIG. 3, in case that a base station configures a CG configuration for a terminal, one CG period may be configured with N transmission occasions for transmitting PUSCH data (D represents non-transmission occasion, and U represents transmission occasion), the N transmission occasions may have at least one of following characteristics:
the N candidate transmission occasions are N adjacent uplink slots/symbol sets;
the N candidate transmission occasions are N uplink slots/symbol sets with a specific interval, where the specific interval may be configured by a higher layer signaling or defined by a protocol;
the N candidate transmission occasions are uplink slots/symbol sets of a specific slot/symbol position, such as: N uplink slots/symbol sets evenly distributed in one CG period, or N uplink slots/symbol sets closest to a starting position of one CG period, or N uplink slots/symbol sets closest to an end position of one CG period;
symbol positions/number of symbols of the N candidate transmission occasions in different slots are same;
(note: for a case where the symbol positions/number of symbols of the N candidate transmission occasions in different slots are same, a case where some symbols are unavailable due to resource conflicts or specific circumstances is not included)
all symbol positions in the N candidate transmission occasions are separate from each other, and each transmission occasion cannot cross a slot; or
all symbol positions in the N candidate transmission occasions are separate from each other, each transmission occasion may cross a slot, different transmission occasions have a certain interval in a same slot, and the interval is greater than or equal to 0.

The terminal may send at least one data transmission block in one CG period, and each data transmission block occupies at least one transmission occasion, as shown in case a and case b in FIG. 3. The terminal may send at least one data transmission block (TB) in any transmission occasion in one CG period, and may also send at least one data transmission block in a transmission occasion at a specific time position. The at least one data transmission block used by the terminal for data transmission may be a part of transmission occasions or all of transmission occasions in one CG period.

The terminal feeds back indication information of CG transmission occasion occupancy to the base station, which is used to indicate a usage situation of at least one transmission occasion in one CG period. The indication information of CG transmission occasion occupancy may be carried by a related transmission resource of a piece of UCI configured by the base station, and/or MAC information. The indication information of CG transmission occasion occupancy may also be a piece of UCI sent in an XR dedicated PUCCH, and/or a piece of UCI sent in a CG PUSCH.

Embodiment 2: a base station configures a resource where a related signaling carrying indication information of CG transmission occasion occupancy is located.

Resource information of a signaling related to the indication information of CG transmission occasion occupancy configured by the base station for a terminal includes at least one type of a time domain, a frequency domain or a spatial domain, as follows:
an identifier of a piece of UCI transmitted in a PUCCH and/or a PUSCH and/or an MAC layer information;
a resource set of the PUCCH and/or the PUSCH where the UCI is located, including at least one of following:
   an index of a PUCCH resource set identifier (ID)/a resource list where the PUCCH resource is located;
   a starting RB of a frequency domain resource where the indication information is located;
   a number of RBs/RB sets/RB set index of a frequency domain resource where the indication information is located;
   a format of the PUCCH;
   resource information of a DMRS associated with the PUCCH/PUSCH;
   frequency hopping information of the PUCCH/PUSCH;
   a period and/or an offset of the PUCCH/PUSCH;
   a slot/transmission occasion where the PUCCH/PUSCH is located;
   a symbol position/a number of symbols/a starting symbol/an ending symbol where the PUCCH/PUSCH is located;
   power control related information of the PUCCH/PUSCH;
   multiplexing indication information of the PUCCH/PUSCH and at least one of an HARQ/CSI/SR;
   a payload size of the PUCCH/PUSCH, or a size of an information field for the indication information occupied by the CG transmission occasion;
   spatial related information of the PUCCH/PUSCH, such as: related information of an associated reference signal, etc.;
   a coding/modulation scheme of the PUCCH/PUSCH, etc.; or
   an offset of a specific slot/specific transmission occasion/specific symbol associated with the PUCCH/PUSCH.

The resource set of the MAC layer information where the UCI is located includes at least one of following:
a size of an information field for the indication information occupied by the CG transmission occasion; or
a transmission occasion/transmission occasion group corresponding to each bit/byte of an information field for the indication information occupied by the CG transmission occasion.

Based on a configuration of resource information carrying a signaling related to the indication information of CG transmission occasion occupancy, the terminal may send the indication information of CG transmission occasion occupancy on a corresponding resource (at least including a specific time position described below). The indication information may be sent fixedly, that is, the indication information of CG transmission occasion occupancy must be sent on each configured resource; or it may be sent on demand, that is, the terminal sends the indication information of CG transmission occasion occupancy only when an indication is needed or when a specific condition is met.

The following are examples of sending of the signaling related to the indication information of CG transmission occasion occupancy:
an occupancy situation of each transmission occasion/transmission occasion group within a specific time is sent at a specific time position, where the specific time is at least one of following:
N times or 1/N of a CG period, where N is an integer greater than or equal to 1;
N times or 1/N of a period of a piece of UCI where the indication information of CG transmission occasion occupancy is located, where N is an integer greater than or equal to 1;
N times or 1/N of an interval where a CG transmission occasion group is located, where N is an integer greater than or equal to 1;
an interval configured by the base station;
a number of specific CG transmission occasions; or
a duration from a sending time/valid time of the indication information of CG transmission occasion occupancy to an end of one CG period, etc.

The indication information of CG transmission occasion occupancy includes at least one of following:
an occupancy situation of one or a specific number of CG transmission occasions or transmission occasion groups after a time when the indication information of CG transmission occasion occupancy is sent/effective, such as: "1" for occupancy, and "0" for non-occupancy;
a specific resource occupancy situation within a CG transmission occasion, for example, a usage situation of a symbol or a symbol group within the transmission occasion, such as: "1" for occupancy, and "0" for non-occupancy;
whether a transmission occasion after a time when the indication information of CG transmission occasion occupancy being sent/effective is released or not used;
whether a transmission occasion after a time when the indication information of CG transmission occasion occupancy being sent/effective has data transmission, where "1" means there is data, and "0" means there is no data; or
a specific number of transmission occasions after a time when the indication information of CG transmission occasion occupancy being sent/effective is not occupied.

An occupancy situation of each transmission occasion/each transmission occasion group/a specific resource in each transmission occasion is derived, including at least one of:
an index value or an offset value or an identifier code of a starting transmission occasion and/or an end transmission occasion used in a CG period; or
a number of transmission occasions used in a CG period.

Embodiment 3: for transmission resources in a unit of transmission occasion (TO), a specific TO indication is performed.

In case that a transmission resource of uplink data is in a unit of TO, indication information of CG transmission occasion occupancy indicates a specific usage of TO. This embodiment mainly uses an indication content of an information field for the indication information of CG transmission occasion occupancy as an example, and a piece of UCI may be sent on PUCCH and/or PUSCH.

Case 1.a: a piece of UCI is sent at a starting uplink slot/symbol of each CG period to indicate a usage situation of TO in the period. For example: a bit mapping indicates a usage situation of each transmission occasion/transmission occasion group in the CG period, where "1" means being occupied, and "0" means not occupied.

Taking an information field of a piece of UCI carrying indication information of CG transmission occasion occupancy as an example, the UCI includes N bits, and each bit corresponds to one TO.

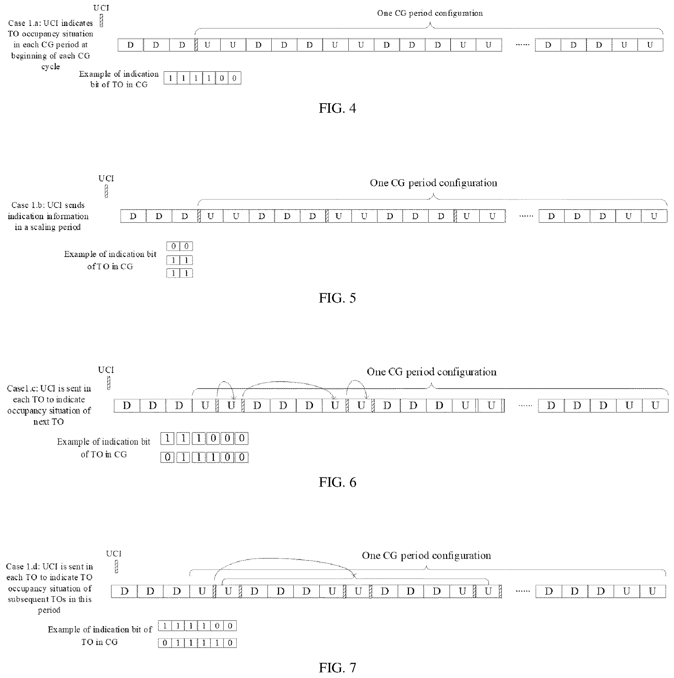

FIG. 4 is a first schematic diagram of indication information indicating an occupancy situation of a TO according to an embodiment of the present application. As shown in FIG. 4, a base station configures 6 TOs in one CG period. When a terminal transmits data, based on data in a buffer area, only 4 TOs are needed. Information of the indication information of CG transmission occasion occupancy carried by the UCI is: 111100 (D represents non-transmission occasion, and U represents transmission occasion).

The UCI may also indicate a usage situation of TOs in a period at an ending position of each CG period. The terminal only uses an uplink slot or an uplink symbol close to an ending position of the CG period for data transmission.

The UCI may also be sent in a specific number of slots or uplink slots/symbols before one CG period to indicate a usage situation of TO in a subsequent CG period.

The above-mentioned indication information of CG transmission occasion occupancy may also be used to indicate the base station to receive data from a specific transmission occasion, such as: "1" for receiving, and "0" for not receiving.

Example of a special case: in case that uplink data arrives earlier than one CG period, the terminal may indicate a usage situation of transmission occasion based on an amount of data in a buffer; in case that uplink data arrives later than one CG period, the terminal can may a default value in the UCI, such as: all "1" values.

Case 1.b: a piece of UCI where the indication information of CG transmission occasion occupancy is located is sent in a scaling period, such as: a slot format, or a TO subset. The indication information of CG transmission occasion occupancy includes K bits, each bit corresponding to a usage situation of TO in a scaling period.

FIG. 5 is a second schematic diagram of indication information indicating an occupancy situation of a TO according to an embodiment of the present application. As shown in FIG. 5, a piece of UCI is sent once every 5 slots, and an indication information field for CG transmission occasion occupancy in the UCI is 2 bits (D represents non-transmission occasion, and U represents transmission occasion).

In addition, the indication information of CG transmission occasion occupancy may also be used to jointly indicate at least one TO in a scaling period. Taking FIG. 5 as an example, the indication information field for CG transmission occasion occupancy in each UCI is 1 bit, "1" means that at least one TO is occupied in a scaling period, and "0" means that at least one TO is not occupied in a scaling period.

A situation where the indication information is inaccurate due to a delay jitter may be dealt with to a certain extent. In case that resources are limited, this method may also reduce signaling overhead.

Case 1.c: a piece of UCI where the indication information of CG transmission occasion occupancy is located is sent at each transmission occasion, and the indication information of CG transmission occasion occupancy is used to indicate whether a next transmission occasion is used. The UCI includes 1 bit, which corresponds to whether the next TO has data, where "1" means there is data, and "0" means there is no data. There is at least one of following indication methods.

Alt1: FIG. 6 is a third schematic diagram of indication information indicating an occupancy situation of a TO according to an embodiment of the present application. As shown in FIG. 6, each TO sends a piece of UCI to indicate whether a next TO has data. In this method, regardless of whether there is data, the terminal sends the UCI (D represents non-transmission occasion, U represents transmission occasion).

Alt2: the terminal sends a piece of UCI only when there is data; and the terminal does not send a piece of UCI when there is no data to be sent. When data arrives, the indication information of CG transmission occasion occupancy indicates whether a next TO has data.

Case1.d: a piece of UCI where the indication information of CG transmission occasion occupancy is located is sent in each TO. The indication information of CG transmission occasion occupancy indicates a usage situation of TO after this period, that is, an occupancy situation of TO in a duration from a time when information is sent/effective to an end of one CG period.

Alt1: FIG. 7 is a fourth schematic diagram of indication information indicating an occupancy situation of a TO according to an embodiment of the present application. As shown in FIG. 7, the indication information of CG transmission occasion occupancy includes N bits, and each bit mapping indicates a usage situation of at least one subsequent TO. Each bit corresponds to a usage situation of a transmission occasion/transmission occasion group, where "1" means being occupied, and "0" means not occupied (D represents non-transmission occasion, and U represents transmission occasion).

Alt2: the indication information of CG transmission occasion occupancy includes 1 bit, which is used to indicate whether subsequent TOs are released, where "1" means release, and "0" means not release.

Case1.e: a piece of UCI where the indication information of CG transmission occasion occupancy is located is sent only in a last data packet, that is, it is sent together with a PUSCH. The indication information of CG transmission occasion occupancy is used to indicate whether a subsequent TO is to be released. There is at least one of following methods.

Alt1: the terminal sends a piece of UCI in a last data packet to indicate whether a subsequent TO is released in a CG period. In case that the subsequent TO is not released, the terminal does not send the UCI. The base station determines whether the subsequent TO may be multiplexed based on whether the UCI is received. In case that a piece of UCI is detected, it means that the subsequent TO is released in the CG period; otherwise, the subsequent TO has data.

Alt2: the terminal sends a piece of UCI in a last data packet. The UCI includes 1 bit, where "1" indicates that the subsequent TO may be released, and "0" indicates that the subsequent TO has data.

A piece of UCI carrying the indication information of CG transmission occasion occupancy may be a joint indication of PUCCH and CG-UCI (PUSCH). Examples are as follows.

A piece of UCI on a PUCCH indicates whether there is indication information of CG transmission occasion occupancy, such as there is 1 bit, where "1" indicates that there is indication information of CG transmission occasion occupancy, and "0" indicates that there is no indication information of CG transmission occasion occupancy. In case that the UCI on the PUCCH indicates that there is a piece of UCI indication on PUCCH, a corresponding CG-UCI may indicate a specific TO usage situation.

A piece of UCI on a PUCCH indicates whether there is a CG transmission occasion release, such as there is 1 bit, where "1" indicates that there is resource release, and "0" indicates that there is no resource release. In case that the UCI on the PUCCH indicates that there is a CG transmission occasion release, a corresponding CG-UCI may indicate a specific TO usage situation.

A piece of UCI carrying the indication information of CG transmission occasion occupancy is selected as PUCCH or CG-UCI based on a number of transmission occasions/transmission occasion groups. For example: in case that a number of transmission occasions /transmission occasion groups is less than a specific threshold, a PUCCH is used to carry the indication information of CG transmission occasion occupancy; otherwise, a piece of CG-UCI is used to carry the indication information of CG transmission occasion occupancy.

Embodiment 4: in case that a transmission resource is divided into a unit of symbol sets within a TO, a usage of a TO and a symbol set within the TO need to be indicated.

In case that the transmission resource is divided into the unit of symbol sets within a TO, the usage of the TO and the symbol sets within the TO need to be indicated. The indication information of CG transmission occasion occupancy adopts a two-level indication method, and specific examples are as follows.

Case 1.a: a piece of UCI carrying the indication information of CG transmission occasion occupancy indicates a usage situation of TO within a period at a beginning of each CG period.

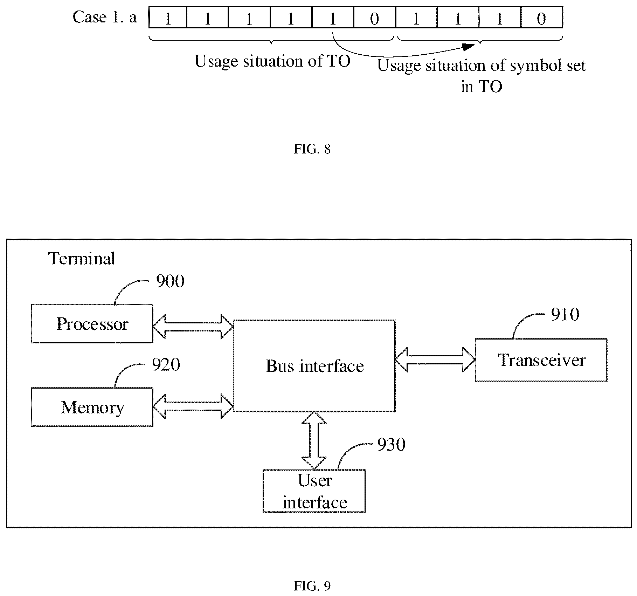

In case that a data packet arrives before a CG period, a specific indication of TO usage situation is made based on an amount of data in a buffer. FIG. 8 is a fifth schematic diagram of indication information indicating an occupancy situation of a TO according to an embodiment of the present application. As shown in FIG. 8, in this example, a piece of UCI is transmitted in a last TO, N bits of indication information of CG transmission occasion occupancy in the UCI corresponds to a usage situation of each TO, and M bits of indication information of CG transmission occasion occupancy corresponds to a symbol set usage situation of a last occupied TO, where "1" indicates that the TO is occupied, and "0" indicates that the TO is not occupied.

Case 1.b: a piece of UCI carrying the indication information of CG transmission occasion occupancy indicates in each scaling period, such as: a slot format, or a TO subset, or each TO. The information indicated by the UCI is the same as that in Case 1.a, there are N bits corresponding to each scaling period, and M bits corresponding to a usage situation of a symbol set in a last TO.

For example: each UCI indicates a usage situation of a current TO, and M bits correspond to a usage situation of a symbol set in a TO, where "1" indicates that the TO is occupied, and "0" indicates that the TO is not occupied.

In some embodiments, a PUCCH carries 1 bit of usage situation for a current TO, where "1" indicates that the TO is occupied, and "0" indicates that the TO is not occupied. A usage situation of a symbol set in a corresponding transmission occasion is indicated by the indication information of CG transmission occasion occupancy carried by a piece of CG-UCI.

Case 1.c: a piece of UCI where the indication information of CG transmission occasion occupancy is located is sent in each transmission occasion, and the indication information of CG transmission occasion occupancy is used to indicate whether a next transmission occasion is used.

Information indicated by the UCI is a usage situation of a symbol set in a next TO, where M bits correspond to a usage situation of symbol set in the TO respectively, "1" indicates that the TO is occupied, and "0" indicates that the TO is not occupied.

Case1.d: a piece of UCI where the indication information of CG transmission occasion occupancy is located is sent in each TO. The indication information of CG transmission occasion occupancy indicates a usage situation of subsequent TOs in this period, that is, an occupancy situation of TO from an information sending time/valid time to an end of a CG period.

The information indicated by UCI may be the same as Case1.a, there are N bits corresponding to each scaling period, and M bits corresponding to a usage situation of a symbol set in a last TO.

Case1.e: a piece of UCI where the indication information of CG transmission occasion occupancy is located is only sent in a last data packet, that is, sent together with a PUSCH.

The indication information of CG transmission occasion occupancy includes (1+M) bits, where 1 bit indicates a current last data packet, there is no subsequent data packet, other TOs in this period may be released, and M bits indicate which symbol sets are occupied by a current TO.

In some embodiments, a piece of UCI indicates a usage situation of each TO corresponding to N bits, and a usage situation of a symbol set of a last occupied TO is read through an MAC control element (MAC CE), such as M bits of indication information of CG transmission occasion occupancy corresponding to the usage situation of the symbol set of the last occupied TO.

In some embodiments, a PUCCH carries a usage situation of each TO corresponding to N bits, and a usage situation of a symbol set in a corresponding transmission occasion is indicated through the indication information of CG transmission occasion occupancy carried by a piece of CG-UCI, such as M bits of indication information of CG transmission occasion occupancy corresponding to the usage situation of the symbol set of the last occupied TO.

Embodiment 5: an valid time of indication information of CG transmission occasion occupancy.

The valid time of the indication information of CG transmission occasion occupancy refers to:
after the valid time of the indication information of CG transmission occasion occupancy, a terminal may no longer transmit data in an unoccupied transmission occasion.

Before the valid time of the indication information of CG transmission occasion occupancy, the terminal may send the indication information of CG transmission occasion occupancy again, and content indicated by the information may be same as or different from a previously sent indication information of CG transmission occasion occupancy.

For example: in case that the indication information of CG transmission occasion occupancy of the terminal indicates that at least one subsequent CG transmission occasion is not occupied, when burst data arrives in the uplink, the terminal may send updated indication information of CG transmission occasion occupancy within an valid time.

The valid time of the indication information of CG transmission occasion occupancy is associated with a capability of the terminal.

After a base station receives the indication information of CG transmission occasion occupancy, at least one of following situations may occur for at least one transmission occasion not used by the terminal:
after the valid time of the indication information of CG transmission occasion occupancy, the base station receives or schedules uplink services of other terminals for unoccupied CG transmission occasions indicated by the indication information of CG transmission occasion occupancy; or
before the valid time of the indication information of CG transmission occasion occupancy, the base station cannot receive or schedule uplink services of other terminals for unoccupied CG transmission occasions indicated by the indication information of CG transmission occasion occupancy.

The valid time of the indication information of CG transmission occasion occupancy may be selected based on a capability of the terminal.

In a special situation, a default value of the indication information of CG transmission occasion occupancy is all "1" or all "0". The special situation is at least one of following: the base station does not receive/cannot parse the indication information of CG transmission occasion occupancy, the base station parses the indication information of CG transmission occasion occupancy incorrectly, or a resource where the indication information of CG transmission occasion occupancy is located conflicts with other reference signals/channels/downlink symbols/higher priority resources.

The methods and apparatuses provided by the embodiments of the present application are based on the same conception, and the implementation of the apparatuses and methods may be referred to each other since the principles of the methods and apparatuses are similar, which are not repeated here.

FIG. 9 is a schematic structural diagram of a terminal according to an embodiment of the present application. As shown in FIG. 9, the terminal includes a memory 920, a transceiver 910 and a processor 900, where the processor 900 and memory 920 may be physically arranged separately.

The memory 920 is used for storing a computer program, and the transceiver 910 is used for receiving and sending data under control of the processor 900.

In an embodiment, the transceiver 910 is used for receiving and sending data under control of the processor 900.

In FIG. 9, a bus architecture may include any number of interconnected buses and bridges, which are linked together through various circuits of one or more processors represented by the processor 900 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 910 may include multiple elements, i.e., including a transmitter and a receiver, units for providing communication with various other devices over transmission media including wireless channels, wired channels, fiber optic cables, and the like. For different user equipment, a user interface 930 may be an interface capable of externally or internally connecting the required equipment, and the connected equipment includes, but not limited to, a keypad, a display, a speaker, a microphone, a joystick, and the like.

The processor 900 is responsible for managing the bus architecture and general processing, and the memory 920 may store data used by the processor 900 when performing operations.

The processor 900 may be a central processing unit (CPU), an application specific integrated circuit (ASIC), a field-programmable gate array (FPGA), or a complex programmable logic device (CPLD), the processor may also use a multi-core architecture.

The processor 900 calls the computer program stored in the memory 920 to execute any of the methods provided by the embodiments of the present application in accordance with the obtained executable instructions. For example, the method includes: sending first information to a network device, where the first information is used to indicate that at least one transmission occasion (TO) unit is used and/or not used.

In some embodiments, the first information includes one or more of:
first indication information, where the first indication information is used to indicate that each TO unit in at least one configured grant (CG) period is used and/or not used;
second indication information, where the second indication information is used to indicate that each TO unit from a first time to an end of a first configured grant (CG) period is used and/or not used;
third indication information, where the third indication information is used to indicate that a first number of TO units after a first time are used and/or not used;
fourth indication information, where the fourth indication information is used to indicate that a time unit in at least one TO unit is used and/or not used;
fifth indication information, where the fifth indication information is used to indicate whether all TO units in a specified duration after a first time are not occupied;
sixth indication information, where the sixth indication information is used to indicate whether all TO units in a specified duration after a first time are occupied;
seventh indication information, where the seventh indication information is used to indicate that a first number of TO units after a first time are not occupied;
eighth indication information, where the eighth indication information is used to indicate that a first number of TO units after a first time are occupied;
ninth indication information, where the ninth indication information is used to indicate at least one TO unit for data reception of the network device;
an index value, offset value or identifier code of a starting TO unit in at least one TO unit, and/or an index value, offset value or identifier code of an ending TO unit in at least one TO unit; or
a number of TO units.

In some embodiments, the TO unit includes at least one type of:
a TO group or a TO or a symbol set in a TO;
a TO group and a part or all of TOs included in the TO group;
a TO group and a symbol set in at least one TO in the TO group;
a TO group, a part or all of TOs included in the TO group, and a symbol set in at least one TO in the part or all of the TOs; or
a TO and a symbol set in the TO.

In some embodiments, sending the first information to the network device includes:
sending the first information to the network device at one or more of following time domain positions:
a starting uplink time unit position of a configured grant (CG) period;
an ending uplink time unit position of a configured grant (CG) period;
a first uplink time unit position of a configured grant (CG) period, where the first uplink time unit position is an uplink time unit position within the CG period predefined by a protocol or indicated through the network device, and the uplink time unit position is an uplink slot position or an uplink symbol position;
a starting uplink time unit position of a first duration;
an ending uplink time unit position of a first duration;
a second uplink time unit position of a first duration, where the second uplink time unit position is an uplink time unit position within the first duration predefined by a protocol or indicated through the network device; or
a time unit position of all or a part of resources configured for a second signaling, where the second signaling carries the first information.

In some embodiments, the specified duration includes one or more types of:
M times or 1/M of a CG period, where M is an integer greater than or equal to 1;
K times or 1/K of a first period, where the first period is a period of an uplink control signaling where the first information is located, where K is an integer greater than or equal to 1;
L times or 1/L of an interval between TO groups, where L is an integer greater than or equal to 1;
a length of an interval configured through the network device;
a first number of TOs; or
a duration from a first time to an end of a first CG period.

In some embodiments, the first time includes at least one of:
a transmission time of the first information;
an valid time of the first information; or
a time when the terminal receives hybrid automatic repeat request acknowledgement (HARQ-ACK) information corresponding to the first information fed back from the network device.

In some embodiments, sending the first information to the network device includes:
sending the first information, carried by a second signaling, to the network device, where the second signaling includes an uplink control signaling and/or a medium access control (MAC) signaling.

In some embodiments, the uplink control signaling includes one or more of:
an uplink control signaling carried on a configured grant (CG) enhancement dedicated physical uplink control channel (PUCCH); or
an uplink control signaling carried on a configured grant (CG) physical uplink shared channel (PUSCH).

In some embodiments, the method further includes:
receiving first resource information sent from the network device; and
determining, based on the first resource information, at least one of a time domain resource, a frequency domain resource, or a spatial domain resource of a first signaling,
where the first signaling includes at least one of the uplink control signaling, the MAC signaling, or hybrid automatic repeat request acknowledgement (HARQ-ACK) information corresponding to the first information.

In some embodiments, the first resource information includes one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

In some embodiments, the resource information of the PUCCH where the first information is located includes one of more of:
a PUCCH resource set identifier or a PUCCH resource list index;
a starting resource block (RB) of a frequency domain resource of the PUCCH;
at least one of a number of resource blocks (RBs), an RB set, or an RB set index included in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

In some embodiments, the information of the resource where the first information is located includes one or more of:
a starting resource block (RB) of a frequency domain resource where the first information is located;
at least one of a number of resource blocks (RBs), an RB set, or an RB set index included in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

In some embodiments, the resource information of the MAC signaling where the first information is located includes one or more of:
a size of an information field for the first information in the MAC signaling; or
a TO unit corresponding to each bit or each byte in an information field for the first information in the MAC signaling.

In some embodiments, the resource information of the HARQ-ACK information corresponding to the first information includes one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

In some embodiments, after sending the first information to the network device, the method further includes:
after a second time, not transmitting data on an unoccupied TO unit indicated by the first information; and/or
before a second time, sending second information to the network device, where the second information is used to indicate that at least one TO unit is used and/or not used;
where the second time includes at least one of:
   a transmission time of the first information;
   an valid time of the first information;
   a time when the terminal receives hybrid automatic repeat request acknowledgement (HARQ-ACK) information corresponding to the first information fed back from the network device; or
   a time when a timer used for indicating an valid time of the first information expires.

In some embodiments, the valid time of the first information is associated with a capability of the terminal.

In some embodiments, the timer used for indicating the valid time of the first information is configured by a higher layer signaling or predefined by a protocol.

In some embodiments, any CG period includes N TOs, and the N TOs are used to send at least one transport block (TB), where N is an integer greater than or equal to 1.

In some embodiments, the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

In some embodiments, after sending the first information to the network device, the method further includes:
receiving hybrid automatic repeat request acknowledgement (HARQ-ACK) information, sent from the network device, corresponding to the first information.

In some embodiments, receiving the HARQ-ACK information, sent from the network device, corresponding to the first information, includes:
before a timer associated with the HARQ-ACK information corresponding to the first information expires, receiving the HARQ-ACK information, sent from the network device, corresponding to the first information.

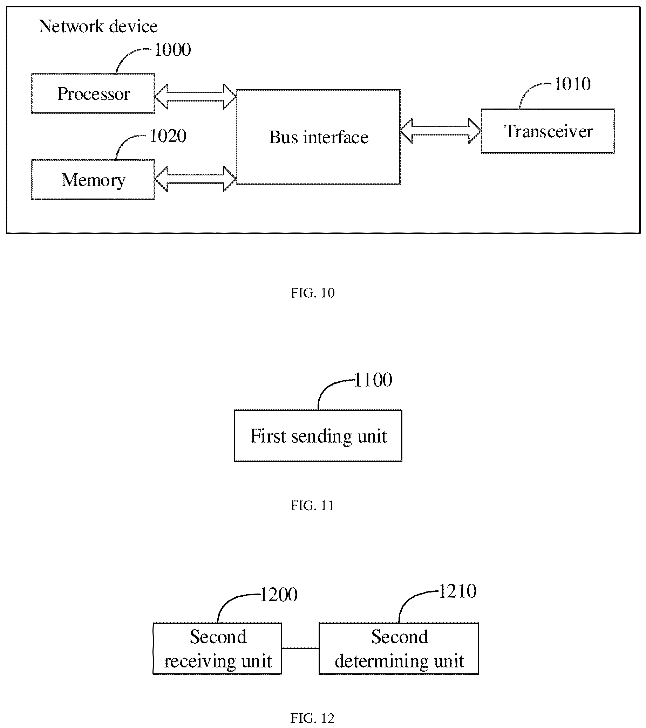

FIG. 10 is a schematic structural diagram of a network device according to an embodiment of the present application. As shown in FIG. 10, the network device includes a memory 1020, a transceiver 1010 and a processor 1000, where the processor 1000 and memory 1020 be physically arranged separately.

The memory 1020 is used for storing a computer program, and the transceiver 1010 is used for receiving and sending data under control of the processor 1000.

In an embodiment, the transceiver 1010 is used for receiving and sending data under control of the processor 1000.

In FIG. 10, a bus architecture may include any number of interconnected buses and bridges, which are linked together through various circuits of one or more processors represented by the processor 1000 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1010 may include multiple elements, i.e., including a transmitter and a receiver, units for providing communication with various other devices over transmission media including wireless channels, wired channels, fiber optic cables, and the like.

The processor 1000 is responsible for managing the bus architecture and general processing, and the memory 1020 may store data used by the processor 1000 when performing operations.

The processor 1000 may be a CPU, an ASIC, a FPGA, or a CPLD, the processor may also use a multi-core architecture.

The processor 1000 calls the computer program stored in the memory 1020 to execute any of the methods provided by the embodiments of the present application in accordance with the obtained executable instructions. For example, the method includes: receiving first information sent from a terminal; and determining, based on the first information, that at least one transmission occasion (TO) unit is used and/or not used.

In some embodiments, the first information includes one or more of:
first indication information, where the first indication information is used to indicate that each TO unit in at least one configured grant (CG) period is used and/or not used;
second indication information, where the second indication information is used to indicate that each TO unit from a first time to an end of a first configured grant (CG) period is used and/or not used;
third indication information, where the third indication information is used to indicate that a first number of TO units after a first time are used and/or not used;
fourth indication information, where the fourth indication information is used to indicate that a time unit in at least one TO unit is used and/or not used;
fifth indication information, where the fifth indication information is used to indicate whether all TO units in a specified duration after a first time are not occupied;
sixth indication information, where the sixth indication information is used to indicate whether all TO units in a specified duration after a first time are occupied;
seventh indication information, where the seventh indication information is used to indicate that a first number of TO units after a first time are not occupied;
eighth indication information, where the eighth indication information is used to indicate that a first number of TO units after a first time are occupied;
ninth indication information, where the ninth indication information is used to indicate at least one TO unit for data reception of the network device;
an index value, offset value or identifier code of a starting TO unit in at least one TO unit, and/or an index value, offset value or identifier code of an ending TO unit in at least one TO unit; or
a number of TO units.

In some embodiments, the TO unit includes at least one type of:
a TO group or a TO or a symbol set in a TO;
a TO group and a part or all of TOs included in the TO group;
a TO group and a symbol set in at least one TO in the TO group;
a TO group, a part or all of TOs included in the TO group, and a symbol set in at least one TO in the part or all of the TOs; or
a TO and a symbol set in the TO.

In some embodiments, receiving the first information sent from the terminal includes:
receiving the first information at one or more of following time domain positions:
a starting uplink time unit position of a configured grant (CG) period;
an ending uplink time unit position of a configured grant (CG) period;
a first uplink time unit position of a configured grant (CG) period, where the first uplink time unit position is an uplink time unit position within the CG period predefined by a protocol or indicated through the network device, and the uplink time unit position is an uplink slot position or an uplink symbol position;
a starting uplink time unit position of a first duration;
an ending uplink time unit position of a first duration;
a second uplink time unit position of a first duration, where the second uplink time unit position is an uplink time unit position within the first duration predefined by a protocol or indicated through the network device; or
a time unit position of all or a part of resources configured for a second signaling, where the second signaling carries the first information.

In some embodiments, the specified duration includes one or more types of:
M times or 1/M of a CG period, where M is an integer greater than or equal to 1;
K times or 1/K of a first period, where the first period is a period of an uplink control signaling where the first information is located, where K is an integer greater than or equal to 1;
L times or 1/L of an interval between TO groups, where L is an integer greater than or equal to 1;
a length of an interval configured through the network device;
a first number of TOs; or
a duration from a first time to an end of a first CG period.

In some embodiments, the first time includes at least one of:
a transmission time of the first information;
an valid time of the first information; or
a time when the terminal receives hybrid automatic repeat request acknowledgement (HARQ-ACK) information corresponding to the first information fed back from the network device.

In some embodiments, receiving the first information sent from the terminal includes:
receiving, through a second signaling, the first information sent from the terminal, where the second signaling includes an uplink control signaling and/or a medium access control (MAC) signaling.

In some embodiments, the uplink control signaling includes one or more of:
an uplink control signaling carried on a configured grant (CG) enhancement dedicated physical uplink control channel (PUCCH); or
an uplink control signaling carried on a configured grant (CG) physical uplink shared channel (PUSCH).

In some embodiments, the method further includes:
sending first resource information to the terminal, where the first resource information is used to configure at least one of a time domain resource, a frequency domain resource, or a spatial domain resource of a first signaling,
where the first signaling includes at least one of the uplink control signaling, the MAC signaling, or hybrid automatic repeat request acknowledgement (HARQ-ACK) information corresponding to the first information.

In some embodiments, the first resource information includes one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

In some embodiments, the resource information of the PUCCH where the first information is located includes one of more of:
a PUCCH resource set identifier or a PUCCH resource list index;
a starting resource block (RB) of a frequency domain resource of the PUCCH;
at least one of a number of resource blocks (RBs), an RB set, or an RB set index included in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

In some embodiments, the information of the resource where the first information is located includes one or more of:
a starting resource block (RB) of a frequency domain resource where the first information is located;
at least one of a number of resource blocks (RBs), an RB set, or an RB set index included in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

In some embodiments, the resource information of the MAC signaling where the first information is located includes one or more of:
a size of an information field for the first information in the MAC signaling; or
a TO unit corresponding to each bit or each byte in an information field for the first information in the MAC signaling.

In some embodiments, the resource information of the HARQ-ACK information corresponding to the first information includes one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

In some embodiments, the method further includes:
after a second time, receiving or scheduling, on an unoccupied TO unit indicated by the first information, uplink services of other terminals except the terminal; and/or
before a second time, receiving or scheduling, not on an unoccupied TO unit indicated by the first information, uplink services of other terminals except the terminal;
where the second time includes at least one of:
   a transmission time of the first information;
   an valid time of the first information;
   a time when the terminal receives hybrid automatic repeat request acknowledgement (HARQ-ACK) information corresponding to the first information fed back from the network device; or
   a time when a timer used for indicating an valid time of the first information expires.

In some embodiments, the method further includes:
determining the valid time of the first information based on a capability of the terminal.

In some embodiments, the timer used for indicating the valid time of the first information is configured by a higher layer signaling or predefined by a protocol.

In some embodiments, any CG period includes N TOs, and the N TOs are used to send at least one transport block (TB), where N is an integer greater than or equal to 1.

In some embodiments, the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

In some embodiments, after receiving the first information sent from the terminal, the method further includes:
sending hybrid automatic repeat request acknowledgement (HARQ-ACK) information corresponding to the first information to the terminal.

In some embodiments, sending the HARQ-ACK information corresponding to the first information to the terminal includes:
before a timer associated with the HARQ-ACK information corresponding to the first information expires, sending the HARQ-ACK information corresponding to the first information to the terminal.

It should be noted here that the above terminal and network device provided by the embodiments of the present application may implement all the method steps implemented by the above method embodiments, and may achieve the same effect. The same parts and beneficial effects as the same method embodiments are not repeated in the present application.

FIG. 11 is a first schematic structural diagram of an apparatus for uplink transmission indication according to an embodiment of the present application. As shown in FIG. 11, the apparatus includes:
a first sending unit 1100, used for sending first information to a network device, where the first information is used to indicate that at least one transmission occasion (TO) unit is used and/or not used.

In some embodiments, the first information includes one or more of:
first indication information, where the first indication information is used to indicate that each TO unit in at least one configured grant (CG) period is used and/or not used;
second indication information, where the second indication information is used to indicate that each TO unit from a first time to an end of a first configured grant (CG) period is used and/or not used;
third indication information, where the third indication information is used to indicate that a first number of TO units after a first time are used and/or not used;
fourth indication information, where the fourth indication information is used to indicate that a time unit in at least one TO unit is used and/or not used;
fifth indication information, where the fifth indication information is used to indicate whether all TO units in a specified duration after a first time are not occupied;
sixth indication information, where the sixth indication information is used to indicate whether all TO units in a specified duration after a first time are occupied;
seventh indication information, where the seventh indication information is used to indicate that a first number of TO units after a first time are not occupied;
eighth indication information, where the eighth indication information is used to indicate that a first number of TO units after a first time are occupied;
ninth indication information, where the ninth indication information is used to indicate at least one TO unit for data reception of the network device;
an index value, offset value or identifier code of a starting TO unit in at least one TO unit, and/or an index value, offset value or identifier code of an ending TO unit in at least one TO unit; or
a number of TO units.

In some embodiments, the TO unit includes at least one type of:
a TO group or a TO or a symbol set in a TO;
a TO group and a part or all of TOs included in the TO group;
a TO group and a symbol set in at least one TO in the TO group;
a TO group, a part or all of TOs included in the TO group, and a symbol set in at least one TO in the part or all of the TOs; or
a TO and a symbol set in the TO.

In some embodiments, sending the first information to the network device includes:
sending the first information to the network device at one or more of following time domain positions:
a starting uplink time unit position of a configured grant (CG) period;
an ending uplink time unit position of a configured grant (CG) period;
a first uplink time unit position of a configured grant (CG) period, where the first uplink time unit position is an uplink time unit position within the CG period predefined by a protocol or indicated through the network device, and the uplink time unit position is an uplink slot position or an uplink symbol position;
a starting uplink time unit position of a first duration;
an ending uplink time unit position of a first duration;
a second uplink time unit position of a first duration, where the second uplink time unit position is an uplink time unit position within the first duration predefined by a protocol or indicated through the network device; or
a time unit position of all or a part of resources configured for a second signaling, where the second signaling carries the first information.

In some embodiments, the specified duration includes one or more types of:
M times or 1/M of a CG period, where M is an integer greater than or equal to 1;
K times or 1/K of a first period, where the first period is a period of an uplink control signaling where the first information is located, where K is an integer greater than or equal to 1;
L times or 1/L of an interval between TO groups, where L is an integer greater than or equal to 1;
a length of an interval configured through the network device;
a first number of TOs; or
a duration from a first time to an end of a first CG period.

In some embodiments, the first time includes at least one of:
a transmission time of the first information;
an valid time of the first information; or
a time when a terminal receives hybrid automatic repeat request acknowledgement (HARQ-ACK) information corresponding to the first information fed back from the network device.

In some embodiments, sending the first information to the network device includes:
sending the first information, carried by a second signaling, to the network device, where the second signaling includes an uplink control signaling and/or a medium access control (MAC) signaling.

In some embodiments, the uplink control signaling includes one or more of:
an uplink control signaling carried on a configured grant (CG) enhancement dedicated physical uplink control channel (PUCCH); or
an uplink control signaling carried on a configured grant (CG) physical uplink shared channel (PUSCH).

In some embodiments, the apparatus further includes:
a first receiving unit, used for receiving first resource information sent from the network device; and
a first determining unit, used for determining, based on the first resource information, at least one of a time domain resource, a frequency domain resource, or a spatial domain resource of a first signaling,
where the first signaling includes at least one of the uplink control signaling, the MAC signaling, or hybrid automatic repeat request acknowledgement (HARQ-ACK) information corresponding to the first information.

In some embodiments, the first resource information includes one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

In some embodiments, the resource information of the PUCCH where the first information is located includes one of more of:
a PUCCH resource set identifier or a PUCCH resource list index;
a starting resource block (RB) of a frequency domain resource of the PUCCH;
at least one of a number of resource blocks (RBs), an RB set, or an RB set index included in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

In some embodiments, the information of the resource where the first information is located includes one or more of:
a starting resource block (RB) of a frequency domain resource where the first information is located;
at least one of a number of resource blocks (RBs), an RB set, or an RB set index included in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

In some embodiments, the resource information of the MAC signaling where the first information is located includes one or more of:
a size of an information field for the first information in the MAC signaling; or
a TO unit corresponding to each bit or each byte in an information field for the first information in the MAC signaling.

In some embodiments, the resource information of the HARQ-ACK information corresponding to the first information includes one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

In some embodiments, the apparatus further includes a first transmitting unit, used for:
after a second time, not transmitting data on an unoccupied TO unit indicated by the first information; and/or
before a second time, sending second information to the network device, where the second information is used to indicate that at least one TO unit is used and/or not used;
where the second time includes at least one of:
   a transmission time of the first information;
   an valid time of the first information;
   a time when a terminal receives hybrid automatic repeat request acknowledgement (HARQ-ACK) information corresponding to the first information fed back from the network device; or
   a time when a timer used for indicating an valid time of the first information expires.

In some embodiments, the valid time of the first information is associated with a capability of a terminal.

In some embodiments, the timer used for indicating the valid time of the first information is configured by a higher layer signaling or predefined by a protocol.

In some embodiments, any CG period includes N TOs, and the N TOs are used to send at least one transport block (TB), where N is an integer greater than or equal to 1.

In some embodiments, the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

In some embodiments, the apparatus further includes a second transmitting unit, used for:
receiving hybrid automatic repeat request acknowledgement (HARQ-ACK) information, sent from the network device, corresponding to the first information.

In some embodiments, receiving the HARQ-ACK information, sent from the network device, corresponding to the first information, includes:
before a timer associated with the HARQ-ACK information corresponding to the first information expires, receiving the HARQ-ACK information, sent from the network device, corresponding to the first information.

FIG. 12 is a second schematic structural diagram of an apparatus for uplink transmission indication according to an embodiment of the present application. As shown in FIG. 12, the apparatus includes:
a second receiving unit 1200, used for receiving first information sent from a terminal; and
a second determining unit 1210, used for determining, based on the first information, that at least one transmission occasion (TO) unit is used and/or not used.

In some embodiments, the first information includes one or more of:
first indication information, where the first indication information is used to indicate that each TO unit in at least one configured grant (CG) period is used and/or not used;
second indication information, where the second indication information is used to indicate that each TO unit from a first time to an end of a first configured grant (CG) period is used and/or not used;
third indication information, where the third indication information is used to indicate that a first number of TO units after a first time are used and/or not used;
fourth indication information, where the fourth indication information is used to indicate that a time unit in at least one TO unit is used and/or not used;
fifth indication information, where the fifth indication information is used to indicate whether all TO units in a specified duration after a first time are not occupied;
sixth indication information, where the sixth indication information is used to indicate whether all TO units in a specified duration after a first time are occupied;
seventh indication information, where the seventh indication information is used to indicate that a first number of TO units after a first time are not occupied;
eighth indication information, where the eighth indication information is used to indicate that a first number of TO units after a first time are occupied;
ninth indication information, where the ninth indication information is used to indicate at least one TO unit for data reception of a network device;
an index value, offset value or identifier code of a starting TO unit in at least one TO unit, and/or an index value, offset value or identifier code of an ending TO unit in at least one TO unit; or
a number of TO units.

In some embodiments, the TO unit includes at least one type of:
a TO group or a TO or a symbol set in a TO;
a TO group and a part or all of TOs included in the TO group;
a TO group and a symbol set in at least one TO in the TO group;
a TO group, a part or all of TOs included in the TO group, and a symbol set in at least one TO in the part or all of the TOs; or
a TO and a symbol set in the TO.

In some embodiments, receiving the first information sent from the terminal includes:
receiving the first information at one or more of following time domain positions:
a starting uplink time unit position of a configured grant (CG) period;
an ending uplink time unit position of a configured grant (CG) period;
a first uplink time unit position of a configured grant (CG) period, where the first uplink time unit position is an uplink time unit position within the CG period predefined by a protocol or indicated by a network device, and the uplink time unit position is an uplink slot position or an uplink symbol position;
a starting uplink time unit position of a first duration;
an ending uplink time unit position of a first duration;
a second uplink time unit position of a first duration, where the second uplink time unit position is an uplink time unit position within the first duration predefined by a protocol or indicated by a network device; or
a time unit position of all or a part of resources configured for a second signaling, where the second signaling carries the first information.

In some embodiments, the specified duration includes one or more types of:
M times or 1/M of a CG period, where M is an integer greater than or equal to 1;
K times or 1/K of a first period, where the first period is a period of an uplink control signaling where the first information is located, where K is an integer greater than or equal to 1;
L times or 1/L of an interval between TO groups, where L is an integer greater than or equal to 1;
a length of an interval configured by a network device;
a first number of TOs; or
a duration from a first time to an end of a first CG period.

In some embodiments, the first time includes at least one of:
a transmission time of the first information;
an valid time of the first information; or
a time when the terminal receives hybrid automatic repeat request acknowledgement (HARQ-ACK) information corresponding to the first information fed back from a network device.

In some embodiments, receiving the first information sent from the terminal includes:
receiving, through a second signaling, the first information sent from the terminal, where the second signaling includes an uplink control signaling and/or a medium access control (MAC) signaling.

In some embodiments, the uplink control signaling includes one or more of:
an uplink control signaling carried on a configured grant (CG) enhancement dedicated physical uplink control channel (PUCCH); or
an uplink control signaling carried on a configured grant (CG) physical uplink shared channel (PUSCH).

In some embodiments, the apparatus further includes:
a second sending unit, used for sending first resource information to the terminal, where the first resource information is used to configure at least one of a time domain resource, a frequency domain resource, or a spatial domain resource of a first signaling,
where the first signaling includes at least one of the uplink control signaling, the MAC signaling, or hybrid automatic repeat request acknowledgement (HARQ-ACK) information corresponding to the first information.

In some embodiments, the first resource information includes one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

In some embodiments, the resource information of the PUCCH where the first information is located includes one of more of:
a PUCCH resource set identifier or a PUCCH resource list index;
a starting resource block (RB) of a frequency domain resource of the PUCCH;
at least one of a number of resource blocks (RBs), an RB set, or an RB set index included in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

In some embodiments, the information of the resource where the first information is located includes one or more of:
a starting resource block (RB) of a frequency domain resource where the first information is located;
at least one of a number of resource blocks (RBs), an RB set, or an RB set index included in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

In some embodiments, the resource information of the MAC signaling where the first information is located includes one or more of:
a size of an information field for the first information in the MAC signaling; or
a TO unit corresponding to each bit or each byte in an information field for the first information in the MAC signaling.

In some embodiments, the resource information of the HARQ-ACK information corresponding to the first information includes one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

In some embodiments, the apparatus further includes a third transmitting unit, used for:
after a second time, receiving or scheduling, on an unoccupied TO unit indicated by the first information, uplink services of other terminals except the terminal; and/or
before a second time, receiving or scheduling, not on an unoccupied TO unit indicated by the first information, uplink services of other terminals except the terminal;
where the second time includes at least one of:
   a transmission time of the first information;
   an valid time of the first information;
   a time when the terminal receives hybrid automatic repeat request acknowledgement (HARQ-ACK) information corresponding to the first information fed back from a network device; or
   a time when a timer used for indicating an valid time of the first information expires.

In some embodiments, the apparatus further includes:
a third determining unit, used for determining the valid time of the first information based on a capability of the terminal.

In some embodiments, the timer used for indicating the valid time of the first information is configured by a higher layer signaling or predefined by a protocol.

In some embodiments, any CG period includes N TOs, and the N TOs are used to send at least one transport block (TB), where N is an integer greater than or equal to 1.

In some embodiments, the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

In some embodiments, the apparatus further includes:
a fourth transmitting unit, used for sending hybrid automatic repeat request acknowledgement (HARQ-ACK) information corresponding to the first information to the terminal.

In some embodiments, sending the HARQ-ACK information corresponding to the first information to the terminal includes:
before a timer associated with the HARQ-ACK information corresponding to the first information expires, sending the HARQ-ACK information corresponding to the first information to the terminal.

The division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted here that the above apparatus according to the embodiments of the present application may implement all the method steps implemented by the above method embodiments, and may achieve the same effect. The same parts and beneficial effects as the same method embodiments are not repeated here.

An embodiment of the present application further provides a computer readable storage medium storing a computer program, where the computer program is used for causing a computer to perform any of the methods for uplink transmission indication described above.

It should be noted here that the computer readable storage medium according to the embodiments of the present application may implement all the method steps implemented by the above method embodiments, and may achieve the same effect. The same parts and beneficial effects as the same method embodiments are not repeated here.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for uplink transmission indication, performed by a terminal, comprising:
sending first information to a network device, wherein the first information is used to indicate that at least one transmission occasion (TO) unit is used and/or not used.

2. The method of claim 1, wherein the first information comprises one or more of:
first indication information, wherein the first indication information is used to indicate that each TO unit in at least one configured grant (CG) period is used and/or not used;
second indication information, wherein the second indication information is used to indicate that each TO unit from a first time to an end of a first configured grant (CG) period is used and/or not used;
third indication information, wherein the third indication information is used to indicate that a first number of TO units after a first time are used and/or not used;
fourth indication information, wherein the fourth indication information is used to indicate that a time unit in at least one TO unit is used and/or not used;
fifth indication information, wherein the fifth indication information is used to indicate whether all TO units in a specified duration after a first time are not occupied;
sixth indication information, wherein the sixth indication information is used to indicate whether all TO units in a specified duration after a first time are occupied;
seventh indication information, wherein the seventh indication information is used to indicate that a first number of TO units after a first time are not occupied;
eighth indication information, wherein the eighth indication information is used to indicate that a first number of TO units after a first time are occupied;
ninth indication information, wherein the ninth indication information is used to indicate at least one TO unit for data reception of the network device;
an index value, offset value or identifier code of a starting TO unit in at least one TO unit, and/or an index value, offset value or identifier code of an ending TO unit in at least one TO unit; or
a number of TO units.

3. The method of claim 1 or 2, wherein the TO unit comprises at least one type of:
a TO group or a TO or a symbol set in a TO;
a TO group and a part or all of TOs comprised in the TO group;
a TO group and a symbol set in at least one TO in the TO group;
a TO group, a part or all of TOs comprised in the TO group, and a symbol set in at least one TO in the part or all of the TOs; or
a TO and a symbol set in the TO.

4. The method of any of claims 1 to 3, wherein sending the first information to the network device comprises:
sending the first information to the network device at one or more of following time domain positions:
a starting uplink time unit position of a configured grant (CG) period;
an ending uplink time unit position of a configured grant (CG) period;
a first uplink time unit position of a configured grant (CG) period, wherein the first uplink time unit position is an uplink time unit position within the CG period predefined by a protocol or indicated through the network device, and the uplink time unit position is an uplink slot position or an uplink symbol position;
a starting uplink time unit position of a first duration;
an ending uplink time unit position of a first duration;
a second uplink time unit position of a first duration, wherein the second uplink time unit position is an uplink time unit position within the first duration predefined by a protocol or indicated through the network device; or
a time unit position of all or a part of resources configured for a second signaling, wherein the second signaling carries the first information.

5. The method of claim 2, wherein the specified duration comprises one or more types of:
M times or 1/M of a CG period, wherein M is an integer greater than or equal to 1;
K times or 1/K of a first period, wherein the first period is a period of an uplink control signaling where the first information is located, wherein K is an integer greater than or equal to 1;
L times or 1/L of an interval between TO groups, wherein L is an integer greater than or equal to 1;
a length of an interval configured through the network device;
a first number of TOs; or
a duration from a first time to an end of a first CG period.

6. The method of claim 2 or 5, wherein the first time comprises at least one of:
a transmission time of the first information;
an valid time of the first information; or
a time when the terminal receives hybrid automatic repeat request acknowledgement (HARQ-ACK) information corresponding to the first information fed back from the network device.

7. The method of any of claims 1 to 6, wherein sending the first information to the network device comprises:
sending the first information, carried by a second signaling, to the network device, wherein the second signaling comprises an uplink control signaling and/or a medium access control (MAC) signaling.

8. The method of claim 7, wherein the uplink control signaling comprises one or more of:
an uplink control signaling carried on a configured grant (CG) enhancement dedicated physical uplink control channel (PUCCH); or
an uplink control signaling carried on a configured grant (CG) physical uplink shared channel (PUSCH).

9. The method of claim 7 or 8, further comprising:
receiving first resource information sent from the network device; and
determining, based on the first resource information, at least one of a time domain resource, a frequency domain resource, or a spatial domain resource of a first signaling,
wherein the first signaling comprises at least one of the uplink control signaling, the MAC signaling, or hybrid automatic repeat request acknowledgement (HARQ-ACK) information corresponding to the first information.

10. The method of claim 9, wherein the first resource information comprises one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

11. The method of claim 10, wherein the resource information of the PUCCH where the first information is located comprises one of more of:
a PUCCH resource set identifier or a PUCCH resource list index;
a starting resource block (RB) of a frequency domain resource of the PUCCH;
at least one of a number of resource blocks (RBs), an RB set, or an RB set index comprised in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

12. The method of claim 10, wherein the information of the resource where the first information is located comprises one or more of:
a starting resource block (RB) of a frequency domain resource where the first information is located;
at least one of a number of resource blocks (RBs), an RB set, or an RB set index comprised in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

13. The method of claim 10, wherein the resource information of the MAC signaling where the first information is located comprises one or more of:
a size of an information field for the first information in the MAC signaling; or
a TO unit corresponding to each bit or each byte in an information field for the first information in the MAC signaling.

14. The method of claim 10, wherein the resource information of the HARQ-ACK information corresponding to the first information comprises one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

15. The method of any of claims 1 to 14, wherein after sending the first information to the network device, the method further comprises:
after a second time, not transmitting data on an unoccupied TO unit indicated by the first information; and/or
before a second time, sending second information to the network device, wherein the second information is used to indicate that at least one TO unit is used and/or not used;
wherein the second time comprises at least one of:
a transmission time of the first information;
an valid time of the first information;
a time when the terminal receives hybrid automatic repeat request acknowledgement (HARQ-ACK) information corresponding to the first information fed back from the network device; or
a time when a timer used for indicating an valid time of the first information expires.

16. The method of claim 6 or 15, wherein the valid time of the first information is associated with a capability of the terminal.

17. The method of claim 15, wherein the timer used for indicating the valid time of the first information is configured by a higher layer signaling or predefined by a protocol.

18. The method of claim 2, 4 or 5, wherein any CG period comprises N TOs, and the N TOs are used to send at least one transport block (TB), wherein N is an integer greater than or equal to 1.

19. The method of claim 18, wherein the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

20. The method of any of claims 1 to 19, wherein after sending the first information to the network device, the method further comprises:
receiving hybrid automatic repeat request acknowledgement (HARQ-ACK) information, sent from the network device, corresponding to the first information.

21. The method of claim 20, wherein receiving the HARQ-ACK information, sent from the network device, corresponding to the first information, comprises:
before a timer associated with the HARQ-ACK information corresponding to the first information expires, receiving the HARQ-ACK information, sent from the network device, corresponding to the first information.

22. A method for uplink transmission indication, performed by a network device, comprising:
receiving first information sent from a terminal; and
determining, based on the first information, that at least one transmission occasion (TO) unit is used and/or not used.

23. The method of claim 22, wherein the first information comprises one or more of:
first indication information, wherein the first indication information is used to indicate that each TO unit in at least one configured grant (CG) period is used and/or not used;
second indication information, wherein the second indication information is used to indicate that each TO unit from a first time to an end of a first configured grant (CG) period is used and/or not used;
third indication information, wherein the third indication information is used to indicate that a first number of TO units after a first time are used and/or not used;
fourth indication information, wherein the fourth indication information is used to indicate that a time unit in at least one TO unit is used and/or not used;
fifth indication information, wherein the fifth indication information is used to indicate whether all TO units in a specified duration after a first time are not occupied;
sixth indication information, wherein the sixth indication information is used to indicate whether all TO units in a specified duration after a first time are occupied;
seventh indication information, wherein the seventh indication information is used to indicate that a first number of TO units after a first time are not occupied;
eighth indication information, wherein the eighth indication information is used to indicate that a first number of TO units after a first time are occupied;
ninth indication information, wherein the ninth indication information is used to indicate at least one TO unit for data reception of the network device;
an index value, offset value or identifier code of a starting TO unit in at least one TO unit, and/or an index value, offset value or identifier code of an ending TO unit in at least one TO unit; or
a number of TO units.

24. The method of claim 22 or 23, wherein the TO unit comprises at least one type of:
a TO group or a TO or a symbol set in a TO;
a TO group and a part or all of TOs comprised in the TO group;
a TO group and a symbol set in at least one TO in the TO group;
a TO group, a part or all of TOs comprised in the TO group, and a symbol set in at least one TO in the part or all of the TOs; or
a TO and a symbol set in the TO.

25. The method of any of claims 22 to 24, wherein receiving the first information sent from the terminal comprises:
receiving the first information at one or more of following time domain positions:
a starting uplink time unit position of a configured grant (CG) period;
an ending uplink time unit position of a configured grant (CG) period;
a first uplink time unit position of a configured grant (CG) period, wherein the first uplink time unit position is an uplink time unit position within the CG period predefined by a protocol or indicated through the network device, and the uplink time unit position is an uplink slot position or an uplink symbol position;
a starting uplink time unit position of a first duration;
an ending uplink time unit position of a first duration;
a second uplink time unit position of a first duration, wherein the second uplink time unit position is an uplink time unit position within the first duration predefined by a protocol or indicated through the network device; or
a time unit position of all or a part of resources configured for a second signaling, wherein the second signaling carries the first information.

26. The method of claim 23, wherein the specified duration comprises one or more types of:
M times or 1/M of a CG period, wherein M is an integer greater than or equal to 1;
K times or 1/K of a first period, wherein the first period is a period of an uplink control signaling where the first information is located, wherein K is an integer greater than or equal to 1;
L times or 1/L of an interval between TO groups, wherein L is an integer greater than or equal to 1;
a length of an interval configured through the network device;
a first number of TOs; or
a duration from a first time to an end of a first CG period.

27. The method of claim 23 or 26, wherein the first time comprises at least one of:
a transmission time of the first information;
an valid time of the first information; or
a time when the terminal receives hybrid automatic repeat request acknowledgement (HARQ-ACK) information corresponding to the first information fed back from the network device.

28. The method of any of claims 22 to 27, wherein receiving the first information sent from the terminal comprises:
receiving, through a second signaling, the first information sent from the terminal, wherein the second signaling comprises an uplink control signaling and/or a medium access control (MAC) signaling.

29. The method of claim 28, wherein the uplink control signaling comprises one or more of:
an uplink control signaling carried on a configured grant (CG) enhancement dedicated physical uplink control channel (PUCCH); or
an uplink control signaling carried on a configured grant (CG) physical uplink shared channel (PUSCH).

30. The method of claim 28 or 29, further comprising:
sending first resource information to the terminal, wherein the first resource information is used to configure at least one of a time domain resource, a frequency domain resource, or a spatial domain resource of a first signaling,
wherein the first signaling comprises at least one of the uplink control signaling, the MAC signaling, or hybrid automatic repeat request acknowledgement (HARQ-ACK) information corresponding to the first information.

31. The method of claim 30, wherein the first resource information comprises one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

32. The method of claim 31, wherein the resource information of the PUCCH where the first information is located comprises one of more of:
a PUCCH resource set identifier or a PUCCH resource list index;
a starting resource block (RB) of a frequency domain resource of the PUCCH;
at least one of a number of resource blocks (RBs), an RB set, or an RB set index comprised in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

33. The method of claim 31, wherein the information of the resource where the first information is located comprises one or more of:
a starting resource block (RB) of a frequency domain resource where the first information is located;
at least one of a number of resource blocks (RBs), an RB set, or an RB set index comprised in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

34. The method of claim 31, wherein the resource information of the MAC signaling where the first information is located comprises one or more of:
a size of an information field for the first information in the MAC signaling; or
a TO unit corresponding to each bit or each byte in an information field for the first information in the MAC signaling.

35. The method of claim 31, wherein the resource information of the HARQ-ACK information corresponding to the first information comprises one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

36. The method of any of claims 22 to 35, further comprising:
after a second time, receiving or scheduling, on an unoccupied TO unit indicated by the first information, uplink services of other terminals except the terminal; and/or
before a second time, receiving or scheduling, not on an unoccupied TO unit indicated by the first information, uplink services of other terminals except the terminal;
wherein the second time comprises at least one of:
a transmission time of the first information;
an valid time of the first information;
a time when the terminal receives hybrid automatic repeat request acknowledgement (HARQ-ACK) information corresponding to the first information fed back from the network device; or
a time when a timer used for indicating an valid time of the first information expires.

37. The method of claim 27 or 36, further comprising:
determining the valid time of the first information based on a capability of the terminal.

38. The method of claim 36, wherein the timer used for indicating the valid time of the first information is configured by a higher layer signaling or predefined by a protocol.

39. The method of claim 23, 25 or 26, wherein any CG period comprises N TOs, and the N TOs are used to send at least one transport block (TB), wherein N is an integer greater than or equal to 1.

40. The method of claim 39, wherein the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

41. The method of any of claims 22 to 40, wherein after receiving the first information sent from the terminal, the method further comprises:
sending hybrid automatic repeat request acknowledgement (HARQ-ACK) information corresponding to the first information to the terminal.

42. The method of claim 41, wherein sending the HARQ-ACK information corresponding to the first information to the terminal comprises:
before a timer associated with the HARQ-ACK information corresponding to the first information expires, sending the HARQ-ACK information corresponding to the first information to the terminal.

43. A terminal, comprising a memory, a transceiver and a processor,
wherein the memory is used for storing a computer program, the transceiver is used for receiving and sending data under control of the processor, and the processor is used for reading the computer program in the memory and performing following operations:
sending first information to a network device, wherein the first information is used to indicate that at least one transmission occasion (TO) unit is used and/or not used.

44. The terminal of claim 43, wherein the first information comprises one or more of:
first indication information, wherein the first indication information is used to indicate that each TO unit in at least one configured grant (CG) period is used and/or not used;
second indication information, wherein the second indication information is used to indicate that each TO unit from a first time to an end of a first configured grant (CG) period is used and/or not used;
third indication information, wherein the third indication information is used to indicate that a first number of TO units after a first time are used and/or not used;
fourth indication information, wherein the fourth indication information is used to indicate that a time unit in at least one TO unit is used and/or not used;
fifth indication information, wherein the fifth indication information is used to indicate whether all TO units in a specified duration after a first time are not occupied;
sixth indication information, wherein the sixth indication information is used to indicate whether all TO units in a specified duration after a first time are occupied;
seventh indication information, wherein the seventh indication information is used to indicate that a first number of TO units after a first time are not occupied;
eighth indication information, wherein the eighth indication information is used to indicate that a first number of TO units after a first time are occupied;
ninth indication information, wherein the ninth indication information is used to indicate at least one TO unit for data reception of the network device;
an index value, offset value or identifier code of a starting TO unit in at least one TO unit, and/or an index value, offset value or identifier code of an ending TO unit in at least one TO unit; or
a number of TO units.

45. The terminal of claim 43 or 44, wherein the TO unit comprises at least one type of:
a TO group or a TO or a symbol set in a TO;
a TO group and a part or all of TOs comprised in the TO group;
a TO group and a symbol set in at least one TO in the TO group;
a TO group, a part or all of TOs comprised in the TO group, and a symbol set in at least one TO in the part or all of the TOs; or
a TO and a symbol set in the TO.

46. The terminal of any of claims 43 to 45, wherein sending the first information to the network device comprises:
sending the first information to the network device at one or more of following time domain positions:
a starting uplink time unit position of a configured grant (CG) period;
an ending uplink time unit position of a configured grant (CG) period;
a first uplink time unit position of a configured grant (CG) period, wherein the first uplink time unit position is an uplink time unit position within the CG period predefined by a protocol or indicated through the network device, and the uplink time unit position is an uplink slot position or an uplink symbol position;
a starting uplink time unit position of a first duration;
an ending uplink time unit position of a first duration;
a second uplink time unit position of a first duration, wherein the second uplink time unit position is an uplink time unit position within the first duration predefined by a protocol or indicated through the network device; or
a time unit position of all or a part of resources configured for a second signaling, wherein the second signaling carries the first information.

47. The terminal of claim 44, wherein the specified duration comprises one or more types of:
M times or 1/M of a CG period, wherein M is an integer greater than or equal to 1;
K times or 1/K of a first period, wherein the first period is a period of an uplink control signaling where the first information is located, wherein K is an integer greater than or equal to 1;
L times or 1/L of an interval between TO groups, wherein L is an integer greater than or equal to 1;
a length of an interval configured through the network device;
a first number of TOs; or
a duration from a first time to an end of a first CG period.

48. The terminal of claim 44 or 47, wherein the first time comprises at least one of:
a transmission time of the first information;
an valid time of the first information; or
a time when the terminal receives hybrid automatic repeat request acknowledgement (HARQ-ACK) information corresponding to the first information fed back from the network device.

49. The terminal of any of claims 43 to 48, wherein sending the first information to the network device comprises:
sending the first information, carried by a second signaling, to the network device, wherein the second signaling comprises an uplink control signaling and/or a medium access control (MAC) signaling.

50. The terminal of claim 49, wherein the uplink control signaling comprises one or more of:
an uplink control signaling carried on a configured grant (CG) enhancement dedicated physical uplink control channel (PUCCH); or
an uplink control signaling carried on a configured grant (CG) physical uplink shared channel (PUSCH).

51. The terminal of claim 49 or 50, wherein the operations further comprise:
receiving first resource information sent from the network device; and
determining, based on the first resource information, at least one of a time domain resource, a frequency domain resource, or a spatial domain resource of a first signaling,
wherein the first signaling comprises at least one of the uplink control signaling, the MAC signaling, or hybrid automatic repeat request acknowledgement (HARQ-ACK) information corresponding to the first information.

52. The terminal of claim 51, wherein the first resource information comprises one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

53. The terminal of claim 52, wherein the resource information of the PUCCH where the first information is located comprises one of more of:
a PUCCH resource set identifier or a PUCCH resource list index;
a starting resource block (RB) of a frequency domain resource of the PUCCH;
at least one of a number of resource blocks (RBs), an RB set, or an RB set index comprised in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

54. The terminal of claim 52, wherein the information of the resource where the first information is located comprises one or more of:
a starting resource block (RB) of a frequency domain resource where the first information is located;
at least one of a number of resource blocks (RBs), an RB set, or an RB set index comprised in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

55. The terminal of claim 52, wherein the resource information of the MAC signaling where the first information is located comprises one or more of:
a size of an information field for the first information in the MAC signaling; or
a TO unit corresponding to each bit or each byte in an information field for the first information in the MAC signaling.

56. The terminal of claim 52, wherein the resource information of the HARQ-ACK information corresponding to the first information comprises one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

57. The terminal of any of claims 43 to 56, wherein after sending the first information to the network device, the operations further comprise:
after a second time, not transmitting data on an unoccupied TO unit indicated by the first information; and/or
before a second time, sending second information to the network device, wherein the second information is used to indicate that at least one TO unit is used and/or not used;
wherein the second time comprises at least one of:
a transmission time of the first information;
an valid time of the first information;
a time when the terminal receives hybrid automatic repeat request acknowledgement (HARQ-ACK) information corresponding to the first information fed back from the network device; or
a time when a timer used for indicating an valid time of the first information expires.

58. The terminal of claim 48 or 57, wherein the valid time of the first information is associated with a capability of the terminal.

59. The terminal of claim 57, wherein the timer used for indicating the valid time of the first information is configured by a higher layer signaling or predefined by a protocol.

60. The terminal of claim 44, 46 or 47, wherein any CG period comprises N TOs, and the N TOs are used to send at least one transport block (TB), wherein N is an integer greater than or equal to 1.

61. The terminal of claim 60, wherein the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

62. The terminal of any of claims 43 to 61, wherein after sending the first information to the network device, the operations further comprise:
receiving hybrid automatic repeat request acknowledgement (HARQ-ACK) information, sent from the network device, corresponding to the first information.

63. The terminal of claim 62, wherein receiving the HARQ-ACK information, sent from the network device, corresponding to the first information, comprises:
before a timer associated with the HARQ-ACK information corresponding to the first information expires, receiving the HARQ-ACK information, sent from the network device, corresponding to the first information.

64. A network device, comprising a memory, a transceiver and a processor,
wherein the memory is used for storing a computer program, the transceiver is used for receiving and sending data under control of the processor, and the processor is used for reading the computer program in the memory and performing following operations:
receiving first information sent from a terminal; and
determining, based on the first information, that at least one transmission occasion (TO) unit is used and/or not used.

65. The network device of claim 64, wherein the first information comprises one or more of:
first indication information, wherein the first indication information is used to indicate that each TO unit in at least one configured grant (CG) period is used and/or not used;
second indication information, wherein the second indication information is used to indicate that each TO unit from a first time to an end of a first configured grant (CG) period is used and/or not used;
third indication information, wherein the third indication information is used to indicate that a first number of TO units after a first time are used and/or not used;
fourth indication information, wherein the fourth indication information is used to indicate that a time unit in at least one TO unit is used and/or not used;
fifth indication information, wherein the fifth indication information is used to indicate whether all TO units in a specified duration after a first time are not occupied;
sixth indication information, wherein the sixth indication information is used to indicate whether all TO units in a specified duration after a first time are occupied;
seventh indication information, wherein the seventh indication information is used to indicate that a first number of TO units after a first time are not occupied;
eighth indication information, wherein the eighth indication information is used to indicate that a first number of TO units after a first time are occupied;
ninth indication information, wherein the ninth indication information is used to indicate at least one TO unit for data reception of the network device;
an index value, offset value or identifier code of a starting TO unit in at least one TO unit, and/or an index value, offset value or identifier code of an ending TO unit in at least one TO unit; or
a number of TO units.

66. The network device of claim 64 or 65, wherein the TO unit comprises at least one type of:
a TO group or a TO or a symbol set in a TO;
a TO group and a part or all of TOs comprised in the TO group;
a TO group and a symbol set in at least one TO in the TO group;
a TO group, a part or all of TOs comprised in the TO group, and a symbol set in at least one TO in the part or all of the TOs; or
a TO and a symbol set in the TO.

67. The network device of any of claims 64 to 66, wherein receiving the first information sent from the terminal comprises:
receiving the first information at one or more of following time domain positions:
a starting uplink time unit position of a configured grant (CG) period;
an ending uplink time unit position of a configured grant (CG) period;
a first uplink time unit position of a configured grant (CG) period, wherein the first uplink time unit position is an uplink time unit position within the CG period predefined by a protocol or indicated through the network device, and the uplink time unit position is an uplink slot position or an uplink symbol position;
a starting uplink time unit position of a first duration;
an ending uplink time unit position of a first duration;
a second uplink time unit position of a first duration, wherein the second uplink time unit position is an uplink time unit position within the first duration predefined by a protocol or indicated through the network device; or
a time unit position of all or a part of resources configured for a second signaling, wherein the second signaling carries the first information.

68. The network device of claim 65, wherein the specified duration comprises one or more types of:
M times or 1/M of a CG period, wherein M is an integer greater than or equal to 1;
K times or 1/K of a first period, wherein the first period is a period of an uplink control signaling where the first information is located, wherein K is an integer greater than or equal to 1;
L times or 1/L of an interval between TO groups, wherein L is an integer greater than or equal to 1;
a length of an interval configured through the network device;
a first number of TOs; or
a duration from a first time to an end of a first CG period.

69. The network device of claim 65 or 68, wherein the first time comprises at least one of:
a transmission time of the first information;
an valid time of the first information; or
a time when the terminal receives hybrid automatic repeat request acknowledgement (HARQ-ACK) information corresponding to the first information fed back from the network device.

70. The network device of any of claims 64 to 69, wherein receiving the first information sent from the terminal comprises:
receiving, through a second signaling, the first information sent from the terminal, wherein the second signaling comprises an uplink control signaling and/or a medium access control (MAC) signaling.

71. The network device of claim 70, wherein the uplink control signaling comprises one or more of:
an uplink control signaling carried on a configured grant (CG) enhancement dedicated physical uplink control channel (PUCCH); or
an uplink control signaling carried on a configured grant (CG) physical uplink shared channel (PUSCH).

72. The network device of claim 70 or 71, wherein the operations further comprise:
sending first resource information to the terminal, wherein the first resource information is used to configure at least one of a time domain resource, a frequency domain resource, or a spatial domain resource of a first signaling,
wherein the first signaling comprises at least one of the uplink control signaling, the MAC signaling, or hybrid automatic repeat request acknowledgement (HARQ-ACK) information corresponding to the first information.

73. The network device of claim 72, wherein the first resource information comprises one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

74. The network device of claim 73, wherein the resource information of the PUCCH where the first information is located comprises one of more of:
a PUCCH resource set identifier or a PUCCH resource list index;
a starting resource block (RB) of a frequency domain resource of the PUCCH;
at least one of a number of resource blocks (RBs), an RB set, or an RB set index comprised in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

75. The network device of claim 73, wherein the information of the resource where the first information is located comprises one or more of:
a starting resource block (RB) of a frequency domain resource where the first information is located;
at least one of a number of resource blocks (RBs), an RB set, or an RB set index comprised in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

76. The network device of claim 73, wherein the resource information of the MAC signaling where the first information is located comprises one or more of:
a size of an information field for the first information in the MAC signaling; or
a TO unit corresponding to each bit or each byte in an information field for the first information in the MAC signaling.

77. The network device of claim 73, wherein the resource information of the HARQ-ACK information corresponding to the first information comprises one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

78. The network device of any of claims 64 to 77, wherein the operations further comprise:
after a second time, receiving or scheduling, on an unoccupied TO unit indicated by the first information, uplink services of other terminals except the terminal; and/or
before a second time, receiving or scheduling, not on an unoccupied TO unit indicated by the first information, uplink services of other terminals except the terminal;
wherein the second time comprises at least one of:
a transmission time of the first information;
an valid time of the first information;
a time when the terminal receives hybrid automatic repeat request acknowledgement (HARQ-ACK) information corresponding to the first information fed back from the network device; or
a time when a timer used for indicating an valid time of the first information expires.

79. The network device of claim 69 or 78, wherein the operations further comprise:
determining the valid time of the first information based on a capability of the terminal.

80. The network device of claim 78, wherein the timer used for indicating the valid time of the first information is configured by a higher layer signaling or predefined by a protocol.

81. The network device of claim 65, 67 or 68, wherein any CG period comprises N TOs, and the N TOs are used to send at least one transport block (TB), wherein N is an integer greater than or equal to 1.

82. The network device of claim 81, wherein the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

83. The network device of any of claims 64 to 82, wherein after receiving the first information sent from the terminal, the operations further comprise:
sending hybrid automatic repeat request acknowledgement (HARQ-ACK) information corresponding to the first information to the terminal.

84. The network device of claim 83, wherein sending the HARQ-ACK information corresponding to the first information to the terminal comprises:
before a timer associated with the HARQ-ACK information corresponding to the first information expires, sending the HARQ-ACK information corresponding to the first information to the terminal.

85. An apparatus for uplink transmission indication, comprising:
a first sending unit, used for sending first information to a network device, wherein the first information is used to indicate that at least one transmission occasion (TO) unit is used and/or not used.

86. The apparatus of claim 85, wherein the first information comprises one or more of:
first indication information, wherein the first indication information is used to indicate that each TO unit in at least one configured grant (CG) period is used and/or not used;
second indication information, wherein the second indication information is used to indicate that each TO unit from a first time to an end of a first configured grant (CG) period is used and/or not used;
third indication information, wherein the third indication information is used to indicate that a first number of TO units after a first time are used and/or not used;
fourth indication information, wherein the fourth indication information is used to indicate that a time unit in at least one TO unit is used and/or not used;
fifth indication information, wherein the fifth indication information is used to indicate whether all TO units in a specified duration after a first time are not occupied;
sixth indication information, wherein the sixth indication information is used to indicate whether all TO units in a specified duration after a first time are occupied;
seventh indication information, wherein the seventh indication information is used to indicate that a first number of TO units after a first time are not occupied;
eighth indication information, wherein the eighth indication information is used to indicate that a first number of TO units after a first time are occupied;
ninth indication information, wherein the ninth indication information is used to indicate at least one TO unit for data reception of the network device;
an index value, offset value or identifier code of a starting TO unit in at least one TO unit, and/or an index value, offset value or identifier code of an ending TO unit in at least one TO unit; or
a number of TO units.

87. The apparatus of claim 85 or 86, wherein the TO unit comprises at least one type of:
a TO group or a TO or a symbol set in a TO;
a TO group and a part or all of TOs comprised in the TO group;
a TO group and a symbol set in at least one TO in the TO group;
a TO group, a part or all of TOs comprised in the TO group, and a symbol set in at least one TO in the part or all of the TOs; or
a TO and a symbol set in the TO.

88. The apparatus of any of claims 85 to 87, wherein sending the first information to the network device comprises:
sending the first information to the network device at one or more of following time domain positions:
a starting uplink time unit position of a configured grant (CG) period;
an ending uplink time unit position of a configured grant (CG) period;
a first uplink time unit position of a configured grant (CG) period, wherein the first uplink time unit position is an uplink time unit position within the CG period predefined by a protocol or indicated through the network device, and the uplink time unit position is an uplink slot position or an uplink symbol position;
a starting uplink time unit position of a first duration;
an ending uplink time unit position of a first duration;
a second uplink time unit position of a first duration, wherein the second uplink time unit position is an uplink time unit position within the first duration predefined by a protocol or indicated through the network device; or
a time unit position of all or a part of resources configured for a second signaling, wherein the second signaling carries the first information.

89. The apparatus of claim 86, wherein the specified duration comprises one or more types of:
M times or 1/M of a CG period, wherein M is an integer greater than or equal to 1;
K times or 1/K of a first period, wherein the first period is a period of an uplink control signaling where the first information is located, wherein K is an integer greater than or equal to 1;
L times or 1/L of an interval between TO groups, wherein L is an integer greater than or equal to 1;
a length of an interval configured through the network device;
a first number of TOs; or
a duration from a first time to an end of a first CG period.

90. The apparatus of claim 86 or 89, wherein the first time comprises at least one of:
a transmission time of the first information;
an valid time of the first information; or
a time when a terminal receives hybrid automatic repeat request acknowledgement (HARQ-ACK) information corresponding to the first information fed back from the network device.

91. The apparatus of any of claims 85 to 90, wherein sending the first information to the network device comprises:
sending the first information, carried by a second signaling, to the network device, wherein the second signaling comprises an uplink control signaling and/or a medium access control (MAC) signaling.

92. The apparatus of claim 91, wherein the uplink control signaling comprises one or more of:
an uplink control signaling carried on a configured grant (CG) enhancement dedicated physical uplink control channel (PUCCH); or
an uplink control signaling carried on a configured grant (CG) physical uplink shared channel (PUSCH).

93. The apparatus of claim 91 or 92, further comprising:
a first receiving unit, used for receiving first resource information sent from the network device; and
a first determining unit, used for determining, based on the first resource information, at least one of a time domain resource, a frequency domain resource, or a spatial domain resource of a first signaling,
wherein the first signaling comprises at least one of the uplink control signaling, the MAC signaling, or hybrid automatic repeat request acknowledgement (HARQ-ACK) information corresponding to the first information.

94. The apparatus of claim 93, wherein the first resource information comprises one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

95. The apparatus of claim 94, wherein the resource information of the PUCCH where the first information is located comprises one of more of:
a PUCCH resource set identifier or a PUCCH resource list index;
a starting resource block (RB) of a frequency domain resource of the PUCCH;
at least one of a number of resource blocks (RBs), an RB set, or an RB set index comprised in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

96. The apparatus of claim 94, wherein the information of the resource where the first information is located comprises one or more of:
a starting resource block (RB) of a frequency domain resource where the first information is located;
at least one of a number of resource blocks (RBs), an RB set, or an RB set index comprised in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

97. The apparatus of claim 94, wherein the resource information of the MAC signaling where the first information is located comprises one or more of:
a size of an information field for the first information in the MAC signaling; or
a TO unit corresponding to each bit or each byte in an information field for the first information in the MAC signaling.

98. The apparatus of claim 94, wherein the resource information of the HARQ-ACK information corresponding to the first information comprises one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

99. The apparatus of any of claims 85 to 98, further comprising a first transmitting unit, used for:
after a second time, not transmitting data on an unoccupied TO unit indicated by the first information; and/or
before a second time, sending second information to the network device, wherein the second information is used to indicate that at least one TO unit is used and/or not used;
wherein the second time comprises at least one of:
a transmission time of the first information;
an valid time of the first information;
a time when a terminal receives hybrid automatic repeat request acknowledgement (HARQ-ACK) information corresponding to the first information fed back from the network device; or
a time when a timer used for indicating an valid time of the first information expires.

100. The apparatus of claim 93 or 99, wherein the valid time of the first information is associated with a capability of a terminal.

101. The apparatus of claim 99, wherein the timer used for indicating the valid time of the first information is configured by a higher layer signaling or predefined by a protocol.

102. The apparatus of claim 86, 88 or 89, wherein any CG period comprises N TOs, and the N TOs are used to send at least one transport block (TB), wherein N is an integer greater than or equal to 1.

103. The apparatus of claim 102, wherein the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

104. The apparatus of any of claims 85 to 103, further comprising a second transmitting unit, used for:
receiving hybrid automatic repeat request acknowledgement (HARQ-ACK) information, sent from the network device, corresponding to the first information.

105. The apparatus of claim 104, wherein receiving the HARQ-ACK information, sent from the network device, corresponding to the first information, comprises:
before a timer associated with the HARQ-ACK information corresponding to the first information expires, receiving the HARQ-ACK information, sent from the network device, corresponding to the first information.

106. An apparatus for uplink transmission indication, comprising:
a second receiving unit, used for receiving first information sent from a terminal; and
a second determining unit, used for determining, based on the first information, that at least one transmission occasion (TO) unit is used and/or not used.

107. The apparatus of claim 106, wherein the first information comprises one or more of:
first indication information, wherein the first indication information is used to indicate that each TO unit in at least one configured grant (CG) period is used and/or not used;
second indication information, wherein the second indication information is used to indicate that each TO unit from a first time to an end of a first configured grant (CG) period is used and/or not used;
third indication information, wherein the third indication information is used to indicate that a first number of TO units after a first time are used and/or not used;
fourth indication information, wherein the fourth indication information is used to indicate that a time unit in at least one TO unit is used and/or not used;
fifth indication information, wherein the fifth indication information is used to indicate whether all TO units in a specified duration after a first time are not occupied;
sixth indication information, wherein the sixth indication information is used to indicate whether all TO units in a specified duration after a first time are occupied;
seventh indication information, wherein the seventh indication information is used to indicate that a first number of TO units after a first time are not occupied;
eighth indication information, wherein the eighth indication information is used to indicate that a first number of TO units after a first time are occupied;
ninth indication information, wherein the ninth indication information is used to indicate at least one TO unit for data reception of a network device;
an index value, offset value or identifier code of a starting TO unit in at least one TO unit, and/or an index value, offset value or identifier code of an ending TO unit in at least one TO unit; or
a number of TO units.

108. The apparatus of claim 106 or 107, wherein the TO unit comprises at least one type of:
a TO group or a TO or a symbol set in a TO;
a TO group and a part or all of TOs comprised in the TO group;
a TO group and a symbol set in at least one TO in the TO group;
a TO group, a part or all of TOs comprised in the TO group, and a symbol set in at least one TO in the part or all of the TOs; or
a TO and a symbol set in the TO.

109. The apparatus of any of claims 106 to 108, wherein receiving the first information sent from the terminal comprises:
receiving the first information at one or more of following time domain positions:
a starting uplink time unit position of a configured grant (CG) period;
an ending uplink time unit position of a configured grant (CG) period;
a first uplink time unit position of a configured grant (CG) period, wherein the first uplink time unit position is an uplink time unit position within the CG period predefined by a protocol or indicated by a network device, and the uplink time unit position is an uplink slot position or an uplink symbol position;
a starting uplink time unit position of a first duration;
an ending uplink time unit position of a first duration;
a second uplink time unit position of a first duration, wherein the second uplink time unit position is an uplink time unit position within the first duration predefined by a protocol or indicated by a network device; or
a time unit position of all or a part of resources configured for a second signaling, wherein the second signaling carries the first information.

110. The apparatus of claim 107, wherein the specified duration comprises one or more types of:
M times or 1/M of a CG period, wherein M is an integer greater than or equal to 1;
K times or 1/K of a first period, wherein the first period is a period of an uplink control signaling where the first information is located, wherein K is an integer greater than or equal to 1;
L times or 1/L of an interval between TO groups, wherein L is an integer greater than or equal to 1;
a length of an interval configured by a network device;
a first number of TOs; or
a duration from a first time to an end of a first CG period.

111. The apparatus of claim 107 or 110, wherein the first time comprises at least one of:
a transmission time of the first information;
an valid time of the first information; or
a time when the terminal receives hybrid automatic repeat request acknowledgement (HARQ-ACK) information corresponding to the first information fed back from a network device.

112. The apparatus of any of claims 106 to 111, wherein receiving the first information sent from the terminal comprises:
receiving, through a second signaling, the first information sent from the terminal, wherein the second signaling comprises an uplink control signaling and/or a medium access control (MAC) signaling.

113. The apparatus of claim 112, wherein the uplink control signaling comprises one or more of:
an uplink control signaling carried on a configured grant (CG) enhancement dedicated physical uplink control channel (PUCCH); or
an uplink control signaling carried on a configured grant (CG) physical uplink shared channel (PUSCH).

114. The apparatus of claim 112 or 113, further comprising:
a second sending unit, used for sending first resource information to the terminal, wherein the first resource information is used to configure at least one of a time domain resource, a frequency domain resource, or a spatial domain resource of a first signaling,
wherein the first signaling comprises at least one of the uplink control signaling, the MAC signaling, or hybrid automatic repeat request acknowledgement (HARQ-ACK) information corresponding to the first information.

115. The apparatus of claim 114, wherein the first resource information comprises one or more of:
an identifier for indicating that the first information is transmitted through at least one of a physical uplink control channel (PUCCH), a physical uplink shared channel (PUSCH), or an MAC signaling;
resource information of a physical uplink control channel (PUCCH) where the first information is located;
information of a resource where the first information is located;
resource information of an MAC signaling where the first information is located; or
resource information of the HARQ-ACK information corresponding to the first information.

116. The apparatus of claim 115, wherein the resource information of the PUCCH where the first information is located comprises one of more of:
a PUCCH resource set identifier or a PUCCH resource list index;
a starting resource block (RB) of a frequency domain resource of the PUCCH;
at least one of a number of resource blocks (RBs), an RB set, or an RB set index comprised in a frequency domain resource of the PUCCH;
a format of the uplink control signaling;
resource information of a demodulation reference signal (DMRS) associated with the PUCCH;
frequency hopping information of the PUCCH;
a period and/or an offset of the PUCCH;
a slot or a TO where the PUCCH is located;
at least one of a symbol position where the PUCCH is located, a number of symbols occupied by the PUCCH, a starting symbol where the PUCCH is located, or an ending symbol where the PUCCH is located;
power control information of the PUCCH;
multiplexing indication information of the first information and at least one of a hybrid automatic repeat request (HARQ), channel state information (CSI), or a scheduling request (SR);
a payload size of the uplink control signaling, or a size of an information field for the first information in the uplink control signaling;
spatial related information of the PUCCH;
a coding or modulation scheme of the uplink control signaling; or
an offset of at least one of a slot, a TO unit, or a symbol associated with the uplink control signaling.

117. The apparatus of claim 115, wherein the information of the resource where the first information is located comprises one or more of:
a starting resource block (RB) of a frequency domain resource where the first information is located;
at least one of a number of resource blocks (RBs), an RB set, or an RB set index comprised in a frequency domain resource where the first information is located;
resource information of a demodulation reference signal (DMRS) associated with a resource where the first information is located;
frequency hopping information of a resource where the first information is located;
a period and/or an offset of a resource where the first information is located;
a slot or a TO where the first information is located;
at least one of a symbol position where the first information is located, a number of symbols occupied by the first information, a starting symbol where the first information is located, or an ending symbol where the first information is located;
power control information of a resource where the first information is located;
multiplexing indication information of the first information and at least one of a hybrid automatic repeat request (HARQ), channel state information (CSI), or a scheduling request (SR);
a payload size of a resource where the first information is located, or a size of an information field for the first information;
spatial related information of a resource where the first information is located;
a coding or modulation scheme of a resource where the first information is located; or
an offset of at least one of a slot, a TO unit, or a symbol associated with a resource where the first information is located.

118. The apparatus of claim 115, wherein the resource information of the MAC signaling where the first information is located comprises one or more of:
a size of an information field for the first information in the MAC signaling; or
a TO unit corresponding to each bit or each byte in an information field for the first information in the MAC signaling.

119. The apparatus of claim 115, wherein the resource information of the HARQ-ACK information corresponding to the first information comprises one or more of:
a time domain position for sending the HARQ-ACK information corresponding to the first information;
a frequency domain position for sending the HARQ-ACK information corresponding to the first information;
spatial related information of the HARQ-ACK information corresponding to the first information;
a size of an information field for the HARQ-ACK information corresponding to the first information;
a TO unit associated with the HARQ-ACK information corresponding to the first information;
a format of downlink control information (DCI) where the HARQ-ACK information corresponding to the first information is located;
search space set information associated with downlink control information (DCI) where the HARQ-ACK information corresponding to the first information is located; or
a timer associated with the HARQ-ACK information corresponding to the first information.

120. The apparatus of any of claims 106 to 119, further comprising a third transmitting unit, used for:
after a second time, receiving or scheduling, on an unoccupied TO unit indicated by the first information, uplink services of other terminals except the terminal; and/or
before a second time, receiving or scheduling, not on an unoccupied TO unit indicated by the first information, uplink services of other terminals except the terminal;
wherein the second time comprises at least one of:
a transmission time of the first information;
an valid time of the first information;
a time when the terminal receives hybrid automatic repeat request acknowledgement (HARQ-ACK) information corresponding to the first information fed back from a network device; or
a time when a timer used for indicating an valid time of the first information expires.

121. The apparatus of claim 111 or 120, further comprising:
a third determining unit, used for determining the valid time of the first information based on a capability of the terminal.

122. The apparatus of claim 120, wherein the timer used for indicating the valid time of the first information is configured by a higher layer signaling or predefined by a protocol.

123. The apparatus of claim 107, 109 or 110, wherein any CG period comprises N TOs, and the N TOs are used to send at least one transport block (TB), wherein N is an integer greater than or equal to 1.

124. The apparatus of claim 123, wherein the N TOs satisfy one or more of:
the N TOs are N adjacent uplink time unit sets;
the N TOs are N uplink time unit sets with a first interval;
the N TOs are N uplink time unit sets at a first time domain position;
symbol positions occupied by the N TOs in different slots are same;
a number of symbols occupied by the N TOs is same;
symbol positions occupied by the N TOs are independent of each other, and each of the N TOs is prohibited from crossing a slot; or
symbol positions occupied by the N TOs are independent of each other, each of the N TOs is allowed to cross a slot, and a second interval exists between different TOs in a same slot.

125. The apparatus of any of claims 106 to 124, further comprising:
a fourth transmitting unit, used for sending hybrid automatic repeat request acknowledgement (HARQ-ACK) information corresponding to the first information to the terminal.

126. The apparatus of claim 125, wherein sending the HARQ-ACK information corresponding to the first information to the terminal comprises:
before a timer associated with the HARQ-ACK information corresponding to the first information expires, sending the HARQ-ACK information corresponding to the first information to the terminal.

127. A computer readable storage medium storing a computer program, wherein the computer program is used for causing a computer to perform any of the methods of claims 1 to 21, or perform any of the methods of claims 22 to 42.
